# EUROPÄISCHE PATENTSCHRIFT

(11) **EP 3 390 122 B1**
(45) Veröffentlichungstag und Bekanntmachung des Hinweises auf die Patenterteilung: **10.03.2021**
(21) Anmeldenummer: 16815801.2
(22) Anmeldetag: 14.12.2016
(51) Int. Cl.: B60D 1/26, B60D 1/62, B60D 1/64, B60D 1/02

(54) **KUPPLUNGSVORRICHTUNG MIT AUTOMATISIERT VERBINDBAREN VERSORGUNGSSTECKERBAUTEILEN**
HITCHING DEVICE WITH AUTOMATICALLY CONNECTABLE SUPPLY PLUG COMPONENTS
DISPOSITIF D'ACCOUPLEMENT COMPRENANT DES ÉLÉMENTS CONNECTEURS D'ALIMENTATION POUVANT ÊTRE RELIÉS DE MANIÈRE AUTOMATIQUE

(30) Priorität: 18.12.2015 DE 102015226093
(43) Veröffentlichungstag der Anmeldung: 24.10.2018
(73) Patentinhaber: JOST-Werke Deutschland GmbH, 63263 Neu-Isenburg (DE)
(72) Erfinder: ALGÜERA, José Manuel, 63739 Aschaffenburg (DE); GITZEN, Stephan, 64560 Riedstadt (DE); STRÜTT, Achim, 64560 Riedstadt (DE)
(74) Vertreter: Ruttensperger Lachnit Trossin Gomoll
(86) Internationale Anmeldenummer: PCT/EP2016/080906
(87) Internationale Veröffentlichungsnummer: WO 2017/102798

(56) Entgegenhaltungen:
- DE-A1- 10 155 056
- DE-U1-202005 005 676
- US-A- 4 156 551
- US-A1- 2013 277 943

## Beschreibung

Die vorliegende Erfindung betrifft eine Kupplungsvorrichtung zur vorübergehenden Verbindung eines Zugfahrzeugs mit einem Nachlauffahrzeug zur Bildung eines Fahrzeugzuges gemäß dem Oberbegriff von Anspruch 1.

Eine weitere Kupplungsvorrichtung ist aus der EP 0 434 472 A1 bekannt.

Aus dieser Druckschrift ist bereits eine Lösung dafür bekannt, ein Zugfahrzeug und ein Nachlauffahrzeug nicht nur über ihre Kupplungsbauteile mechanisch miteinander zu einem Fahrzeugzug kuppeln, sondern auch möglichst automatisiert beim Kupplungsvorgang eine Steckerverbindung herzustellen, durch welche eine Energieversorgung des Fahrzeugzuges ausgehend von einem Fahrzeug aus Zugfahrzeug und Nachlauffahrzeug möglich ist oder/und durch welche Information in Form von Signalen oder/und Daten zwischen Zugfahrzeug und Nachlauffahrzeug übertragen werden können. Der Begriff "Energieversorgung" ist dabei möglichst allgemein zu verstehen. Er umfasst die Versorgung mit elektrischer, pneumatischer und hydraulischer Energie, also Energieformen, die insbesondere an Nutzfahrzeugen verwendet werden. Wenngleich in einem Fahrzeugzug üblicherweise das Nachlauffahrzeug vom Zugfahrzeug aus mit Energie versorgt wird, soll nicht ausgeschlossen sein, dass auch das Zugfahrzeug vom angekuppelten Nachlauffahrzeug ausgehend mit Energie versorgt werden kann, beispielsweise dann, wenn ein Energiespeicher am Nachlauffahrzeug noch mit Energievorrat wenigstens teilweise gefüllt ist, wohingegen - aus welchen Gründen auch immer - ein Vorrat der betreffenden Energieform am Zugfahrzeug erschöpft ist. Dies kann beispielsweise dann eintreten, wenn eine Fahrzeugbatterie am Zugfahrzeug defekt oder vollständig entleert ist, während am Nachlauffahrzeug eine wenigstens teilweise geladene elektrische Batterie vorhanden ist.

Die aus der EP 0 434 472 A1 bekannte Kupplungsvorrichtung umfasst ein zugfahrzeugseitiges Ausrichtbauteil in Form eines Vierkant-Dorns, welcher in Dorn-Längsrichtung, durch eine mit dem Dorn verbundene Kolben-Zylinder-Anordnung angetrieben, ausfahrbar und einziehbar ist. Die Dorn-Längsrichtung verläuft parallel zur Zugfahrzeug-Längsrichtung, wobei die Dornspitze zum Nachlauffahrzeug hinweist. Mit dem Dorn als zugfahrzeugseitigem Ausrichtbauteil ist das zugfahrzeugseitige Steckerbauteil starr verbunden. Es umfasst eine sich orthogonal zur Dorn-Längsrichtung erstreckende Platte, welche mit dem Dorn durch Schweißen fest und unlösbar verbunden ist. In der Platte sind Steckerformationen fest aufgenommen.

Das nachlauffahrzeugseitige Ausrichtbauteil der bekannten Kupplungsvorrichtung umfasst eine zur Dorn-Mantelfläche des zugfahrzeugseitigen Ausrichtbauteils im Wesentlichen komplementäre Hülse mit einer dem Zufahrzeug zugewandten Einführhilfe in Form eines Einführtrichters. Mit dem nachlauffahrzeugseitigen Ausrichtbauteil ist das nachlauffahrzeugseitige Steckerbauteil starr verbunden. Dieses umfasst wiederum eine Platte, welche mit der Hülse starr verschweißt ist und deren die Hülse unmittelbar umgebender Plattenbereich sich orthogonal zur Hülsen-Längsrichtung erstreckt. In dieser nachlauffahrzeugseitigen Platte sind nachlauffahrzeugseitige Steckerformationen fest montiert, und zwar an Stellen, welche mit den Steckerformationen am zugfahrzeugseitigen Steckerbauteil dann korrespondieren, wenn der Dorn durch eine Ausfahrbewegung ausreichend tief in die Hülse eingeführt ist.

Das nachlauffahrzeugseitige Steckerbauteil ist starr mit dem Nachlauffahrzeug bzw. mit einer Deichsel des Nachlauffahrzeugs verbunden. Deshalb ist auch das die Hülse umfassende nachlauffahrzeugseitige Ausrichtbauteil starr mit der Deichsel des Nachlauffahrzeugs verbunden. Das zugfahrzeugseitige Steckerbauteil ist zwar starr mit dem zugfahrzeugseitigen Ausrichtbauteil verbunden, dieses ist jedoch durch ein Kugelgelenk mit dem Zugfahrzeug bzw. mit dessen Kupplungsbauteil verbunden und zwar derart, dass die verlängert gedachte Längsmittellinie eines Kupplungsbolzens des zugfahrzeugseitigen Kupplungsbauteils den Kugelmittelpunkt des genannten Kugelgelenks enthält.

Bei der bekannten Kupplungsvorrichtung wird am Ende einer erfolgreichen Ausrichtbewegung des zugfahrzeugseitigen Ausrichtbauteils relativ zum nachlauffahrzeugseitigen Ausrichtbauteil stets die Steckerverbindung hergestellt. Dies erfordert einen relativ langen Hub des Dorns, da der Hub zunächst die Steckerbauteile von Zug- und Nachlauffahrzeug relativ zueinander ausreichend ausrichten muss und, nachdem diese ausreichende Ausrichtung hergestellt ist, für eine Verwirklichung der Steckerverbindung sorgen muss. Der dadurch notwendige lange Ausricht- und Verbindungshub des Dorns erfordert zum einen bereits eine gewisse Vorausrichtung der die Ausrichtbauteile tragenden Kupplungsbauteile beim Herstellen der mechanischen Kupplungsverbindung zur Bildung des Fahrzeugzuges und erfordert zum anderen wegen des großen Hubbetrags einen erheblichen Bewegungsfreiraum, in welchem der Hub kollisionsfrei ablaufen kann.

Bei modernen Zugfahrzeugen ist dieser für den langen Hub des Ausrichtbauteils der bekannten Kupplungsvorrichtung benötigte Bewegungsfreiraum nicht immer gegeben. Nutzfahrzeuge, die vorrangig die Fahrzeuge bilden, an welchen die hier diskutierte Kupplungsvorrichtung angewendet wird, stellen trotz ihrer Herkunft von Fahrzeugherstellern, die Basis-Nutzfahrzeuge in Serienfertigung herstellen, bis zu ihrer endgültigen bestimmungsgemäßen Einsatzbereitschaft beim Kunden individualisierte Einzelanfertigungen dar. Je nach Einsatzzweck wird das seriengefertigte Basis-Nutzfahrzeug für den einzelnen Kunden individualisiert, beispielsweise indem der Bauraum unterhalb einer Ladefläche zur Aufnahme von Funktionsbaugruppen genutzt wird, wie etwa pneumatische Druckspeicher, Zusatztanks, Messuhren und Förderpumpen, wie sie beispielsweise bei Tankfahrzeugen eingesetzt werden, Betriebsmittelvorratsspeicher und dergleichen mehr. Daher wird der für die Kupplungsvorrichtung und ihre zugehörigen Bauteile verfügbare Bewegungsfreiraum mit zunehmender Komplexität der Fahrzeuge immer kleiner.

Eine weitere Kupplungsvorrichtung ist aus der DE 44 12 111 A1 bekannt. Bei dieser Kupplungsvorrichtung ist das zugfahrzeugseitige Steckerbauteil mit seiner Steckerformation starr mit dem zugfahrzeugseitigen Kupplungsbauteil verbunden.

Das nachlauffahrzeugseitige Steckerbauteil ist dagegen relativ zum nachlauffahrzeugseitigen Kupplungsbauteil, welches auch bei dieser bekannten Kupplungsvorrichtung eine Deichsel umfasst, um zwei zueinander parallele und zur Deichsellängsrichtung orthogonale Schwenkachsen schwenkbar. Bei Herstellen der Kupplungsverbindung zwischen zugfahrzeugseitigem und nachlauffahrzeugseitigem Kupplungsbauteil werden das zugfahrzeugseitige Steckerbauteil und das nachlauffahrzeugseitige Steckerbauteil in eine Gegenüberstellung gebracht, in welcher ein am zugfahrzeugseitigen Kupplungsbauteil angeordneter Kulissenantrieb in Wirkverbindung mit einem am nachlauffahrzeugseitigen Steckerbauteil vorgesehenen Nocken gelangt. Die Kulisse des Kulissenantriebs ist dabei derart geformt, dass mit fortschreitender Bewegung des Kulissenantriebs die nachlauffahrzeugseitige Steckerformation auf die zugfahrzeugseitige Steckerformation aufgeschoben oder in diese eingeschoben wird und dadurch eine Steckerverbindung zwischen zugfahrzeugseitigem und nachlauffahrzeugseitigem Steckerbauteil hergestellt wird. Das die Kulisse tragende Bauteil des Kulissenantriebs sichert bei hergestellter Steckerverbindung durch Hintergreifen des Nockens des nachlauffahrzeugseitigen Steckerbauteils die Steckerverbindung gegen eine lösende Relativbewegung des nachlauffahrzeugseitigen Steckerbauteils weg vom zugfahrzeugseitigen Steckerbauteil.

Das zugfahrzeugseitige Kupplungsbauteil, welches wie das zugfahrzeugseitige Kupplungsbauteil der gattungsgemäßen Kupplungsvorrichtung als Kupplungsglied einen längs seiner Längserstreckungsrichtung beweglichen Kupplungsbolzen aufweist, ist mit dem Kulissenantrieb gekoppelt. Bei einer Verlagerung des Kupplungsbolzens in eine Kupplungsstellung, in der der Kupplungsbolzen eine Zugöse des Nachlauffahrzeugs durchsetzt, wird der Kulissenantrieb in dem oben beschriebenen Sinne zur Herstellung einer Steckerverbindung angetrieben. Ein weiterer Antrieb am zugfahrzeugseitigen Kupplungsbauteil ermöglicht eine Lösebewegung des die Kulisse tragenden Bauteils, sodass der Nocken des nachlauffahrzeugseitigen Steckerbauteils nicht länger hintergriffen wird. Das die Kulisse tragende Bauteil des Kulissenantriebs ist dabei derart bidirektional mit dem Kupplungsbolzen gekoppelt, dass eine Lösebewegung des die Kulisse tragenden Bauteils zur Freigabe des Nockens, um eine Relativbewegung des nachlauffahrzeugseitigen Steckerbauteils weg vom zugfahrzeugseitigen Steckerbauteil zu gestatten, eine Lüftung des Kupplungsbolzens bewirkt, sodass mit der Entriegelung des nachlauffahrzeugseitigen Steckerbauteils auch die mechanische Kupplungsverbindung zwischen zugfahrzeugseitigem und nachlauffahrzeugseitigem Kupplungsbauteil aufgehoben wird. Das Zugfahrzeug kann sich dann vom Nachlauffahrzeug entfernen, wobei die Steckerverbindung spätestens mit diesem Entfernen getrennt wird.

Im Gegensatz zu der aus der DE 44 12 111 A1 bekannten Kupplungsvorrichtung ist die Steckerverbindung der aus der EP 0 434 472 A1 bekannten Kupplungsvorrichtung unabhängig von einer Bewegung des Kupplungsbolzens herstellbar und trennbar.

Eine den beiden letztgenannten Kupplungsvorrichtung ähnliche weitere Kupplungsvorrichtung mit Steckerbauteilen zur Herstellung einer Versorgungsverbindung ist aus der US 2013/0277943 A1 bekannt.

Im Gegensatz zu den drei letztgenannten Kupplungsvorrichtung weist die aus der gattungsgemäßen US 4,156,551 bekannte Kupplungsvorrichtung Steckerbauteile auf, die relativ zu dem es tragenden Ausrichtbauteil zwischen einer zurückgezogenen Verbindungsbereitschaftsstellung und einer vorgeschobenen Verbindungsaktivierungsstellung verlagerbar sind.

Die DE 101 55 056 A1 offenbart eine Sattelkupplung mit Steckerbauteilen, die eine automatisierte Herstellung einer Versorgungsverbindung zwischen Zugfahrzeug und Sattelauflieger gestatten.

Aus der DE 20 2005 005 676 U1 ist eine Kupplungsvorrichtung bekannt, welche das mechanische Ankuppeln einer Deichsel mit Zugöse an einen Kupplungskörper mit Fangmaul und Kupplungsbolzen gestattet. Über einen zugfahrzeugseitigen schwenkbaren Verbindungsarm und ein deichselseitiges Kontaktelement ist bei hergestellter mechanischer Zugverbindung eine automatisierte Herstellung einer Verbindung zur Übertragung elektrischer oder/und pneumatischer oder/und hydraulische Energie zwischen Zugfahrzeug und Nachlauffahrzeug möglich. Der Verbindungarm weist zur Erhöhung der Verbindungssicherheit der Steckerbauteile an Verbindungsrahmen und Kontaktelement eine starr mit dem Steckerbauteil verbundene Einführschräge auf.

Aufgabe der vorliegenden Erfindung ist es, eine gattungsgemäße Kupplungsvorrichtung derart weiterzubilden, dass während oder nach der Herstellung der Kupplungsverbindung durch die Kupplungsbauteile von Zugfahrzeug und Nachlauffahrzeug eine automatisierte Herstellung einer Steckerverbindung zur Realisierung einer Übertragung von Energie oder/und Information zwischen Zugfahrzeug und Nachlauffahrzeug mit hoher Verbindungssicherheit auf kleinem Bauraum und unter Bean spruchung möglichst geringer Bewegungsfreiräume für bewegliche Bauteile der Kupplungsvorrichtung ermöglicht wird.

Diese Aufgabe wird erfindungsgemäß gelöst durch eine Kupplungsvorrichtung mit allen Merkmalen des Anspruchs 1.

Dadurch, dass wenigstens ein Steckerbauteil aus zug- und nachlauffahrzeugseitigem Steckerbauteil relativ zu dem es tragenden Ausrichtbauteil verlagerbar ist, kann die steckerverbindungsvorbereitende Ausrichtung der Steckerbauteile erfolgen, ohne dass am Ende des Ausrichtvorgangs bereits durch den Ausrichtvorgang selbst die Steckerverbindung der Steckerbauteile miteinander hergestellt wird. Die steckerverbindungsvorbereitende Ausrichtung kann bereits beendet sein, bevor sich die Steckerbauteile berühren, also insbesondere wenn das zug- und das nachlauffahrzeugseitige Steckerbauteil noch mit Abstand voneinander angeordnet sind. Folglich kann die Ausrichtbewegung vom Bewegungsumfang kurz ausfallen.

Mit der Kürze der Ausrichtbewegung von zugfahrzeugseitigem und nachlauffahrzeugseitigem Ausrichtbauteil relativ zueinander kann überdies selbst dann eine korrekte Steckerverbindung zwischen zugfahrzeugseitigem und nachlauffahrzeugseitigem Steckerbauteil hergestellt werden, wenn die die Ausrichtbauteile tragenden Kupplungsbauteile beim Herstellen der mechanischen Kupplungsverbindung anfänglich eine verhältnismäßig große Fehlstellung zueinander aufweisen, etwa wenn eine Längsmittelachse des nachlauffahrzeugseitigen Kupplungsbauteils, aus einer zum Aufstandsuntergrund des Zugfahrzeugs orthogonalen Fahrzeug-Längsmittelebene des Zugfahrzeugs um eine ein Kupplungsglied des zugfahrzeugseitigen Kupplungsbauteils, dies ist erfindungsgemäß ein Kupplungsbolzen, durchsetzende Parallele zur Zugfahrzeug-Gierachse heraus verschwenkt ist oder/und wenn eine den größten Umfang des nachlauffahrzeugseitigen Kupplungsglieds, dies ist erfindungsgemäß eine Zugöse, enthaltende Äquatorebene desselben aus einer Orientierung parallel zum Aufstandsuntergrund des Zugfahrzeugs heraus um eine Parallele zur Nickachse des Zugfahrzeugs verschwenkt ist. Eine theoretisch-ideale Ausgangsorientierung von zug- und nachlauffahrzeugseitigem Kupplungsbauteil bei Einleitung eines Kupplungsvorgangs zur Herstellung der Kupplungsverbindung, auf die nachfolgend zu Erläuterungszwecken Bezug genommen wird, ist daher eine Orientierung, bei welcher die Längsmittelachse des nachlauffahrzeugseitigen Kupplungsbauteils in einer zum Aufstandsuntergrund des Zugfahrzeugs orthogonalen Fahrzeug-Längsmittelebene des Zugfahrzeugs liegt und bei welcher die Äquatorebene des nachlauffahrzeugseitigen Kupplungsglieds parallel zum Aufstandsuntergrund des Zugfahrzeug orientiert ist.

Mit der vorliegend vorgeschlagenen Kupplungsvorrichtung können zunächst durch Relativbewegung wenigstens eines Ausrichtbauteils relativ zu dem es tragenden Kupplungsbauteil die Steckerbauteile der beiden Fahrzeuge zueinander ausgerichtet werden und erst nachdem diese Ausrichtung erfolgt ist, kann die Herstellung der Steckerverbindung durch weitere Relativbewegung wenigstens eines Steckerbauteils relativ zu dem es tragenden Ausrichtbauteil erfolgen.

Dabei soll in der vorliegenden Anmeldung grundsätzlich ein Bauteil A als ein Bauteil B tragend angesehen werden, wenn Bauteil A mit Bauteil B derart konstruktiv verbunden ist, dass die Bewegung des Bauteils B eine Summe aus der Bewegung des Bauteils A und der Relativbewegung des Bauteils B relativ zum Bauteil A ist.

Für eine erfolgreiche steckerverbindungsvorbereitende Ausrichtung der Steckerbauteile zueinander kann es grundsätzlich ausreichen, wenn eines der beiden Ausrichtbauteile aus zug- und nachlauffahrzeugseitigem Ausrichtbauteil relativ zu dem es tragenden Kupplungsbauteil beweglich an diesem angeordnet ist, während das jeweils andere Ausrichtbauteil starr mit dem es tragenden Kupplungsbauteil verbunden ist. Eine erfolgreiche steckerverbindungsvorbereitende Ausrichtung der beiden Steckerbauteile relativ zueinander kann jedoch mit verhältnismäßig kurzen Ausricht-Bewegungswegen selbst bei größeren Abweichungen der Relativstellung der Kupplungsbauteile von der theoretisch-idealen Ausgangsorientierung beim Herstellen der Kupplungsverbindung zueinander erreicht werden, wenn jedes der beiden Ausrichtbauteile relativ zu dem es tragenden Kupplungsbauteil beweglich an diesem angeordnet ist.

Geht man - andersherum gedacht - von einem vorgegebenen gewünschten Gesamtbewegungsraum der Ausrichtbauteile aus, kann der Einzelbewegungsraum eines Ausrichtbauteils relativ zu dem es tragenden Kupplungsbauteil verringert werden, wenn jedes Ausrichtbauteil relativ zu dem es jeweils tragenden Kupplungsbauteil beweglich angeordnet ist. Je kleiner der Relativbewegungsraum eines Ausrichtbauteils relativ zu dem es tragenden Kupplungsbauteil ausgeführt zu werden braucht, desto stabiler und robuster kann die Gesamtkonstruktion aus Ausrichtbauteil und Kupplungsbauteil sein.

Entsprechendes gilt für die Relativbeweglichkeit der Steckerbauteile relativ zu den sie tragenden Ausrichtbauteilen. Auch hier kann es grundsätzlich zur Erzielung der mit der vorliegenden Erfindung verbundenen Vorteile ausreichen, wenn genau ein Steckerbauteil aus zug- und nachlauffahrzeugseitigem Steckerbauteil relativ zu dem es tragenden Ausrichtbauteil verlagerbar ist. Allerdings ist es vorteilhaft, wenn jedes der beiden Steckerbauteile relativ zu dem es tragenden Ausrichtbauteil verlagerbar an diesem vorgesehen ist. So können die Relativbewegungswege des einzelnen Steckerbauteils relativ zu dem es tragenden Ausrichtbauteil kurz gehalten werden und dennoch kann ein insgesamt großer Relativbewegungsraum geschaffen werden, wenn beide Steckerbauteile relativ zueinander beweglich sind.

Von der vorliegenden Erfindung soll jedoch ausdrücklich auch der Fall umfasst sein, dass dann, wenn nur genau ein Ausrichtbauteil relativ zu dem es tragenden Kupplungsbauteil relativ beweglich ist und weiter dann, wenn nur genau ein Steckerbauteil relativ zu dem es tragenden Ausrichtbauteil verlagerbar ist, das Ausrichtbauteil eines Fahrzeugs aus Zug- und Nachlauffahrzeug relativ zu dem es tragenden Kupplungsbauteil beweglich ist und das Steckerbauteil des jeweils anderen Fahrzeugs relativ zu dem es tragenden Ausrichtbauteil verlagerbar ist.

Es kann gemäß einem Aspekt der vorliegenden Erfindung daran gedacht sein, durch eine Relativbewegung des zug- oder/und des nachlauffahrzeugseitigen Ausrichtbauteils relativ zu dem es tragenden Kupplungsbauteil eine steckerverbindungsvorbereitende Ausrichtung der Steckerbauteile derart zu erreichen, dass die Steckerverbindung nach der steckerverbindungsvorbereitenden Ausrichtung der Steckerbauteile aufgrund der Relativbewegung des zug- oder/und des nachlauffahrzeugseitigen Steckerbauteils relativ zu dem es tragenden Ausrichtbauteil unmittelbar herstellbar ist, etwa durch einfache Relativbewegung des zug- oder/und des nachlauffahrzeugseitigen Steckerbauteils mit nur einem Bewegungsfreiheitsgrad. Das zug- oder/und das nachlauffahrzeugseitige Steckerbauteil kann hierzu relativ zu dem es tragenden Ausrichtbauteil translatorisch längs einer vorbestimmten, vorzugsweise geradlinigen, Bewegungsbahn oder rotatorisch um eine vorbestimmte Schwenkachse verlagerbar sein.

Bei hergestellter Steckerverbindung kontaktieren sich unmittelbar die Steckerformationen von zug- und nachlauffahrzeugseitigem Steckerbauteil. Unmittelbar über die Steckerformationen wird bei hergestellter Steckerverbindung Energie oder/und Information zwischen Zug- und Nachlauffahrzeug übertragen. Eine Steckerformation kann ein männlicher Kontaktstecker und eine dazu passende weitere Steckerformation kann eine weibliche Kontaktbuchse sein.

Die wenigstens eine Steckerformation des zug- oder/und des nachlauffahrzeugseitigen Steckerbauteils kann starr an diesem vorgesehen sein. Die wenigstens eine Steckerformation des zug- oder/und des nachlauffahrzeugseitigen Steckerbauteils kann jedoch auch relativ zu einem Steckergestell des Steckerbauteils beweglich an diesem vorgesehen sein, etwa um zur Erhöhung der Herstellsicherheit der Steckerverbindung eine Feinausrichtung von zug- und nachlauffahrzeugseitigen Steckerformationen zu ermöglichen. Hierzu kann die wenigstens eine zug- oder/und nachlauffahrzeugseitige Steckerformation zur gemeinsamen Bewegung mit einem Zentriermittel gekoppelt sein. Die zueinander passenden Zentriermittel der zug- oder/und der nachlauffahrzeugseitigen Steckerformation können dann während der die Herstellung der Steckerverbindung bewirkenden Relativbewegung der Steckerbauteile die genannte Feinjustierung bewirken. Die von den Ausrichtbauteilen zuvor bewirkte steckerverbindungsvorbereitende Ausrichtung kann dann eine Grobausrichtung sein. Der maximal mögliche Relativbewegungsweg der zug- oder/und der nachlauffahrzeugseitigen Steckerformation relativ zu ihrem jeweiligen übrigen Steckerbauteil ist daher bevorzugt kürzer als der maximal mögliche Relativbewegungsweg des zug- oder/und des nachlauffahrzeugseitigen Ausrichtbauteils relativ zu dem es tragenden Kupplungsbauteil. Diese Bedingung gilt bevorzugt für die Relativbewegungswege in wenigstens zwei, besonders bevorzugt in drei zueinander orthogonalen Raumrichtungen.

Außerdem ist es aufgrund der Relativbeweglichkeit wenigstens eines Steckerbauteils relativ zu dem es tragenden Ausrichtbauteil auch grundsätzlich möglich, das wenigstens eine Steckerbauteil relativ zu dem es tragenden Ausrichtbauteil dann, wenn es für eine Steckerverbindung nicht benötigt wird, in eine geschützte Ruheposition zu bewegen, in der es gegenüber äußeren Einflüssen abgeschirmt ist.

So ist erfindungsgemäß ein Steckerbauteil aus zug- und nachlauffahrzeugseitigem Steckerbauteil relativ zu dem es tragenden Ausrichtbauteil zwischen einer zurückgezogenen Verbindungsbereitschaftsstellung und einer vorgeschobenen Verbindungsaktivierungsstellung verlagerbar. In der zurückgezogenen Verbindungsbereitschaftsstellung kann es in ein Schutzgehäuse zurückgezogen sein, in der es von außen weniger gut erreichbar ist als in der Verbindungsaktivierungsstellung. Üblicherweise ist die Verbindungsaktivierungsstellung eine Stellung, in der bei betriebsgemäßem Vorhandensein des jeweils anderen Steckerbauteils die Steckerverbindung mit diesem hergestellt ist.

Dabei kann die Bewegung zwischen Verbindungsbereitschaftsstellung und Verbindungsaktivierungsstellung grundsätzlich eine beliebige sein, beispielsweise eine Schwenkbewegung. Erforderlichenfalls kann die Bewegung des Steckerbauteils zwischen Verbindungsbereitschaftsstellung und Verbindungsaktivierungsstellung auch eine kombinierte Bewegung aus Schwenkbewegung und translatorischer Bewegung sein, etwa wenn die räumlichen Verhältnisse im Bereich rund um das betreffende Steckerbauteil eine derartige Bewegung erfordern.

Eine besonders zuverlässige Steckerverbindung mit einer möglichst großen Kontaktfläche der beiden beteiligten Steckerformationen des Zugfahrzeugs und des Nachlauffahrzeugs ist dann herstellbar, wenn ein Kontaktvorsprung einer Steckerformation in eine entsprechende Kontaktbuchse der jeweils anderen Steckerformation längs einer Steckerverbindungsachse einführbar ist. Aus diesem Grunde ist die Bewegung des Steckerbauteils zwischen Verbindungsbereitschaftsstellung und Verbindungsaktivierungsstellung wenigstens in einem die Verbindungsaktivierungsstellung enthaltenden Bewegungsendbereich eine rein translatorische Bewegung, vorzugsweise ist sie aus Gründen möglichst einfacher Führung längs des gesamten Bewegungswegs eine rein translatorische Bewegung.

Für die Beschreibung der Kupplungsvorrichtung der vorliegenden Erfindung soll auf einen Bezugszustand zurückgegriffen werden, bei welchem Zugfahrzeug und Nachlauffahrzeug auf einem gemeinsamen ebenen horizontalen Untergrund stehen und in Fahrzeuglängsrichtung aufeinander folgen. Die Fahrzeuglängsmittelebenen beider Fahrzeuge aus Zugfahrzeug und Nachlauffahrzeug sind komplanar, sodass auch die Fahrzeuglängsrichtungen beider Fahrzeuge übereinstimmen. Eine Fahrzeuglängsmittelebene im Sinne der vorliegenden Anmeldung ist dabei eine in Fahrzeuglängsrichtung verlaufende und zum Untergrund, auf dem das Fahrzeug steht, (Aufstandsuntergrund) orthogonale Ebene. Im Zweifel verläuft die Fahrzeuglängsmittelebene derart durch das Fahrzeug, dass die Räder einer Achse des Fahrzeugs zu ihr betragsmäßig gleichen Abstand aufweisen. Die oben genannte theoretisch-ideale Ausgangsorientierung vor Herstellung der Kupplungsverbindung kann in dem Bezugszustand vorliegen und widerspricht diesem daher nicht.

Sofern in der vorliegenden Anmeldung nichts Abweichendes ausgesagt ist, soll dieser Bezugszustand der Beschreibung der Kupplungsvorrichtung zu Grunde gelegt werden.

In diesem Bezugszustand sind das zug- und das nachlauffahrzeugseitige Kupplungsbauteil zur Herstellung der Kupplungsverbindung längs einer Kupplungstrajektorie aneinander annäherbar und zur Trennung der Kupplungsverbindung längs der Kupplungstrajektorie voneinander entfernbar. Die Kupplungstrajektorie verläuft im Bezugszustand daher parallel zum gemeinsamen Aufstandsuntergrund und parallel zu den komplanaren Fahrzeuglängsmittelebenen.

Ein Zugfahrzeug im Sinne der vorliegenden Anmeldung ist bevorzugt eine motorisch angetriebene selbstfahrende Zugmaschine. Dies muss jedoch nicht so sein. Zugfahrzeug im Sinne der vorliegenden Anmeldung kann jedes Fahrzeug sein, an das ein nachlaufendes Fahrzeug angekuppelt ist. Daher kann in mehrgliedrigen Fahrzeugzügen ein und dasselbe Fahrzeug im Verhältnis zu seinem ihm im Fahrzeugzug vorauseilenden Fahrzeug, an das es angekuppelt ist, Nachlauffahrzeug sein und kann im Verhältnis zu einem ihm nachlaufenden Fahrzeug, das an es angekuppelt ist, Zugfahrzeug sein. Dies trifft beispielsweise auf Fahrzeugzüge zu mit einem Sattelauflieger, der an ein selbstfahrendes Zugfahrzeug angekuppelt ist und an den ein Dolly angekuppelt ist, der selbst wiederum einen Sattelauflieger ankuppeln kann. Dort kann die erfindungsgemäße Kupplungsvorrichtung insbesondere zwischen dem erstgenannten Sattelauflieger und dem Dolly angeordnet sein. Dies trifft beispielsweise ebenso auf Fahrzeugzüge zu, bei welchen an ein selbstfahrendes Zugfahrzeug ein Zentralachsanhänger und an diesen ein Starrdeichselanhänger angekuppelt ist. Dort kann die erfindungsgemäße Kupplungsvorrichtung zwischen dem Zugfahrzeug und dem Zentralachsanhänger oder/und zwischen dem Zentralachsanhänger und dem Stardeichselanhänger angeordnet sein.

Gemäß der vorliegenden Erfindung ist das zwischen der Verbindungsbereitschaftsstellung und der Verbindungsaktivierungsstellung verlagerbare Steckerbauteil zwischen diesen Stellungen längs einer Verbindungstrajektorie verlagerbar, welche von der Kupplungstrajektorie verschieden ist. Dies ermöglicht eine hervorragende Ausnutzung von nur geringen Bewegungsfreiräumen zur Herstellung der Steckerverbindung. Im Gegensatz zum Stand der Technik kann nämlich die zur Herstellung der Kupplungsverbindung ausgeführte Annäherungsbewegung der Kupplungsbauteile längs der Kupplungstrajektorie genutzt werden, um die von den jeweiligen Kupplungsbauteilen getragenen Ausrichtbauteile und mit diesen die sie jeweils wiederum tragenden Steckerbauteile zur Vorbereitung der Steckerverbindung auszurichten. Obwohl somit die Ausrichtbauteile der beiden Fahrzeuge aus Zugfahrzeug und Nachlauffahrzeug zur steckerverbindungsvorbereitenden Ausrichtung längs einer Parallelen zur Kupplungstrajektorie aneinander angenähert werden, kann das Steckerbauteil dann nach erfolgter Ausrichtung längs einer unabhängig von der Kupplungstrajektorie innerhalb vorgegebener Randbedingungen frei wählbaren Verbindungstrajektorie zwischen der Verbindungsbereitschaftsstellung und der Verbindungsaktivierungsstellung verlagert werden. Eine derartige Randbedingung ist beispielsweise die Erreichbarkeit des jeweils anderen Steckerbauteils, welches stets mit einer Komponente in Fahrzeuglängsrichtung von dem Steckerbauteil entfernt gelegen sein wird.

Wie bereits oben angedeutet, kann die Verbindungstrajektorie eine Schwenkbewegungstrajektorie um eine Schwenkachse sein. Bevorzugt ist die Verbindungstrajektorie jedoch eine translatorische, besonders bevorzugt geradlinige translatorische Trajektorie, ebenso wie die Kupplungstrajektorie im oben beschriebenen Bezugszustand.

Wie bereits erläutert, kann der Unterbau eines Nutzfahrzeugs unterhalb seines Nutzaufbaus mit zahlreichen Funktionsbaugruppen versehen sein, auch in der Umgebung eines Kupplungsbauteils. Um einerseits die Möglichkeit zu haben, das Steckerbauteil in seiner Verbindungsbereitschaftsstellung in ausreichender Entfernung von mechanisch unter Umständen hoch belasteten Teilen des Kupplungsbauteils, wie etwa einem gelegentlich beim Ankuppeln mit einer Zugöse des Nachlauffahrzeugs kollidierenden Fangmaul, anordnen zu können und dennoch das Steckerbauteil zur Verbindungsaktivierungsstellung hin ausreichend an das jeweils andere Kupplungsbauteil und dessen Steckerbauteil annähern zu können, ist es vorteilhaft, wenn die Verbindungstrajektorie und die Kupplungstrajektorie einen Winkel miteinander einschließen. Bevorzugt liegen die beiden Trajektorien in einer gemeinsamen Ebene, wenngleich nicht ausgeschlossen sein soll, dass die Trajektorien auch windschief orientiert sein können. Gerade die Betrachtung des oben bezeichneten Bezugszustands macht jedoch deutlich, dass die Annäherung des einen Steckerbauteils an das jeweils andere dann besonders effizient erfolgen kann, wenn die Verbindungstrajektorie mit der Kupplungstrajektorie in einer gemeinsamen Ebene gelegen ist. Um eine sichere Kupplungsverbindung und mit ihr eine Steckerverbindung selbst dann erreichen zu können, wenn zu Beginn der Annäherung von Zug- und Nachlauffahrzeug aneinander die Relativstellung der Kupplungsbauteile von einer theoretisch-idealen Ausgangsorientierung abweicht, ist die gemeinsame Ebene von Verbindungstrajektorie und Kupplungstrajektorie bevorzugt die Längsmittelebene des das Steckerbauteil tragenden Fahrzeugs. Derartige Abweichungen von der theoretisch-idealen Ausgangsorientierung sind beiderseits der Fahrzeuglängsmittelebene des das Steckerbauteil tragenden Fahrzeugs gleichermaßen zu erwarten. In diesem Falle ist es beispielsweise unerheblich, ob eine Deichsel als ein nachlauffahrzeugseitiges Kupplungsbauteil um eine das zugfahrzeugseitige Kupplungsbauteil durchsetzende Parallele zur Gierachse des Zugfahrzeugs zur einen oder zur anderen Seite der Fahrzeuglängsmittelebene hin verschwenkt ist. Es existiert dann keine Vorzugsseite der Fahrzeuge, auf welcher eine größere Fehlstellung der Kupplungsbauteile zueinander durch die Ausrichtbauteile korrigiert werden kann als zur jeweils entgegengesetzten Seite hin.

Grundsätzlich kann das oben diskutierte Steckerbauteil das zugfahrzeugseitige oder/und das nachlauffahrzeugseitige Steckerbauteil sein. Bevorzugt ist das Steckerbauteil jedoch das zugfahrzeugseitige Steckerbauteil, da am Zugfahrzeug, insbesondere dann, wenn es ein Nutzfahrzeug ist, der Bauraum um das zugfahrzeugseitige Kupplungsbauteil stärker durch Anordnung von Funktionsbaugruppen eingeschränkt ist als an einem in der Regel vom Nachlauffahrzeug auskragenden nachlauffahrzeugseitigen Kupplungsbauteil.

Die Möglichkeit, das Steckerbauteil längs einer von der Kupplungstrajektorie verschiedenen Verbindungstrajektorie zwischen seinen Stellungen: Verbindungsbereitschaftsstellung und Verbindungsaktivierungsstellung, zu verlagern, ermöglicht eine vorteilhafte Weiterbildung der vorliegenden Erfindung, gemäß welcher das Steckerbauteil in einem Bereich über dem zugfahrzeugseitigen Kupplungsbauteil angeordnet ist, wo üblicherweise besonders wenig Bauraum und Bewegungsfreiraum zur Verfügung steht. Das zugfahrzeugseitige Steckerbauteil kann dann beispielsweise zwischen zugfahrzeugseitigem Kupplungsbauteil und darüber liegendem Nutzaufbau, etwa einer Ladepritsche, angeordnet sein.

Das zugfahrzeugseitige Steckerbauteil kann beispielsweise selbst dann in einem Bereich über dem zugfahrzeugseitigen Kupplungsbauteil angeordnet sein, wenn in Fahrzeuglängsrichtung hinter dem Steckerbauteil ein Barriereabschnitt liegt, wie etwa ein unterer Endabschnitt einer um eine horizontale Achse schwenkbaren Ladebordwand oder ein Unterfahrschutz. Dann, wenn die Verbindungstrajektorie parallel zur Kupplungstrajektorie verlaufen würde, wäre entweder eine Kollision des zugfahrzeugseitigen Steckerbauteils bei Verlagerung in die Verbindungsaktivierungsstellung mit dem jeweiligen Barriereabschnitt zu befürchten, oder wäre eine Kollision des nachlauffahrzeugseitigen Steckerbauteils mit dem Barriereabschnitt des Zugfahrzeugs beim Ankuppeln des Nachlauffahrzeugs an das Zugfahrzeug zu befürchten. Durch die Verschiedenheit von Kupplungstrajektorie und Verbindungstrajektorie kann das zugfahrzeugseitige Steckerbauteil jedoch von der Verbindungsbereitschaftsstellung in die Verbindungsaktivierungsstellung mit einer Bewegungskomponente in Fahrzeuglängsrichtung zu dem hinter dem Zugfahrzeug gelegenen Nutzfahrzeug hin und mit einer weiteren Bewegungskomponente zum Untergrund des Zugfahrzeugs hin bewegt werden. So kann das zugfahrzeugseitige Steckerbauteil entweder unter dem in Fahrzeuglängsrichtung hinter ihm liegenden Barriereabschnitt hindurch bewegt werden. Ebenso kann das nachlaufahrzeugseitiges Steckerbauteil beim Ankuppeln des Nachlauffahrzeugs an das Zugfahrzeug unter dem betreffenden Barriereabschnitt hindurch bewegt werden kann, der zur Winterzeit erschwerend mit Eis beschlagen sein kann, mit dem eine Kollision ebenfalls vermieden werden sollte.

Nach Abschluss der steckerverbindungsvorbereitenden Ausrichtung durch die Ausrichtbauteile, aber noch vor Herstellung der Steckerverbindung, können das zug- und das nachlauffahrzeugseitige Steckerbauteil unterschiedlich weit vom ebenen und horizontalen Aufstandsuntergrund der Fahrzeuge entfernt gelegen sein. Aus den oben genannten Gründen ist dann der Abstand des zugfahrzeugseitigen Steckerbauteils vom Untergrund bevorzugt größer als der Abstand des nachlauffahrzeugseitigen Steckerbauteils vom Untergrund. Der Abstand des zugfahrzeugseitigen Steckerbauteils vom Untergrund kann beispielsweise deshalb größer als jener des nachlauffahrzeugseitigen Steckerbauteils sein, weil in Abstandsrichtung vom Untergrund, also in Richtung der Zugfahrzeug-Gierachse, das zugfahrzeugseitige Ausrichtbauteil zwischen dem zugfahrzeugseitigen Kupplungsbauteil und dem zugfahrzeugseitigen Steckerbauteil angeordnet ist. Das nachlauffahrzeugseitige Steckerbauteil kann dagegen bei Orientierung des nachlauffahrzeugseitigen Kupplungsbauteils mit untergrundparalleler Längsmittelachse eines nachlauffahrzeugseitigen Kupplungsglieds, insbesondere Zugöse, in einem Höhenbereich über dem Untergrund angeordnet sein, welcher sich mit dem Höhenbereich überlappt, in dem das nachlauffahrzeugseitige Ausrichtbauteil angeordnet ist.

Zur möglichst exakten Bewegung des Steckerbauteils, insbesondere des zugfahrzeugseitigen Steckerbauteils, längs der Verbindungstrajektorie kann das Steckerbauteil an einem Tragbauteil beweglich geführt sein. Als Antrieb des Steckerbauteils in wenigstens eine Bewegungsrichtung zwischen Verbindungsbereitschaftsstellung und Verbindungsaktivierungsstellung kann ein Kraftgerät vorgesehen sein, welches an einem Bauteil aus Steckerbauteil und Tragbauteil angeordnet sein kann. Um einen räumlich kompakten Antrieb des Steckerbauteils in wenigstens eine Richtung längs der Verbindungstrajektorie zu erhalten, ist das Kraftgerät bevorzugt an dem Tragbauteil angeordnet. Das Kraftgerät kann weiter ein bewegbar am Tragbauteil geführtes Antriebsbauteil umfassen, welches zur Bewegungsübertragung mit dem Steckerbauteil gekoppelt ist.

Grundsätzlich kann es ausreichen, wenn das Antriebsbauteil in nur einer seiner Bewegungsrichtungen mit dem Steckerbauteil gekoppelt ist, um dieses etwa von seiner Verbindungsbereitschaftsstellung in die Verbindungsaktivierungsstellung zu bewegen. Bevorzugt ist das Antriebsbauteil zur bidirektionalen Bewegungsübertragung mit dem Steckerbauteil gekoppelt, sodass das Antriebsbauteil das Steckerbauteil in entgegengesetzte Richtungen längs der Verbindungstrajektorie und damit sowohl in die Verbindungsaktivierungsstellung als auch in die Verbindungsbereitschaftsstellung bewegen kann.

Um den in der Regel geringen vorhandenen Bau- bzw. Bewegungsfreiraum möglichst frei für die Bewegung des Antriebsbauteils nutzen zu können, ist das Antriebsbauteil bevorzugt längs einer von der Verbindungstrajektorie verschiedenen Antriebstrajektorie zwischen einer Anfangsstellung und einer Endstellung bewegbar. Bevorzugt ist diese Antriebstrajektorie zur Verbindungstrajektorie orthogonal. Dies gilt insbesondere dann, wenn die Verbindungstrajektorie gemäß einer oben beschriebenen bevorzugten Weiterbildung der vorliegenden Erfindung in der Fahrzeuglängsmittelebene des das jeweilige Steckerbauteil tragenden Fahrzeugs gelegen ist. Dann kann die Antriebstrajektorie in Fahrzeugquerrichtung verlaufen. Bevorzugt erstreckt sich der Bewegungsweg des Antriebsbauteils nicht über das Tragbauteil hinaus. Um eine möglichst eindeutige Übertragung der Bewegung des Antriebsbauteils auf das Steckerbauteil zu erreichen, ist das Kraftgerät bevorzugt derart ausgebildet und angeordnet, dass sich das Steckerbauteil dann in der Verbindungsbereitschaftsstellung befindet, wenn sich das Antriebsbauteil in der Anfangsstellung befindet, und dass sich das Steckerbauteil dann in der Verbindungsaktivierungsstellung befindet, wenn sich das Antriebsbauteil in der Endstellung befindet.

Grundsätzlich ist die Antriebstrajektorie bevorzugt eine geradlinige Trajektorie, wenngleich nicht ausgeschlossen sein soll, dass die Antriebstrajektorie wendelförmig sein kann, etwa wenn das Antriebsbauteil Teil eines Spindel- oder Schneckentriebs ist. Eine unerwünschte unbeabsichtigte Bewegung des Steckerbauteils in die Verbindungsaktivierungsstellung kann dann verhindert werden, wenn das Antriebsbauteil wenigstens in der Anfangsstellung gegen eine Bewegung zur Endstellung hin verriegelbar ist. Diese Verriegelbarkeit kann auch eine mittelbare Verriegelbarkeit sein, etwa wenn das mit dem Antriebsbauteil zur gemeinsamen Bewegung gekoppelte Steckerbauteil in seiner Verbindungsbereitschaftsstellung unmittelbar verriegelbar ist und das Antriebsbauteil über das Steckerbauteil in der Anfangsstellung verriegelbar ist. Bevorzugt ist jedoch das Antriebsbauteil unmittelbar in seiner Anfangsstellung verriegelbar. Hierzu kann beispielsweise ein Riegel vorgesehen sein, welcher verstellbar ist zwischen einer Verriegelungsstellung, in der er das Antriebsbauteil in der Anfangsstellung gegen eine Bewegung zur Endstellung hin verriegelt, und einer Freigabestellung, in der er das Antriebsbauteil zur Bewegung zur Endstellung hin freigibt.

Um eine möglichst selbsttätige Verriegelung des Antriebsbauteils in der Anfangsstellung bewirken zu können, ist der Riegel bevorzugt in die Verriegelungsstellung vorgespannt, sodass der Riegel dann aufgrund seiner Vorspannung in die Verriegelungsstellung gelangen kann, wenn das Antriebsbauteil, etwa zur Trennung einer zuvor hergestellten Steckerverbindung, zurück in die Anfangsstellung bewegt wird. Bevorzugt greift der Riegel in seiner Verriegelungsstellung in eine Ausnehmung am Antriebsbauteil ein. Dieser Formschlusseingriff kann dann in der Freigabestellung gelöst sein.

Zur Bereitstellung der Antriebskraft kann das Kraftgerät beliebige an sich bekannte Vorrichtungen umfassen, beispielsweise eine Kolben-Zylinder-Anordnung, die allerdings nicht nur erheblichen Bauraum beansprucht, sondern auch eine Energieversorgung. Ebenso kann das Kraftgerät als Antriebskraftquelle für das Antriebsbauteil einen Elektromotor umfassen, der möglicherweise weniger Bauraum als eine Kolben-Zylinder-Anordnung einnimmt, jedoch ebenfalls eine Energieversorgung benötigt.

Bevorzugt umfasst daher das Kraftgerät eine Feder als Antriebskraftquelle. Bevorzugt ist diese Feder eine Druckfeder, die im Zustand höherer potenzieller Energie weniger Bauraum einnimmt als eine Zugfeder.

Die Feder kann dann mit dem Antriebsbauteil zusammenwirkend vorgesehen sein, und zwar bevorzugt derart, dass die Feder mit ihrer Federkraft das Antriebsbauteil von seiner Anfangsstellung in die Endstellung antreibt. Daher ist bevorzugt die in der Feder gespeicherte Federenergie dann größer, wenn sich das Antriebsbauteil in der Anfangsstellung befindet, als dann, wenn es sich in der Endstellung befindet. Die gespeicherte Federenergie kann somit dauerhaft auf das Antriebsbauteil einwirken, das durch den oben genannten Riegel an einer Bewegung zu seiner Endstellung hin gehindert wird. Erst wenn der Riegel in die Freigabestellung verstellt wird, kann die sich Feder des Kraftgeräts entspannen und dabei die zuvor in ihr gespeicherte potenzielle Energie in kinematische Energie des Antriebsbauteils umsetzen.

Bevorzugt ist die Kupplungsvorrichtung der vorliegenden Anmeldung derart ausgebildet, dass eine einmal hergestellte Steckerverbindung solange aufrechterhalten bleibt, wie auch die Kupplungsverbindung der Kupplungsbauteile aufrechterhalten bleibt. Eine konstruktive Lösung hierfür kann dadurch realisiert sein, dass das Antriebsbauteil mittelbar oder unmittelbar derart mit dem es tragenden Kupplungsbauteil gekoppelt ist, dass eine Lösebewegung eines Kupplungsglieds des Kupplungsbauteils, etwa eines Kupplungsbolzens, zur Aufhebung der Kupplungsverbindung mit dem jeweils anderen Kupplungsbauteil eine Bewegung des Antriebsbauteils in die Anfangsstellung bewirkt. Bei einer unmittelbaren Kopplung des Antriebsbauteils mit dem Kupplungsbauteil besteht eine unmittelbare bewegungsübertragende Verbindung zwischen Kupplungsbauteil und Antriebsbauteil, beispielsweise durch ein Gestänge, einen Seilzug oder ein Getriebe. Eine mittelbare Kopplung des Antriebsbauteils mit dem Kupplungsbauteil kann beispielsweise dadurch erfolgen, dass das Kupplungsglied des Kupplungsbauteils und das Antriebsbauteil jeweils unmittelbar mit einem gemeinsamen Bewegungsantrieb gekoppelt sind, sodass dann, wenn der Bewegungsantrieb das Kupplungsglied zur Aufhebung der Kupplungsverbindung antreibt, dieser Bewegungsantrieb auch das Antriebsbauteil zur Bewegung zurück in die Anfangsstellung antreibt. Der Bewegungsantrieb kann dabei genutzt werden, die zuvor genannte Feder mit der Bewegung des Antriebsbauteils zurück in die Anfangsstellung zu spannen.

Die Kupplungsverbindung zwischen den Kupplungsbauteilen erfolgt formschlüssig. Erfindungsgemäß weist das zugfahrzeugseitige Kupplungsbauteil als Kupplungsglied einen Kupplungsbolzen auf und weist das nachlauffahrzeugseitige Kupplungsbauteil als Kupplungsglied eine von dem Kupplungsbolzen durchsetzbare Zugöse auf. Wegen der angedachten Einsetzbarkeit der hier diskutierten Kupplungsvorrichtung auch im Bereich schwerer Nutzfahrzeuge, das sind Nutzfahrzeuge mit einem zulässigen Gesamtgewicht von über 12 Tonnen, ist eine Bolzenkupplung als zugfahrzeugseitiges Kupplungsbauteil vorgesehen. Folglich ist eine Deichsel mit Zugöse als nachlauffahrzeugseitiges Kupplungsbauteil vorgesehen.

Zur Erhöhung des Relativbewegungsraums des zugfahrzeugseitigen Ausrichtbauteils relativ zum zugfahrzeugseitigen Kupplungsbauteil ist das Ausrichtbauteil bevorzugt am Fangmaul des zugfahrzeugseitigen Kupplungsbauteils vorgesehen. Da das Fangmaul selbst wiederum eine Relativbeweglichkeit zu einem das zugfahrzeugseitige Kupplungsglied aufnehmenden Kupplungskörper des zugfahrzeugseitigen Kupplungsbauteils aufweisen kann, kann die Relativbeweglichkeit des zugfahrzeugseitigen Ausrichtbauteils relativ zu einem zugfahrzeugfesten Abschnitt des zugfahrzeugseitigen Kupplungsbauteils die Summe aus Relativbeweglichkeit des zugfahrzeugseitigen Ausrichtbauteils relativ zum Fangmaul und Relativbewegbarkeit des Fangmauls relativ zugfahrzeugfesten Abschnitt des Kupplungsbauteils sein.

Wie bereits oben dargelegt wurde, kann die Relativbeweglichkeit des wenigstens einen Steckerbauteils relativ zu dem es tragenden Ausrichtbauteil dazu genutzt werden, das Steckerbauteil bei Nichtgebrauch gegen Einflüsse von außen zu schützen. Hierzu kann vorgesehen sein, dass ein Steckerbauteil aus zug- und nachlauffahrzeugseitigem Steckerbauteil, vorzugsweise das nachlauffahrzeugseitige Steckerbauteil, relativ zu dem es tragenden Ausrichtbauteil verlagerbar ist zwischen einer Verstauungsstellung, in der seine wenigstens eine Steckerformation für eine Herstellung einer Steckerverbindung nicht zugänglich ist, und einer Verbindungserwartungsstellung, in der seine wenigstens eine Steckerformation für eine Herstellung einer Steckerverbindung zugänglich ist. Die Unzugänglichkeit der Steckerformation für eine Herstellung einer Steckerverbindung in der Verstauungsstellung des Steckerbauteils kann beispielsweise dadurch realisiert sein, dass eine Kontaktierungsseite der Steckerformation, welche bei hergestellter Steckerverbindung von der Steckerformation des jeweils anderen Steckerbauteils kontaktiert ist, in der Verstauungsstellung des Steckerbauteils hinter einer Blende oder Abdeckung verborgen ist, oder dass sich das Steckerbauteil in der Verstauungsstellung in einem Gehäuse oder Teilgehäuse befindet, welches das Steckerbauteil oder zumindest seine Steckerformation nach außen abschirmt. Das Steckerbauteil, insbesondere ein Wandabschnitt desselben, kann in seiner Verstauungsstellung in vorteilhafter Weise das Teilgehäuse zu einem Gehäuse ergänzen.

Von einer Unzugänglichkeit der Steckerformation für die Herstellung einer Steckerverbindung soll beispielsweise immer dann ausgegangen werden, wenn eine körperliche Barriere eine Annäherungsbewegung einer frei beweglichen passenden weiteren Steckerformation an die Steckerformation verhindert, während ohne die körperliche Barriere eine Steckerverbindung grundsätzlich herstellbar wäre.

Bevorzugt ist das Steckerbauteil in die Verstauungsstellung vorgespannt, sodass das Steckerbauteil sich immer dann in der Verstauungsstellung befinden kann, wenn keine äußeren Kräfte oder/und Momente auf es einwirken.

Grundsätzlich kann wiederum die Bewegung des Steckerbauteils zwischen der Verstauungsstellung und der Verbindungserwartungsstellung eine beliebige Bewegung sein, beispielsweise eine translatorische Bewegung, in deren Verlauf ein die Steckerformation zunächst abdeckendes Verdeckungsbauteil aus dem Bewegungsweg des Steckerbauteils heraus bewegt wird, etwa verschwenkt wird, insbesondere durch das Steckerbauteil selbst, sodass nach der Entfernung des Verdeckungsbauteils, etwa durch Wegklappen, die die zuvor unzugängliche Steckerformation des Steckerbauteils für die Herstellung einer Steckerverbindung zugänglich ist.

Eine schnelle Bewegung des Steckerbauteils von der Verstauungsstellung in die Verbindungserwartungsstellung mit kurzem Bewegungsweg kann vorteilhaft dadurch erreicht werden, dass das Steckerbauteil zwischen der Verstauungsstellung und der Verbindungserwartungsstellung verschwenkbar ist. Grundsätzlich kann die Verschwenkbarkeit des Steckerbauteils mit einer translatorischen Bewegbarkeit desselben überlagert sein. Um besonders kurze Bewegungswege und damit schnell ausführbare Bewegungen des Steckerbauteils zwischen der Verstauungsstellung und der Verbindungserwartungsstellung realisieren zu können, ist das Steckerbauteil zwischen den genannten Stellungen vorzugsweise ausschließlich verschwenkbar. Um die Schwenkbewegung des Steckerbauteils zwischen den genannten Stellungen möglichst unabhängig von einer Annäherungsbewegung der an der gewünschten Steckerverbindung beteiligten Steckerbauteile zu realisieren, verläuft die Schwenkbewegung des Steckerbauteils bevorzugt um eine Schwenkachse, die orthogonal zur Relativbewegungsrichtung ist, längs welcher das zug- und das nachlauffahrzeugseitige Steckerbauteil zur Herstellung der Steckerverbindung aneinander annäherbar und zum Lösen derselben voneinander entfernbar sind. Die Schwenkachse verläuft in dem oben genannten Bezugszustand der beteiligten Fahrzeuge in der Regel in Fahrzeugquerrichtung, also in Richtung der Nickachse. Dann kann die Schwenkbeweglichkeit des Steckerbauteils um diese Schwenkachse zum Ausgleich von Nickbewegungen von Zug- und Nachlauffahrzeug relativ zueinander im Fahrzeugzug bei hergestellter Steckerverbindung ausgleichen.

Falls das zwischen der Verstauungsstellung und der Verbindungserwartungsstellung verlagerbare Steckerbauteil das nachlauffahrzeugseitige Steckerbauteil ist, das dann bevorzugt auf einer Deichsel als ein nachlauffahrzeugseitiges Kupplungsbauteil vorgesehen ist, kann diese Deichsel in der Regel um eine Parallele zur Gierachse des Nachlauffahrzeugs schwenkbar sein, sodass sich die Orientierung der Schwenkachse des Steckerbauteils zur Verschwenkung zwischen Verstauungs- und Verbindungserwartungsstellung abhängig von der Schwenkstellung der Deichsel ändern kann. Bevorzugt ist die Schwenkachse unabhängig von der Schwenkstellung der Deichsel relativ zum Nachlauffahrzeug jedoch parallel zum Untergrund des das Steckerbauteil tragenden Fahrzeugs aus Zugfahrzeug und Nachlauffahrzeug.

Bevorzugt ist das zwischen der Verstauungsstellung und der Verbindungserwartungsstellung verlagerbare, insbesondere verschwenkbare Steckerbauteil das nachlauffahrzeugseitige Steckerbauteil. Auf dem nachlauffahrzeugseitigen Kupplungsbauteil ist das Steckerbauteil nämlich bei Nichtgebrauch, also beispielsweise dann, wenn das Nachlauffahrzeug auf einem Parkplatz abgestellt ist, stärker exponiert als ein zugfahrzeugseitiges Steckerbauteil, welches häufig unter einem Nutzaufbau des Fahrzeugs und möglicherweise noch seitlich durch Funktionsbaugruppen verdeckt ist, die im Unterbau des Fahrzeugs am Fahrzeugrahmen angeordnet sind.

Da das zugfahrzeugseitige Steckerbauteil nach Abschluss der steckerverbindungsvorbereitenden Ausrichtung durch die Ausrichtbauteile, aber noch vor Herstellung der Steckerverbindung, bevorzugt weiter vom Untergrund entfernt liegt als das nachlauffahrzeugseitige Steckerbauteil, schwenkt das nachlauffahrzeugseitige Steckerbauteil von der Verstauungsstellung in die Verbindungserwartungsstellung bevorzugt vom Untergrund weg, so dass sich beispielsweise der Abstand der nachlauffahrzeugseitigen Steckerformation vom Untergrund vergrößert.

Damit das Steckerbauteil die Verbindungserwartungsstellung sicher und definiert wiederholbar erreichen kann, ist das Steckerbauteil bevorzugt an einem Aufnahmebauteil relativ zu diesem beweglich geführt aufgenommen. Das Aufnahmebauteil kann dabei Teil des Gehäuses bzw. Teilgehäuses sein, in welchem das Steckerbauteil in der Verstauungsstellung aufgenommen ist. Die Bewegungsführung kann durch eine Schwenkachse oder Schwenkwelle realisiert sein, die am Aufnahmebauteil aufgenommen ist.

Das Aufnahmebauteil kann zur Vermeidung unnötiger Bauraumbeanspruchung und unnötigen Gewichts ein Schalenbauteil sein, welches in der Verstauungsstellung des Steckerbauteils dieses wenigstens abschnittsweise umgreift. Beispielsweise kann das Aufnahmebauteil das Steckerbauteil U-förmig unten und seitlich umgreifen, während das Aufnahmebauteil nach oben offen ist, so dass das Steckerbauteil ausgehend von seiner Verstauungsstellung nach oben aus dem Aufnahmebauteil in die Verbindungserwartungsstellung ausschwenken kann.

Eine sichere, schnelle und wiederholgenaue mechanische Steuerung der Bewegung des Steckerbauteils zwischen Verstauungsstellung und Verbindungserwartungsstellung kann dadurch realisiert sein, dass an dem Aufnahmebauteil ein Führungsbauteil vorgesehen ist, welches sowohl relativ zum Aufnahmebauteil als auch relativ zum Steckerbauteil beweglich ist, wobei es am Aufnahmebauteil längs einer Führungstrajektorie beweglich zwischen einer Startstellung und einer Finalstellung geführt ist und wobei es derart mit dem Steckerbauteil zur gemeinsamen Bewegung gekoppelt ist, dass dann, wenn sich das Führungsbauteil in der Startstellung befindet, sich das Steckerbauteil in der Verstauungsstellung befindet und dann, wenn sich das Führungsbauteil in der Finalstellung befindet, sich das Steckerbauteil in der Verbindungserwartungsstellung befindet.

Bevorzugt ist das Führungsbauteil relativ zum Aufnahmebauteil translatorisch beweglich, besonders bevorzugt nur translatorisch beweglich, sodass das Führungsbauteil als Schlitten in dem Aufnahmebauteil aufgenommen sein kann. Dies führt zu einem besonders geringen Bauraumbedarf.

Das ausschließlich translatorisch am Aufnahmebauteil bewegliche Führungsbauteil kann auch und gerade dann verwendet werden, wenn das Steckerbauteil selbst ausschließlich rotatorisch zwischen Verstauungsstellung und Verbindungserwartungsstellung verlagerbar ist.

Beispielsweise kann ein Bauteil aus Steckerbauteil und Führungsbauteil einen Vorsprung aufweisen, welcher mit einer Führungskulisse, etwa einer Führungsnut, am jeweils anderen Bauteil derart zusammenwirkt, dass eine Bewegung des Führungsbauteils von der Startstellung in die Finalstellung zu einer Bewegung des Steckerbauteils von der Verstauungsstellung in die Verbindungserwartungsstellung führt. Die rückstellende Bewegung des Steckerbauteils zurück in die Verstauungsstellung kann in einfachen Fällen schwerkraftgetrieben erfolgen oder durch ein Vorspannmittel, wie eine Feder, ungeführt durch das Führungsbauteil. Bevorzugt ist jedoch zur Sicherstellung einer definierten bidirektionalen Bewegung des Steckerbauteils zwischen Verstauungsstellung und Verbindungserwartungsstellung auch die Bewegung von der Verbindungserwartungsstellung in die Verstauungsstellung durch das Führungsbauteil geführt.

Dies kann durch Eingriff des oben erwähnten Vorsprungs in eine Führungsnut mit zwei einander gegenüberliegenden Nutflanken erreicht werden, wenn bei der Bewegung des Steckerbauteils in die eine Richtung die eine Nutflanke mit dem Vorsprung zusammenwirkt und bei der Bewegung zurück in die entgegengesetzte Richtung die jeweils gegenüberliegende Nutflanke mit dem Vorsprung zusammenwirkt.

Zur Vermeidung unerwünschter Abstützmomente, die bei der Führung der Bewegung des Steckerbauteils zwischen Verstauungsstellung und Verbindungserwartungsstellung durch das Führungsbauteil auftreten können, ist es bevorzugt, wenn das Führungsbauteil das Steckerbauteil zwischen zwei mit Abstand voneinander vorgesehenen Führungsschenkeln des Führungsbauteils aufnimmt, wobei das Steckerbauteil an jeder einem Führungsschenkel des Führungsbauteils gegenüberliegenden Seite durch das Führungsbauteil zur gemeinsamen Bewegung gekoppelt und geführt ist. So kann auf jeder einem Führungsschenkel des Führungsbauteils gegenüberliegenden Seite des Steckerbauteils ein Vorsprung an einem der Bauteile aus Steckerbauteil und Führungsbauteil mit einer Führungskulisse, insbesondere Führungsnut, am jeweils anderen Bauteil zur Bewegungskopplung zusammenwirken. Bevorzugt ist das Führungsbauteil zwischen Aufnahmebauteil und Steckerbauteil angeordnet. Aus Stabilitätsgründen besonders bevorzugt ist auch das Führungsbauteil U-förmig ausgebildet und umgreift das Steckerbauteil von drei Seiten.

Grundsätzlich kann daran gedacht sein, die Bewegung des Steckerbauteils von der Verstauungsstellung in die Verbindungserwartungsstellung aus der Bewegung des jeweils anderen Steckerbauteils aus der Verbindungsbereitschaftsstellung in die Verbindungsaktivierungsstellung abzuleiten oder umgekehrt. Dies bedeutet, die für die Bewegungen der beiden Steckerbauteile benötigte Antriebsenergie wird von dem Bewegungsantrieb eines Steckerbauteils geliefert und die beiden Steckerbauteile weisen jeweils einen Teil eines Hilfskopplungsmechanismus auf, welcher die Antriebsenergie vom einen Steckerbauteil zum anderen Steckerbauteil hin überträgt.

Alternativ ist es jedoch auch möglich, die Bewegung der Kupplungsbauteile relativ zueinander beim Ankuppeln zu nutzen, um daraus die Bewegungsenergie für ein Steckerbauteil oder beide Steckerbauteile abzuleiten. Beispielsweise kann das zuvor diskutierte Steckerbauteil durch das Führungsbauteil von der Verstauungsstellung in die Verbindungserwartungsstellung verbracht werden, wobei das Führungsbauteil zur Einleitung einer vom Führungsbauteil auf das Steckerbauteil übertragenen Bewegung einen Anlageabschnitt aufweisen kann, welcher zur Anlage an ein Gegenanlageauteil des das jeweils andere Steckerbauteil tragenden Fahrzeugs aus Zugfahrzeug und Nachlauffahrzeug ausgebildet ist. Bevorzugt ist dieses Gegenanlagebauteil das Kupplungsbauteil oder das Ausrichtbauteil. Da insbesondere die Ausrichtbauteile beider Fahrzeuge: Zugfahrzeug und Nachlauffahrzeug, relativ zueinander ausgerichtet werden und diese hierzu in Anlage aneinander kommen, ist der Anlageabschnitt besonders bevorzugt zur Anlage an das Ausrichtbauteil des jeweils anderen Fahrzeugs ausgebildet.

Bei Annäherung der Ausrichtbauteile beider Fahrzeuge kann so der Anlageabschnitt in Anlage an ein Bauteil des jeweils anderen Fahrzeugs gelangen. Bei fortgesetzter Annäherung der beiden Kupplungsbauteile aneinander kann dann das Führungsbauteil relativ zum Aufnahmebauteil und damit auch relativ zum Steckerbauteil bewegt werden und mit seiner Relativbewegung aufgrund der zuvor beschriebenen Bewegungskopplung eine Bewegung des Steckerbauteils zwischen seinen beiden genannten Stellungen bewirken. Hierzu ist der Bewegungswiderstand der Relativbewegung des Führungsbauteils relativ zum Aufnahmebauteil von der Startstellung in die Finalstellung bevorzugt geringer als ein Bewegungswiderstand einer etwaigen Relativbewegung des Aufnahmebauteils in gleicher Richtung relativ zum Kupplungsbauteil, falls eine derartige Relativbewegung des Aufnahmebauteils vorgesehen ist.

Dadurch wird außerdem erreicht, dass sich das Steckerbauteil erst möglichst spät, also erst nach erfolgter vorbestimmter Annäherung an das Steckerbauteil des jeweils anderen Fahrzeugs, aus der Verstauungsstellung herausbewegt. So kann das Steckerbauteil gut geschützt an das Steckerbauteil des jeweils anderen Fahrzeugs angenähert und dabei unter Hindernissen, wie etwa einem - gegebenenfalls zusätzlich mit Eis belasteten - Unterfahrschutz hindurch bewegt werden, ohne dass eine Kollision des Steckerbauteils mit dem Hindernis zu befürchten ist.

Wie bereits zuvor geschildert, kann zum Schutz wenigstens einer Steckerformation des Steckerbauteils vorgesehen sein, dass sich die Steckerformation dann, wenn sich das Steckerbauteil in seiner Verstauungsstellung befindet, in einer Aufsteckrichtung hinter einem Verdeckungsbauteil befindet. Die Aufsteckrichtung ist dabei jene Richtung, in welcher bauartbedingt theoretisch eine Steckerverbindung mit dem Steckerbauteil herstellbar ist, unabhängig davon, ob diese Steckerverbindung in der jeweiligen Stellung des Steckerbauteils tatsächlich herstellbar ist.

Vorzugsweise ist die Steckerverbindung ausschließlich durch eine Annäherungsbewegung der Steckerbauteile aufeinander zu herstellbar, ohne dass das zug- und das nachlauffahrzeugseitige Steckerbauteil bei hergestellter Steckerverbindung unmittelbar miteinander verrastet oder in ähnlicherweise positionsgesichert sind.

Um die Anzahl benötigter Bauteile zur Bildung der vorliegend diskutierten Kupplungsvorrichtung gering zu halten, kann vorgesehen sein, dass das Verdeckungsbauteil, bevorzugt auf seiner in der Verstauungsstellung des Steckerbauteils von diesem wegweisenden Seite, die Ausrichtformation des das Steckerbauteil tragenden Ausrichtbauteils aufweist. Grundsätzlich kann zur erleichterten Ausrichtung der beiden Ausrichtbauteile miteinander vorgesehen sein, dass die Ausrichtformation des einen Ausrichtbauteils aus zug- und nachlauffahrzeugseitigem Ausrichtbauteil einen sich zu seinem freien Längsende hin verjüngenden Ausrichtvorsprung und die Ausrichtformation des jeweils anderen Ausrichtbauteils eine zum Ausrichtvorsprung wenigstens abschnittsweise komplementäre sich zu ihrem freien Längsende aufweitende Ausrichtausnehmung als ein Ausrichtmaul aufweist, wobei der Ausrichtvorsprung zur Einführung in die Ausrichtausnehmung ausgebildet ist. Dabei können aufgrund der Relativbeweglichkeit des wenigstens einen Steckerbauteils relativ zu dem es tragenden Ausrichtbauteil der Öffnungswinkel des Ausrichtmauls und der Verjüngungswinkel des Ausrichtvorsprungs verhältnismäßig groß gewählt sein, beispielsweise größer als 60° oder sogar größer als 90°.

Wenn das Verdeckungsbauteil die Ausrichtformation aufweist, ist es bevorzugt starr, insbesondere einstückig materialschlüssig, mit dem Aufnahmebauteil verbunden. Das Aufnahmebauteil und das Verdeckungsbauteil können dann das Ausrichtbauteil bilden.

Konstruktiv kann der Ausrichtvorsprung eine konische oder/und kegelstumpfförmige oder/und tetraedrische oder/und pyramidonale oder/und allgemein polyedrische sich verjüngende Gestalt aufweisen und die Ausrichtausnehmung eine entsprechende negativ-konische oder/und negativ-kegelstumpfförmige oder/und negativ-tetraedrische oder/und negativ-pyramidonale oder/und allgemein negativ-polyedrische sich verjüngende Gestalt aufweisen. Im Falle allgemein polyedrischer sich verjüngender Gestalten des Ausrichtvorsprungs kann dieser auch mehrere Verjüngungswinkel in unterschiedlichen Ebenen aufweisen, wobei dann vorzugsweise kein Verjüngungswinkel kleiner als 45°, bevorzugt kleiner als 60° ist, um einen möglichst kurzen und dennoch bereits mit kurzem Bewegungsweg wirksamen Ausrichtvorsprung zu erhalten.

Für eine sichere und dauerhafte Ausrichtung von zug- und nachlauffahrzeugseitigem Ausrichtbauteil als Vorbereitung für die Herstellung und zur Aufrechterhaltung einer Steckerverbindung ist es vorteilhaft, wenn das zug- und das nachlauffahrzeugseitige Ausrichtbauteil aneinander festlegbar sind. Hierzu kann gemäß einer bevorzugten konstruktiven Variante vorgesehen sein, dass das zug- und das nachlauffahrzeugseitige Ausrichtbauteil bei Erreichen oder Überschreiten einer vorbestimmten Annäherung aneinander, insbesondere bei Erreichen oder Überschreiten einer vorbestimmten Einführtiefe des Ausrichtvorsprungs in die Ausrichtausnehmung, gegen ein Entfernen voneinander sperrbar sind.

Grundsätzlich soll nicht ausgeschlossen sein, dass eine Sperrung der beiden Ausrichtbauteile gegen Entfernen voneinander durch eine manuelle Sperrbetätigung erfolgt. Bevorzugt sind die Ausrichtbauteile jedoch selbsttätig gegen ein Entfernen voneinander sperrbar.

Zur Realisierung der Sperrung von Ausrichtvorsprung und Ausrichtausnehmung gegen ein Entfernen voneinander kann ein Ausrichtbauteil aus zug- und nachlauffahrzeugseitigem Ausrichtbauteil einen Sperrbügel oder eine Sperröse aufweisen. Bevorzugt überspannt der Sperrbügel eine Ausnehmung, in die ein Sperrglied des jeweils anderen Ausrichtbauteils zum Hintergriff des Sperrbügels hinein bewegt werden kann. Der Sperrbügel ist zur Erzielung einer möglichst hohen Stabilität an seinen beiden Längsenden bzw. die Längsenden enthaltenden Längsendbereichen an dem ihn tragenden Ausrichtbauteil befestigt. Aus Gründen einfacher Montage ist der Sperrbügel oder die Sperröse an dem den Ausrichtvorsprung aufweisenden Ausrichtbauteil vorgesehen und zwar bevorzugt in Annäherungsrichtung des Ausrichtvorsprungs an die Ausrichtausnehmung an dem vorauseilenden Längsende des Ausrichtvorsprungs.

Das jeweils andere Bauteil aus zug- und nachlauffahrzeugseitigen Ausrichtbauteil kann dann einen Sperrbolzen oder Sperrhaken aufweisen, welcher dazu ausgebildet und angeordnet ist, den Sperrbügel bzw. die Sperröse formschlüssig zu hintergreifen.

Der Sperrhaken ist zur Herstellung eines Sperreingriffs mit dem Sperrbügel oder der Sperröse vorzugsweise beweglich, insbesondere schwenkbar, zwischen einer Einführstellung, in welcher der Sperrbügel bzw. die Sperröse an einem Hakenschenkel des Sperrhakens vorbei in einer Einführrichtung in ein Hakenmaul einführbar ist, und einer Sperrstellung, in welcher der Hakenschenkel den dann im Hakenmaul befindlichen Sperrbügel bzw. einen im Hakenmaul befindlichen Abschnitt der Sperröse hintergreift und so den Sperrbügel bzw. die Sperröse gegen ein Ausziehen entgegen der Einführrichtung sichert. Im Falle der Verwendung einer Sperröse wird diese vorzugsweise vom Sperrhaken zur Erzielung eines Formschlusseingriffs als wirksamen Auszugschutzes in dessen Sperrstellung durchsetzt.

Zur einfachen selbsttätigen Sperrung von Ausrichtvorsprung und Ausrichtausnehmung gegen ein Entfernen voneinander kann der Sperrhaken einen Auslöseschenkel aufweisen, welcher während der Bewegung des Sperrhakens von seiner Einführstellung in seine Sperrstellung den Riegel von dessen Verriegelungsstellung in dessen Freigabestellung verstellt.

Bevorzugt ist der Auslöseschenkel aus Stabilitätsgründen einstückig mit dem zuvor genannten Hakenschenkel ausgebildet, wobei der Auslöseschenkel und der Hakenschenkel zusammen mit einer den Auslöseschenkel und den Hakenschenkel verbindenden Basis zwischen sich das zuvor genannte Hakenmaul einfassen. Zur Erleichterung der Verstellung des Riegels durch den Auslöseschenkel kann letzterer ausgehend von der den Auslöseschenkel und den Hakenschenkel verbindenden Basis des Sperrhakens eine größere Längenerstreckung aufweisen als der den Sperrbügel hintergreifende bzw. die Sperröse durchsetzende Hakenschenkel. Dann, wenn der Hakenschenkel kürzer als der Auslöseschenkel ausgeführt ist, kann die Sperröse mit einem kleineren Durchmesser ausgeführt sein bzw. kann der sich entgegen der Einführrichtung hinter dem Sperrbügel befindende Aufnahmeraum für den Hakenschenkel kleiner ausgeführt werden, da ein kürzerer Hakenschenkel insbesondere mit der bevorzugten Schwenkbewegung der Sperrhakens auch in kleinere Aufnahmeräume einfach und sicher einführbar und aus diesen wieder entfernbar ist.

Die oben genannte bevorzugte selbsttätige Sperrbarkeit der Ausrichtbauteile gegen ein Entfernen voneinander aus dem Formschlusseingriff kann in einfacher aber wirkungsvoller Form dadurch erhalten werden, dass der oben genannte Sperrbügel oder die Sperröse bei Erreichen der vorbestimmten Annäherung der Ausrichtbauteile aneinander zur Anlage an ein Trigger-Bauteil kommen, das bei fortgesetzter Annäherungsbewegung über die vorbestimmte Annäherung hinaus durch den hergestellten Anlageeingriff mit dem Sperrbügel oder der Sperröse mitbewegt wird und so eine Bewegung des Sperrglieds in eine den Sperrbügel hintergreifende oder die Sperröse durchsetzende Position bewirken kann. Das Trigger-Bauteil kann die Bewegung des Sperrglieds auslösend freigeben oder sogar das Sperrglied zu der Bewegung antreiben bzw. die Annäherungsbewegung des Sperrbügels bzw. der Sperröse als Antriebsbewegung auf das Sperrglied übertragen. Ist etwa der oben genannte Hakenschenkel das Sperrglied, kann der Auslöseschenkel das Trigger-Bauteil sein. Bevorzugt sind dann Haken- und Auslöseschenkel gemeinsam um eine gemeinsame Schwenkachse schwenkbar.

Mit dem zuvor genannten Auslöseschenkel kann die Einführbewegung des Ausrichtvorsprungs in das Ausrichtmaul in vorteilhafter Weise zur Freigabe des bevorzugt vom Riegel in dessen Verriegelungsstellung festgelegten Antriebsbauteils verwendet werden. Somit kann dann, wenn die Ausrichtbauteile von Zugfahrzeug und Nachlauffahrzeug sich einander ein vorbestimmtes Maß angenähert haben, so dass eine selbsttätige Verriegelung der beiden Ausrichtformationen aneinander ausgelöst wird, mit dieser Verriegelung gleichzeitig das Antriebsbauteil zur Bewegung aus seiner Anfangsstellung in seine Endstellung freigegeben werden. Folglich ist mit der vorbestimmten Annäherung der Ausrichtformationen aneinander nicht nur eine Sicherung der beiden Ausrichtformationen gegen Entfernung voneinander realisierbar, sondern es ist damit auch eine Verlagerung des mit dem Antriebsbauteil zur gemeinsamen Bewegung gekoppelten Steckerbauteils von der Verbindungsbereitschaftsstellung in die Verbindungsaktivierungsstellung auslösbar.

Nicht nur kann der Auslöseschenkel des Sperrhakens während der Bewegung des Sperrhakens von seiner Einführstellung in seine Sperrstellung den Riegel in dessen Freigabestellung verstellen, sondern bei geeigneter Gestaltung des Riegels kann der Riegel den Sperrhaken in dessen Sperrstellung gegen eine Bewegung zurück in dessen Einführstellung sichern. Hierzu kann ein Abschnitt des Riegels in Anlageeingriff mit einem Abschnitt des Auslöseschenkels gelangen, sodass der Riegelabschnitt den Auslöseschenkel und mit diesem den gesamten Sperrhaken körperlich an einer Bewegung von dessen Sperrstellung weg zu dessen Einführstellung hin hindert. Bevorzugt ist der Riegel in Verstellrichtung des Sperrhakens von der Einführrichtung in die Sperrstellung so kurz ausgebildet, dass der Auslöseschenkel sich über das ihm in der Sperrstellung nähere Längsende des Riegels hinaus bewegt, sodass der Riegel mit seinem dem Auslöseschenkel in dessen Sperrstellung näheren Längsende an dessen zum gegenüberliegenden Hakenschenkel hinweisenden Flanke in Anlageeingriff gelangen kann. Dieser Anlageeingriff wird durch die bevorzugte Vorspannung des Riegels in dessen Verriegelungsstellung unterstützt. Der Riegel ist hierzu vorzugsweise derart verschwenkbar angeordnet, dass beiderseits der Riegel-Schwenkachse je ein Riegelabschnitt gelegen ist, wobei ein auf einer Seite der Riegel-Schwenkachse gelegener Riegelabschnitt das Antriebsbauteil in dessen Anfangsstellung festlegt und der auf der anderen Seite der Riegel-Schwenkachse gelegene Riegelabschnitt durch den Auslöseschenkel zur Verstellung des Riegels in die Freigabestellung betätigbar ist und den Auslöseschenkel in der Sperrstellung des Sperrhakens dann gegen in Bewegung in die Einführstellung sichert, wenn sich der Riegel in der Verriegelungsstellung befindet. Die Schwenkachse des Riegels durchsetzt diesen vorzugsweise orthogonal.

Alternativ kann der Auslöseschenkel in der Sperrstellung des Sperrhakens in eine Ausnehmung des Riegels eingreifen, sodass der Riegel zumindest dann, wenn er sich in der Verriegelungsstellung befindet, auch auf diese Weise den Auslöseschenkel gegen eine Bewegung von dessen Sperrstellung zu dessen Einführstellung hin sichern kann.

Die wie vorliegend beschrieben ausgebildete Kupplungsvorrichtung erfordert in äußerst vorteilhafter Weise keine Verschwenkbarkeit des zugfahrzeugseitigen Steckerbauteils oder des zugfahrzeugseitigen Ausrichtbauteils um jene Abbiegeachse des Fahrzeugzuges, um welche das nachlauffahrzeugseitige Kupplungsbauteil bei hergestellter Kupplungsverbindung relativ zum zugfahrzeugseitigen Kupplungsbauteil schwenken kann. Eine derartige Verschwenkbarkeit ist beispielsweise bei der aus der EP 0 434 472 A1 bekannten Kupplungsvorrichtung notwendig, um ein problemloses Abbiegen des aus Zugfahrzeug und Nachlauffahrzeug gebildeten Fahrzeugzuges auch bei hergestellter Steckerverbindung zu ermöglichen. Diese Abbiegeachse ist häufig eine gierachsenparallele Längsmittelachse des zugfahrzeugseitigen Kupplungsglieds, also des Kupplungsbolzens. Durch Wegfall dieser im Stand der Technik zu beachtenden Randbedingung ist die konstruktive Freiheit der Ingenieure bei der Gestaltung der erfindungsgemäßen Kupplungsvorrichtung erheblich erhöht.

Stattdessen kann die Ausrichtformation des zugfahrzeugseitigen Ausrichtbauteils mit Abstand von einer Längsmittelachse eines zugfahrzeugseitigen Kupplungsbauteils, also des Kupplungsbolzens, vorgesehen sein, was die optimale Ausnutzung des vorhandenen Bauraums rund um das zugfahrzeugseitige Kopplungsbauteil ermöglicht. Die Längsmittelachse des zugfahrzeugseitigen Kupplungsglieds ist im vorliegenden erfindungsgemäßen Falle von dessen Ausbildung als Kupplungsbolzen in der Regel parallel zur Gierachse des Zugfahrzeugs orientiert. Fachleute werden einem zugfahrzeugseitigen Kupplungsglied stets auch im nicht fertig montierten Zustand seine Orientierung relativ zum Zugfahrzeug ansehen.

Dann, wenn ab dem Beginn eines Kupplungsvorgangs zur Herstellung einer Kupplungsverbindung die Einführbewegung von zug- und nachlauffahrzeugseitigem Kupplungsbauteil ineinander längs einer Annäherungsbahn, längs welcher die Kupplungsbauteile einander während des Kupplungsvorgangs angenähert werden, kürzer ist als die Einführbewegung von zug- und nachlauffahrzeugseitigen Kupplungsbauteilabschnitten ineinander, kann die Annäherungsbewegung von zug- und nachlauffahrzeugseitigem Kupplungsbauteil aneinander in vorteilhafter Weise als Antrieb zur Herstellung des Formschlusseingriffes zwischen zug- und nachlauffahrzeugseitigem Ausrichtbauteil verwendet werden. Denn dann kann der Formschlusseingriff zwischen zug- und nachlauffahrzeugseitigem Ausrichtbauteil während der Annäherungsbewegung von zug- und nachlauffahrzeugseitigem Kupplungsbauteil aneinander vollständig hergestellt und aus dieser Bewegung vollständig abgeleitet werden. Daher ist wenigstens die Ausrichtformation des zugfahrzeugseitigen Ausrichtbauteils bevorzugt mit Abstand in Zugfahrzeuglängsrichtung von der Längsmittelachse des Kupplungsglieds vorgesehen, und zwar in eine Richtung zum Nachlauffahrzeug hin. Dies ist eine Richtung, die der erkennbaren Annäherungsrichtung des zugfahrzeugseitigen Kopplungsbauteils an das nachlauffahrzeugseitige Kopplungsbauteil bei der Herstellung einer Kupplungsverbindung entspricht. Da zumeist das stillstehende Nachlauffahrzeug durch geradlinige Rückwärtsfahrt des Zugfahrzeugs an dieses angekoppelt wird, ist besonders bevorzugt die Ausrichtformation mit Abstand nur in Zugfahrzeug-Längsrichtung bzw. nur in der zuvor genannten Annäherungsrichtung von der Längsmittelachse des Kupplungsglieds entfernt vorgesehen. Die zugfahrzeugseitige Ausrichtformation ist somit bevorzugt relativ zur Längsmittelachse des zugfahrzeugseitigen Kupplungsglieds zum Nachlauffahrzeug hin versetzt vorgesehen.

Gemäß einer konkreten bevorzugten Ausführungsform der erfindungsgemäßen Kupplungsvorrichtung umfasst das zugfahrzeugseitige Kupplungsbauteil:
- einen Kupplungskörper mit einem Aufnahmeraum zur Aufnahme einer nachlauffahrzeugseitigen Kupplungsöse,
- einen Kupplungsbolzen, welcher längs seiner Längsmittelachse verlagerbar ist zwischen einer Kupplungsstellung, in welcher er stärker in den Aufnahmeraum einragt, und einer Lösestellung, in welcher er weniger stark in den Aufnahmeraum einragt, und
- ein Fangmaul, welches relativ zum Kupplungskörper um die Längsmittelachse des Kupplungsbolzens schwenkbar ist,
wobei das zugfahrzeugseitige Ausrichtbauteil bevorzugt am Fangmaul zur gemeinsamen Schwenkbewegung mit diesem um die Längsmittelachse des Kupplungsbolzens vorgesehen ist. Die Anordnung des zugfahrzeugseitigen Ausrichtbauteils am Fangmaul zur gemeinsamen Schwenkbewegung mit diesem ermöglicht zum einen eine stabile und sichere Anordnungsbasis des Ausrichtbauteils bei gleichzeitiger Beweglichkeit desselben um die Längsmittelachse des Kupplungsbolzens, was ermöglicht, dass ein aus Zugfahrzeug und Nachlauffahrzeug gebildeter Fahrzeugzug mit hergestellter Steckerverbindung abbiegen kann, ohne dass Ausrichtbauteile oder Steckerbauteile an Zug- oder Nachlauffahrzeug durch den Abbiegevorgang zerstört werden. In der Regel ist das Fangmaul derart am Kupplungskörper angeordnet, dass es bei hergestellter Kupplungsverbindung erst ab Überschreiten eines durch die Bauart von Fangmaul und Deichsel vorbestimmten Grenz-Verschwenkwinkels der Deichsel relativ zum Kupplungskörper zu einem Verschwenken des Fangmauls um die Längsmittelachse des Kupplungsbolzens kommt. Solange der Grenz-Verschwenkwinkel unterschritten wird, verhält sich das Fangmaul, als ob es starr mit dem Kupplungskörper verbunden wäre.

Das zugfahrzeugseitige Kupplungsbauteil ist daher gemäß der vorliegenden Erfindung durch eine Bolzenkupplung gebildet, das nachlauffahrzeugseitige Kupplungsbauteil umfasst dementsprechend eine Deichsel mit einer daran vorgesehenen Zugöse.

Um gewährleisten zu können, dass ein gebildeter Fahrzeugzug mit hergestellter Steckerverbindung über Bodenschwellen und Geländekuppen, also allgemein um parallel zur Nickachse des Zugfahrzeugs gekrümmte Untergrundoberflächen, fahren kann, ohne dadurch eines der an der Steckerverbindung beteiligten Steckerbauteile oder eine Ausrichtformation zu beschädigen, ist bevorzugt vorgesehen, dass die Ausrichtformation des zugfahrzeugseitigen Ausrichtbauteils, um eine Nick-Ausrichtachse schwenkbar vorgesehen ist, welche zur Längsmittelachse des Kupplungsbolzens, orthogonal ist oder/und welche zur Nickachse des Zugfahrzeugs parallel ist. Die Nick-Ausrichtachse verläuft somit sowohl orthogonal zur Längsmittelachse des Kupplungsglieds wie auch orthogonal zu einer Annäherungsrichtung von zug- und nachlauffahrzeugseitigem Kupplungsbauteil bei der Herstellung einer Kupplungsverbindung, wenn Zug- und Nachlauffahrzeug sich mit komplanaren vertikalen Längsmittelebenen einander auf ebenem horizontalem Untergrund annähern.

Insbesondere dann, aber nicht nur dann, wenn die Ausrichtformation des zugfahrzeugseitigen Ausrichtbauteils in der Annäherungsrichtung des zugfahrzeugseitigen Kupplungsbauteils an das nachlauffahrzeugseitige Kupplungsbauteil beim Ankuppeln von der Längsmittelachse des zugfahrzeugseitigen Kupplungsglieds versetzt angeordnet ist, ist es vorteilhaft, wenn die Ausrichtformation des zugfahrzeugseitigen Ausrichtbauteils längs der Höhen- bzw. Gierachse des Zugfahrzeugs verlagerbar ist. Auch hierdurch werden Relativbewegungen zwischen den Ausrichtbauteilen und den sie jeweils tragenden Kupplungsbauteilen ermöglicht, sodass Nickbewegungen von Zug- und Nachlauffahrzeug bei hergestellter Kupplungsverbindung relativ zueinander möglich sind, ohne dass eine ebenfalls hergestellte Steckerverbindung oder die in Formschlusseingriff stehenden Ausrichtformationen von Zug- und Nachlauffahrzeug hierdurch beschädigt werden würden.

Um trotz der Verlagerbarkeit der zugfahrzeugseitigen Ausrichtformation längs der Gierachse des Zugfahrzeugs einen Formschlusseingriff zwischen zug- und nachlauffahrzeugseitiger Ausrichtformation während der Herstellung einer Kupplungsverbindung herstellen zu können, ist es überdies vorteilhaft, wenn die Ausrichtformation des zugfahrzeugseitigen Ausrichtbauteils gegen die Vorspannkraft einer Vorspanneinrichtung längs der Zugfahrzeug-Höhenachse verlagerbar ist, da die Vorspanneinrichtung dann die Ausrichtformation nach Wegfall der Kupplungsverbindung stets in eine definierte Ausgangsposition bzw. Ruhelage zurückstellen kann, auf welche die nachlauffahrzeugseitige Ausrichtformation zur erfolgreichen Herstellung eines Formschlusseingriffs mit der zugfahrzeugseitigen Ausrichtformation vorjustiert sein kann.

Bevorzugt liegt eine Ruhelage der zugfahrzeugseitigen Ausrichtformation, die diese dann einnimmt, wenn sie - abgesehen von der Vorspanneinrichtung - frei vom Einfluss äußerer Kräfte und Momenten ist, nicht am Ende des Relativbewegungswegs der Ausrichtformation relativ zum Kupplungsbauteil, sodass die zugfahrzeugseitige Ausrichtformation ausgehend von der Ruhelage relativ zu dem sie tragenden zugfahrzeugseitigen Kupplungsbauteil in entgegengesetzte Richtungen längs der Zugfahrzeug-Höhenachse verlagerbar sein kann.

Bauraumsparend kann dies konstruktiv derart gelöst sein, dass die Vorspanneinrichtung zwei koaxiale, sich vorzugsweise wenigstens abschnittsweise überlappende Federn umfasst, welche die Ruhelage der zugfahrzeugseitigen Ausrichtformation definieren und von welchen jede die Ausrichtformation in eine andere von zwei entgegengesetzten Richtungen längs der Zugfahrzeug-Höhenachse vorspannt. Gerade die überlappende Anordnung der Federn sorgt für eine vorteilhafte Vorspannkraft in entgegengesetzte Richtungen längs der Zugfahrzeug-Höhenachse bei geringer Bauraumbeanspruchung.

Um für eine möglichst definierte Relativbewegung der zugfahrzeugseitigen Ausrichtformation relativ zum zugfahrzeugseitigen Kupplungsbauteil längs der Zugfahrzeug-Höhenachse zu sorgen, kann die zugfahrzeugseitige Ausrichtformation längs einer Mehrzahl paralleler und mit Abstand voneinander angeordneter Führungseinrichtungen zur Bewegung längs der Zugfahrzeug-Höhenachse geführt sein. Bevorzugt befindet sich die zugfahrzeugseitige Ausrichtformation zwischen wenigstens zwei Führungseinrichtungen, um weiter Bauraum zu sparen. Als Führungseinrichtungen können grundsätzlich Führungsschienen und dgl. verwendet werden. Einfach und wirkungsvoll können die Führungseinrichtungen Führungsstangen umfassen, welche geführte Abschnitte des zugfahrzeugseitigen Ausrichtbauteils durchsetzen und so für eine möglichst präzise Führung der zugfahrzeugseitigen Ausrichtformation oder des zugfahrzeugseitigen Ausrichtbauteils insgesamt sorgen können. Wenngleich eine beliebige Mehrzahl von Führungseinrichtungen vorgesehen sein kann, reicht das Vorsehen von zwei parallelen Führungseinrichtungen, insbesondere Führungsstangen, aus. Die Führungsstangen sind vorzugsweise orthogonal zur Zugfahrzeug-Höhenachse und ebenso orthogonal zur Annäherungsrichtung von zug- und nachlauffahrzeugseitigem Kupplungsbauteil bei der Herstellung einer Kupplungsverbindung mit Abstand voneinander angeordnet. Dies bedeutet, dass bei fertig am Zugfahrzeug montiertem zugfahrzeugseitigem Kupplungsbauteil die Führungseinrichtungen bevorzugt längs einer Parallelen zur Nickachse des Zugfahrzeugs mit Abstand voneinander angeordnet sind.

Zur Sicherstellung der Schwenkbarkeit der zugfahrzeugseitigen Ausrichtformation um die Nick-Ausrichtachse ist bevorzugt an jeder Führungseinrichtung je ein Gelenk längs der Zugfahrzeug-Höhenachse verschieblich geführt, welches eine Drehung um wenigstens eine zur Zugfahrzeug-Höhenachse orthogonale, vorzugsweise sowohl zur Zugfahrzeug-Höhenachse als auch zur Annäherungsrichtung von zug- und nachlauffahrzeugseitigem Kupplungsbauteil bei Herstellung einer Kupplungsverbindung orthogonale Achse gestattet.

Zur Vermeidung von Verspannungen in der Führungseinrichtung ist es bevorzugt, wenn jedes der an einer Führungseinrichtung verschieblich geführten Gelenke eine Drehung um zwei sowohl zueinander als auch zur Zugfahrzeug-Höhenachse orthogonale Drehachsen gestattet. Konstruktiv besonders einfach kann das Gelenk mit geringem Bauraumaufwand als Kugelgelenk realisiert sein. Bevorzugt durchsetzt daher jede der Führungseinrichtungen eine Gelenkkugel, welche an der Führungseinrichtung längs der Zugfahrzeug-Höhenachse verschieblich geführt ist.

Alternativ oder zusätzlich kann die wenigstens eine Führungseinrichtung um die Nick-Ausrichtachse schwenkbar sein und die Ausrichtformation an dieser translatorisch, vorzugsweise ausschließlich translatorisch verlagerbar sein. Bevorzugt ist die Führungseinrichtung in eine Ruhelage vorgespannt sein, in welcher sie die Ausrichtformation längs der Zugfahrzeug-Höhenachse führt,

Wenngleich es grundsätzlich ausreichen kann, nur ein Gelenk an nur einer Führungseinrichtung durch eine Vorspanneinrichtung in eine Ruhelage vorzuspannen, aus der heraus das Gelenk und mit diesem die zugfahrzeugseitige Ausrichtformation längs der Zugfahrzeug-Höhenachse verlagerbar ist, wird eine erheblich größere und deswegen bevorzugte Führungssicherheit erreicht, wenn an jeder Führungseinrichtung das jeweilige Gelenk durch je eine Vorspanneinrichtung aus einer Ruhelage heraus jeweils gegen Vorspannkraft in entgegengesetzte Richtungen längs der Zugfahrzeug-Höhenachse verlagerbar ist.

Das oben zur Relativbeweglichkeit der zugfahrzeugseitigen Ausrichtformation relativ zum zugfahrzeugseitigen Kupplungsbauteil Gesagte gilt auch für die Relativbeweglichkeit des zugfahrzeugseitigen Ausrichtbauteils insgesamt relativ zum zugfahrzeugseitigen Kupplungsbauteil und gilt ebenso für das vom zugfahrzeugseitigen Ausrichtbauteil getragene zugfahrzeugseitige Steckerbauteil. Zwar kann das zugfahrzeugseitige Steckerbauteil relativ zu dem es tragenden Ausrichtbauteil beweglich sein, jedoch handelt es sich gemäß der zuvor diskutierten bevorzugten Weiterbildung der vorliegenden Erfindung dabei um eine Relativbewegung, die einer Relativbewegung des zugfahrzeugseitigen Ausrichtbauteils relativ zum zugfahrzeugseitigen Kupplungsbauteil überlagert ist.

Die Relativbeweglichkeit der zugfahrzeugseitigen Ausrichtformation relativ zum zugfahrzeugseitigen Kupplungsbauteil ist mit der Relativbeweglichkeit des zugfahrzeugseitigen Ausrichtbauteils relativ zu dem es tragenden Kupplungsbauteil identisch, wenn die zugfahrzeugseitige Ausrichtformation relativ zum übrigen zugfahrzeugseitigen Ausrichtbauteil unbeweglich ist, also etwa starr mit einem es aufnehmenden Ausrichtgestell verbunden ist. Es soll jedoch nicht ausgeschlossen sein, dass zur Vermeidung von Beschädigungen der zugfahrzeugseitigen Ausrichtformation etwa bei der Herstellung des Formschlusseingriffs mit der nachlauffahrzeugseitigen Ausrichtformation die zugfahrzeugseitige Ausrichtformation relativ zu einem Ausrichtgestell des übrigen zugfahrzeugseitigen Ausrichtbauteils beweglich an diesem aufgenommen ist.

Wenn außerdem die Rede davon ist, dass das zugfahrzeugseitige Ausrichtbauteil relativ zum zugfahrzeugseitigen Kupplungsbauteil beweglich ist, so schließt dies ausdrücklich den Fall mit ein, dass das zugfahrzeugseitige Ausrichtbauteil relativ zu einer Komponente des zugfahrzeugseitigen Kupplungsbauteils, wie etwa dem Fangmaul, beweglich ist, die selbst wieder relativ zu weiteren Komponenten des zugfahrzeugseitigen Kupplungsbauteils relativ beweglich ist, welche im fertig montierten Zustand betriebs- und bestimmungsgemäß relativ zum Zugfahrzeugrahmen unbeweglich an diesem angebracht sind. Für das vom zugfahrzeugseitigen Ausrichtbauteil getragenen zugfahrzeugseitigen Steckerbauteil gilt das entsprechende, da - wie oben bereits dargelegt - dessen Relativbeweglichkeit relativ zum zugfahrzeugseitigen Ausrichtbauteil der Relativbeweglichkeit des Ausrichtbauteils relativ zum zugfahrzeugseitigen Kupplungsbauteil überlagert ist.

Die bei der erfindungsgemäßen Kupplungsvorrichtung besonders vorteilhafte Anordnung des zugfahrzeugseitigen Steckerbauteils mit Abstand von einer Längsmittelachse eines Kupplungsglieds des zugfahrzeugseitigen Kupplungsbauteils, insbesondere die bevorzugte Anordnung des zugfahrzeugseitigen Ausrichtbauteils am Fangmaul, kann beispielsweise dadurch ermöglicht werden, dass das nachlauffahrzeugseitige Steckerbauteil oder/und das nachlauffahrzeugseitige Ausrichtbauteil relativ zum nachlauffahrzeugseitigen Kupplungsbauteil, insbesondere relativ zu einer Deichsel desselben, jeweils um zwei mit Abstand voneinander angeordnete, zueinander parallele und in Höhenrichtung des nachlauffahrzeugseitigen Kupplungsbauteils verlaufende Steckerdrehachsen rotatorisch beweglich und längs einer zu den Steckerdrehachsen orthogonalen Trajektorie translatorisch beweglich angeordnet ist.

Im Bezugszustand mit zusätzlich parallel zum Aufstandsuntergrund orientierter Längsachse des nachlauffahrzeugseitigen Kupplungsbauteils verläuft dessen Höhenrichtung orthogonal zu dessen Längsachse und orthogonal zum Aufstandsuntergrund des Nachlauffahrzeugs, also parallel zur Gierachse des Nachlauffahrzeugs. Die Längsachse des Kupplungsbauteils verläuft dann zur Klarstellung parallel zur Längsachse des Nachlauffahrzeugs.

Die beschriebene Relativbeweglichkeit des nachlauffahrzeugseitigen Steckerbauteils oder/und des nachlauffahrzeugseitigen Ausrichtbauteils relativ zum nachlauffahrzeugseitigen Kupplungsbauteil ermöglicht in weiten Bereichen eine Relativverdrehung des nachlauffahrzeugseitigen Kupplungsbauteils um die Längsmittelachse des zugfahrzeugseitigen Kupplungsglieds, wie es beispielsweise beim Abbiegen des Fahrzeugzuges um eine Kurve auftritt, obwohl die in Formschlusseingriff miteinander befindlichen Ausrichtbauteile oder/und die in der Steckerverbindung miteinander verbundenen Steckerbauteile von Zug- und Nachlauffahrzeug relativ zu den in Kupplungsverbindung stehenden Kupplungsbauteilen um eine andere gierachsenparallele Abbiegeachse relativ zum nachlauffahrzeugseitigen Kupplungsbauteil schwenkbar sind als das zug- und das nachlauffahrzeugseitige Kupplungsbauteil relativ zueinander. Dieses Abbiegen kann daher mit hergestellter Steckerverbindung erfolgen, ohne dass eine Beschädigung eines der beiden Steckerbauteile zu befürchten ist. Diese Relativbeweglichkeit des nachlauffahrzeugseitigen Steckerbauteils oder/und des nachlauffahrzeugseitigen Ausrichtbauteils relativ zu seinem Kupplungsbauteil verschafft dem Konstrukteur der Kupplungsvorrichtung die Freiheit, das zugfahrzeugseitige Steckerbauteil und mit diesem gegebenenfalls auch das zugfahrzeugseitige Ausrichtbauteil mit seiner Ausrichtformation unabhängig von der Lage der Längsmittelachse des zugfahrzeugseitigen Kupplungsglieds anzuordnen. Dadurch kann beispielsweise die Bauhöhe der Kupplungsvorrichtung verglichen mit dem Stand der Technik verringert werden, gemäß welchem das zugfahrzeugseitige Ausrichtbauteil mit Steckerbauteil von der Längsmittelachse des Kupplungsbauteils, um die es drehbar ist, durchsetzt ist.

Überdies bietet die bezeichnete vorteilhafte Relativbeweglichkeit des nachlauffahrzeugseitigen Steckerbauteils oder/und des nachlauffahrzeugseitigen Ausrichtbauteils relativ zu seinem Kupplungsbauteil die Möglichkeit, das zug- und das nachlauffahrzeugseitige Steckerbauteil auf ihren jeweiligen Kupplungsbauteilen reitend, also oberhalb derselben, und nicht etwa wie im zuvor bezeichneten Stand der Technik hängend, also unterhalb derselben, anzubringen, was die Bodenfreiheit der mit der erfindungsgemäßen Kupplungsvorrichtung ausgerüsteten Fahrzeuge erheblich erhöht.

Die vorteilhafte Relativbeweglichkeit des nachlauffahrzeugseitigen Steckerbauteils oder/und des nachlauffahrzeugseitigen Ausrichtbauteils relativ zum nachlauffahrzeugseitigen Kupplungsbauteil kann beispielsweise gemäß einer Ausführungsform dadurch realisiert sein, dass der Abstand der beiden parallelen Steckerdrehachsen aufgrund der translatorischen Beweglichkeit des nachlauffahrzeugseitigen Steckerbauteils oder/und des nachlauffahrzeugseitigen Ausrichtbauteils veränderlich ist. Ebenso können die beiden Steckerdrehachsen bei unveränderlichem Abstand gemeinsam translatorisch relativ zum nachlauffahrzeugseitigen Kupplungsbauteil an diesem translatorisch beweglich angeordnet sein. Weiterhin ist eine Mischform dieser beiden Lösungen denkbar, gemäß welcher zwar beide Steckerdrehachsen gemeinsam translatorisch relativ zum nachlauffahrzeugseitigen Kupplungsbauteil beweglich an diesem angeordnet sind, jedoch auch ihr Abstand voneinander veränderlich ist. Somit können das zug- und das nachlauffahrzeugseitige Steckerbauteil bei hergestellter Steckerverbindung gemeinsam relativ zum nachlauffahrzeugseitigen Kupplungsbauteil um eine der Steckerdrehachsen drehbar sein.

Aus den zuvor genannten Gründen ist es bevorzugt, wenn wenigstens eine der Steckerdrehachsen, vorzugsweise beide Steckerdrehachsen, bei hergestellter Kupplungsverbindung mit Abstand von der Längsmittelachse des zugfahrzeugseitigen Kupplungsglieds vorgesehen ist, und zwar bevorzugt mit Abstand in Zugfahrzeug-Längsrichtung, besonders bevorzugt in einer Annäherungsrichtung, in welcher das zugfahrzeugseitige Kupplungsbauteil an das nachlauffahrzeugseitige Kupplungsbauteil zur Herstellung einer Kupplungsverbindung annäherbar ist. Höchst bevorzugt ist die wenigstens eine Steckerdrehachse aus den zuvor bereits genannten Gründen mit Abstand nur in Zugfahrzeug-Längsrichtung, also nur in der genannten Annäherungsrichtung, von der Längsmittelachse des zugfahrzeugseitigen Kupplungsglieds entfernt vorgesehen. Besonders bevorzugt befindet sich das zugfahrzeugseitige Steckerbauteil in seiner Verbindungsbereitschaftsstellung unmittelbar über der zugfahrzeugseitigen Ausrichtformation, um eine möglichst gute steckerverbindungsvorbereitende Ausrichtung der beteiligten Steckerbauteile zu erreichen. Die in diesem Absatz beschriebenen Lagebeziehungen gelten insbesondere auch bei hergestellter Steckerverbindung, auch wenn nicht ausgeschlossen sein soll, dass sich die Lage wenigstens einer Steckerdrehachse relativ zum nachlauffahrzeugseitigen Kupplungsbauteil bei Herstellung der Steckerverbindung ändert.

Aus Gründen einer möglichst stabilen Anordnung des nachlauffahrzeugseitigen Steckerbauteils oder/und des nachlauffahrzeugseitigen Ausrichtbauteils an dem nachlauffahrzeugseitigen Kupplungsbauteil ist die zuvor genannte erste Alternative der Relativbeweglichkeit, also ein veränderlicher Abstand der beiden Steckerdrehachsen aufgrund der translatorischen Beweglichkeit des nachlauffahrzeugseitigen Steckerbauteils bevorzugt.

In dem Fall abstandsveränderlicher Steckerdrehachsen ist es bevorzugt, wenn das nachlauffahrzeugseitige Steckerbauteil oder/und das nachlauffahrzeugseitige Ausrichtbauteil relativ zu einem Supportbauteil um eine erste der Steckerdrehachsen drehbar angeordnet ist und dass das Supportbauteil um die zur ersten parallele zweite Steckerdrehachse relativ zum nachlauffahrzeugseitigen Kupplungsbauteil drehbar angeordnet ist. Das Supportbauteil kann dann mit nur einem Bewegungsfreiheitsgrad, also mit einem rotatorischen Bewegungsfreiheitsgrad um die zweite Steckerdrehachse stabil am nachlauffahrzeugseitigen Kupplungsbauteil, insbesondere an einer Deichsel, drehbar angeordnet sein.

Weiterhin ist dann das nachlauffahrzeugseitige Steckerbauteil oder/und das nachlauffahrzeugseitige Ausrichtbauteil bevorzugt relativ zum Supportbauteil längs der zu den Steckerdrehachsen orthogonalen Trajektorie translatorisch verlagerbar. Wie bereits zuvor im Rahmen mit dem zugfahrzeugseitigen Ausrichtbauteil bzw. seiner Ausrichtformation und dem vom zugfahrzeugseitigen Ausrichtbauteil getragenen zugfahrzeugseitigen Steckerbauteil diskutiert wurde, kann auch das nachlauffahrzeugseitige Steckerbauteil oder/und das nachlauffahrzeugseitige Ausrichtbauteil aus den bereits genannten Gründen bevorzugt relativ zum Supportbauteil gegen die Rückstellkraft einer Rückstelleinrichtung längs der Trajektorie verlagerbar und auch um die erste Steckerdrehachse drehbar sein. Dabei können gesonderte Rückstelleinrichtungen vorgesehen sein, eine zur Rückstellung um die erste Steckerdrehachse und eine zur Rückstellung längs der Trajektorie.

Die längs der Trajektorie wirkende Rückstelleinrichtung kann analog zu der zuvor genannten Vorspanneinrichtung aufgebaut sein, sodass zur Erleichterung von Wartung und Montage eine bereits verwendete Konstruktion mehrfach an der Kupplungsvorrichtung eingesetzt werden kann. Hierzu kann vorgesehen sein, dass die Rückstelleinrichtung zwei koaxiale, sich wenigstens abschnittsweise überlappende Federn umfasst, welche eine Ruhelage des nachlauffahrzeugseitigen Steckerbauteil definieren und von welchen jede das nachlauffahrzeugseitige Steckerbauteil oder/und das nachlauffahrzeugseitige Ausrichtbauteil in eine andere von zwei entgegengesetzten Richtungen längs der Trajektorie rückstellt. Ebenso kann daher vorgesehen sein, dass das nachlauffahrzeugseitige Steckerbauteil oder/und das nachlauffahrzeugseitige Ausrichtbauteil längs einer Mehrzahl, vorzugsweise zweier, paralleler und mit Abstand voneinander angeordneter Führungsvorrichtungen, insbesondere Führungsstangen, zur Bewegung längs der Trajektorie geführt ist, wobei bevorzugt an jeder Führungsvorrichtung je eine Rückstelleinrichtung vorgesehen ist.

Während das zugfahrzeugseitige Steckerbauteil und das es tragende zugfahrzeugseitige Ausrichtbauteil in der Regel durch das Zugfahrzeug selbst relativ gut vor Verkehrseinflüssen abgeschirmt sind - denn üblicherweise ist das zugfahrzeugseitige Kupplungsbauteil an dem in Fahrzeuglängsrichtung dem Fahrzeugheck nächstgelegenen Fahrzeugquerträger montiert, sodass in der Regel ein Fahrzeugaufbau das zugfahrzeugseitige Kupplungsbauteil und mit ihm das Ausrichtbauteil und das Steckerbauteil überragt - ist das nachlauffahrzeugseitige Ausrichtbauteil mit dem von ihm getragenen nachlauffahrzeugseitigen Steckerbauteil üblicherweise auf einer vom nachlauffahrzeugseitigen Kupplungsbauteil umfassten Deichsel angeordnet und liegt somit frei. Es ist daher Einflüssen von außen stark ausgesetzt.

Daher ist gemäß einer bevorzugten Weiterbildung der vorliegenden Erfindung vorgesehen, wenigstens ein Bauteil aus nachlauffahrzeugseitigem Ausrichtbauteil und nachlauffahrzeugseitigem Steckerbauteil wenigstens abschnittsweise dann in einem Abschnitt des nachlauffahrzeugseitigen Kupplungsbauteils aufnehmen zu können, wenn das jeweilige aufgenommene Bauteil nicht benötigt wird, etwa weil das Nachlauffahrzeug auf einem Parkplatz abgestellt wird.

Bevorzugt sind beide genannten Bauteile: nachlauffahrzeugseitiges Ausricht- und Steckerbauteil, relativ zum nachlauffahrzeugseitigen Kupplungsbauteil in eine Stellung bringbar, in der sie bei Nichtgebrauch weniger stark exponiert sind als in einer Stellung, in welcher sie zur Herstellung einer Steckerverbindung bereit sind.

Daher ist gemäß einer bevorzugten Weiterbildung der vorliegenden Erfindung vorgesehen, dass eine Nachlauf-Baugruppe, welche das nachlauffahrzeugseitige Ausrichtbauteil und das nachlauffahrzeugseitige Steckerbauteil umfasst, an einer Deichsel des Nachlauffahrzeugs relativ zu einem nachlauffahrzeugseitigen Kupplungsglied, etwa einer Kupplungsöse, des nachlauffahrzeugseitigen Kupplungsbauteils verlagerbar angeordnet ist zwischen einer Inaktivstellung, in welcher wenigstens ein Abschnitt der Nachlauf-Baugruppe von einem Wandabschnitt der Deichsel umgeben ist, und einer von der Inaktivstellung verschiedenen Aktivstellung, in welcher das nachlauffahrzeugseitige Steckerbauteil in geringerem Umfang von einem Wandabschnitt der Deichsel umgeben ist als in der Inaktivstellung. Somit kann die Nachlauf-Baugruppe in der Inaktivstellung verglichen mit der Aktivstellung zurückgezogen sein, sodass wenigstens das nachlauffahrzeugseitige Steckerbauteil in der Inaktivstellung der Nachlauf-Baugruppe, verglichen mit der Aktivstellung, zurückgezogen ist, vorzugsweise in Deichsellängsrichtung von dem nachlauffahrzeugseitigen Kupplungsglied weg zurückgezogen ist. Dadurch, dass wenigstens ein Abschnitt der Nachlauf-Baugruppe von einem Wandabschnitt der Deichsel umgeben ist, ist die Nachlauf-Baugruppe und mit ihr das nachlauffahrzeugseitige Steckerbauteil und das nachlauffahrzeugseitige Ausrichtbauteil in der Inaktivstellung stärker vor einem äußeren Einfluss, insbesondere einem mechanischen Einfluss, geschützt als in der Aktivstellung.

Vorzugsweise ist wenigstens ein Abschnitt der Deichsel hohl ausgebildet. Hierdurch kann nicht nur die zu beschleunigende Masse des Nachlauffahrzeugs reduziert werden, sondern hierdurch kann ein Aufnahmeraum an der Deichsel gebildet werden, in den wenigstens ein Abschnitt der Nachlauf-Baugruppe bei Verlagerung in die Inaktivstellung verbracht werden kann. Daher ist ein noch besserer Schutz der Nachlauf-Baugruppe vor äußeren Einflüssen dann möglich, wenn die Nachlauf-Baugruppe in der Inaktivstellung wenigstens abschnittsweise in einem von der Deichselwandung gebildeten und - mit Ausnahme etwaiger Befestigungsbohrungen und dergleichen - um eine Deichsellängsachse herum vollständig umgebenen Hohlraum aufgenommen ist.

Bevorzugt ist das nachlauffahrzeugseitige Steckerbauteil in der Inaktivstellung der Nachlauf-Baugruppe selbst bei hergestellter Kupplungsverbindung nicht durch das zugfahrzeugseitige Steckerbauteil zur Herstellung der Steckerverbindung erreichbar ist. Dies ist bei hergestellter Kupplungsverbindung bevorzugt nur in der Aktivstellung der Nachlauf-Baugruppe der Fall. So kann vermieden werden, dass eine Steckerverbindung hergestellt wird, ohne dass sich das nachlauffahrzeugseitige Steckerbauteil in einer hierfür geeigneten Position befindet.

Um die Verlagerung der Nachlauf-Baugruppe zwischen der Inaktivstellung und der Aktivstellung wiederholbar mit ausreichender Betriebssicherheit gewährleisten zu können, kann weiter vorgesehen sein, dass die Nachlauf-Baugruppe an einer an der Deichsel vorgesehenen Führungsformation zur Bewegung zwischen der Inaktivstellung und der Aktivstellung geführt ist.

Dabei kann gemäß einer bevorzugten Weiterbildung der vorliegenden Erfindung die Abschirmung des nachlauffahrzeugseitigen Steckerbauteils oder/und des nachlauffahrzeugseitigen Ausrichtbauteils vor äußeren Einflüssen in der Inaktivstellung der Nachlauf-Baugruppe weiter dadurch reduziert werden, dass die Bewegung der Nachlauf-Baugruppe zwischen Aktivstellung und Inaktivstellung nicht nur eine Rückzugsbewegungskomponente in der Deichsel-Längsrichtung aufweist, sondern auch eine Versenkungsbewegungskomponente in einer sowohl zur Deichselquerrichtung wie auch zur Deichsellängsrichtung orthogonalen Deichselhöhenrichtung.

Um die im Falle einer Betriebsaufnahme des Nachlauffahrzeugs erforderliche Bewegung der Nachlauf-Baugruppe in die Aktivstellung zu unterstützen, kann vorgesehen sein, dass die Nachlauf-Baugruppe durch eine Belastungseinrichtung, welche vorzugsweise wenigstens eine Feder umfasst, in die Aktivstellung vorbelastet ist. Diese Belastungseinrichtung kann eine beliebige Belastungseinrichtung sein, die in der Lage ist, Kraft auf die Nachlauf-Baugruppe in Richtung zur Aktivstellung hin auszuüben. Bevorzugt umfasst die Belastungseinrichtung daher eine von einer äußeren Energieversorgung unabhängig betriebsbereiten Feder.

Grundsätzlich soll nicht ausgeschlossen sein, dass die Nachlauf-Baugruppe zwischen ihrer Aktivstellung und ihrer Inaktivstellung durch einen Bewegungsantrieb bewegbar ist, etwa durch eine Kolben-Zylinder-Anordnung, die pneumatisch oder hydraulisch betrieben sein kann, oder durch einen elektromotorischen Antrieb. Dieser Antrieb kann vorteilhaft in einem von der Deichsel selbst gebildeten Hohlraum aufgenommen sein.

Bevorzugt ist jedoch die gewicht- und kostensparende manuelle Betätigung der Nachlauf-Baugruppe zur Bewegung zwischen Inaktivstellung und Aktivstellung, welche durch Vorbelastung in die Aktivstellung unterstützt ist.

Daher kann die Nachlauf-Baugruppe ganz allgemein mit einer Verstelleinrichtung zusammenwirken, durch welche die Nachlauf-Baugruppe zwischen der Aktivstellung und der Inaktivstellung verlagerbar ist. Dies kann die genannte manuelle Verlagerbarkeit sein oder kann die ebenfalls genannte maschinell-aktuatorische Verlagerbarkeit sein. Die manuelle Antreibbarkeit kann, insbesondere zur Überwindung der Vorspannkraft der Feder bei Verstellung in die Inaktivstellung, ein kraftübertragendes Gestänge oder Getriebe aufweisen.

Während eine die Nachlauf-Baugruppe maschinell antreibende Verstelleinrichtung mit Ausnahme ihrer Energieversorgung und möglicherweise einer Steuersignalleitung gänzlich in einem Hohlraum der Deichsel aufgenommen sein kann, durchsetzt wenigstens ein Abschnitt einer zur manuellen Verlagerung der Nachlauf-Baugruppe ausgebildete Verstelleinrichtung die Deichsel, sodass sie sicher von außen zum Handangriff erreichbar ist. Ergonomisch vorteilhaft durchsetzt der wenigstens eine Abschnitt der Verstelleinrichtung die Deichsel in Deichsel-Querrichtung.

Um die gemeinsame Bewegbarkeit der Nachlauf-Baugruppe zwischen Inaktivstellung und Aktivstellung zu erleichtern, kann die Nachlauf-Baugruppe auf eine Grundplatte montiert sein und gemeinsam mit dieser zwischen der Aktivstellung und der Inaktivstellung verlagerbar sein. Beispielsweise kann das zuvor genannte Supportbauteil unmittelbar auf die genannte Grundplatte montiert sein, etwa um die oben genannte Steckerdrehachse drehbar.

Die Grundplatte kann in der Aktivstellung den Deichselhohlraum verschließen, in welchem die Nachlauf-Baugruppe wenigstens abschnittsweise in ihrer Inaktivstellung aufgenommen ist. Hierzu kann an einem Abschnitt der Deichsel oder/und an der Grundplatte eine Dichtungsanordnung vorgesehen sein, welche die Grundplatte wenigstens in der Aktivstellung der Nachlauf-Baugruppe gegen wenigstens einen Abschnitt einer einen Hohlraum einfassenden Deichselwandung abdichtet.

Die vorliegende Erfindung und ihre vorteilhaften Weiterbildungen werden nachfolgend anhand der beiliegenden Zeichnungen näher erläutert. Es stellt dar:
- Figur 1: eine perspektivische Ansicht einer erfindungsgemäßen Kupplungsvorrichtung bei nicht hergestellter Kupplungsverbindung,
- Figur 2: die Kupplungsverbindung von Figur 1 bei Ansicht in Nickachsenrichtung der beteiligten Fahrzeuge,
- Figur 3: die Kupplungsvorrichtung von Figur 2 in derselben Ansicht bei hergestellter Kupplungsverbindung,
- Figur 4: eine Draufsicht der Kupplungsverbindung von Figur 3 bei maximal möglicher Abwinklung von zug- und nachlauffahrzeugseitigem Kupplungsbauteil relativ zueinander,
- Figur 5: eine in teilweiser Schnitt- und teilweiser Explosionsdarstellung gezeigte Rückansicht eines zugfahrzeugseitigen Ausrichtbauteils mit von diesem getragenen zugfahrzeugseitigen Steckerbauteil der Kupplungsvorrichtung der Figuren 1 bis 4,
- Figur 6: eine perspektivische Darstellung, teilweise im Schnitt, das nachlauffahrzeugseitigen Ausrichtbauteils mit von diesem getragenen nachlauffahrzeugseitigen Steckerbauteil,
- Figur 7: eine Schnittdarstellung von zugfahrzeugseitigem Ausricht- und Steckerbauteil sowie von nachlauffahrzeugseitigem Ausricht- und Steckerbauteil gemäß der Figuren 5 bzw. 6 vor Herstellung eines Formschlusseingriffs zwischen den Ausrichtbauteilen,
- Figur 8: die Bauteile von Figur 7 bei Annäherung von zug- und nachlauffahrzeugseitigem Ausrichtbauteil aneinander,
- Figur 9: die Bauteile der Figuren 7 und 8 mit in Formschlusseingriff aneinander festgelegten zug- und nachlauffahrzeugseitigen Ausrichtbauteilen sowie mit zug- und nachlauffahrzeugseitigen Steckerbauteilen in hergestellter Steckerverbindung,
- Figur 10: eine zweite Ausführungsform des nachlauffahrzeugseitigen Kupplungsbauteils in perspektivischer Explosionsansicht und
- Figur 11: eine Längsschnittansicht durch die zweite Ausführungsform des nachlauffahrzeugseitigen Kupplungsbauteils in fertig montiertem Zustand.

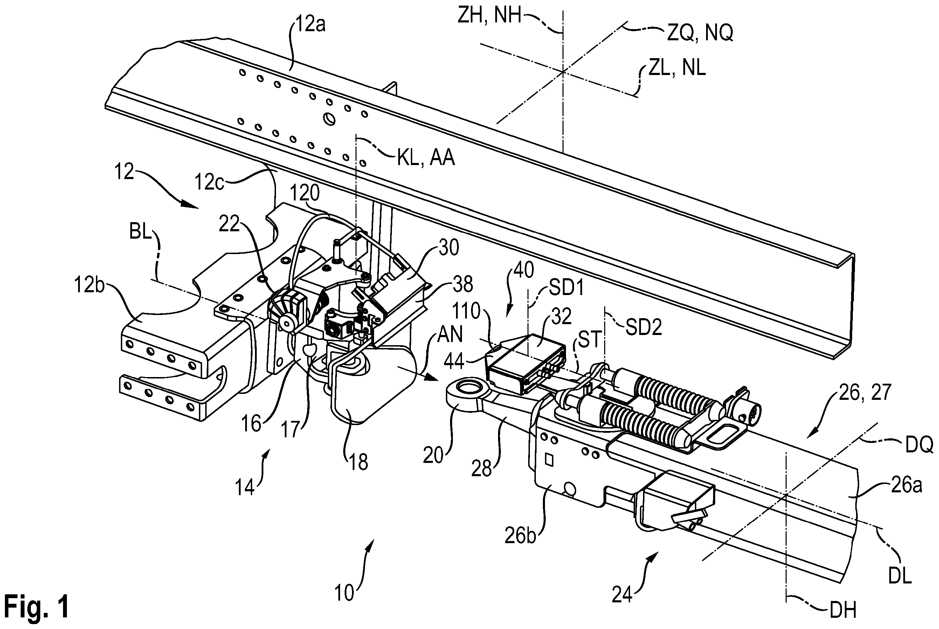

In den Figuren 1 bis 4 ist eine allgemein mit 10 bezeichnete erfindungsgemäße Kupplungsvorrichtung in unterschiedlichen Perspektiven und mit unterschiedlichen Relativstellungen der beteiligten Kupplungsbauteile relativ zueinander dargestellt.

In Figur 1 ist ein Fahrzeugrahmen 12 eines Zugfahrzeugs dargestellt. Dieser umfasst einen längs einer Zugfahrzeug-Längsachse ZL verlaufenden Längsträger 12a und einen orthogonal hierzu in Zugfahrzeug-Querrichtung ZQ verlaufender Zugfahrzeug-Querträger 12b.

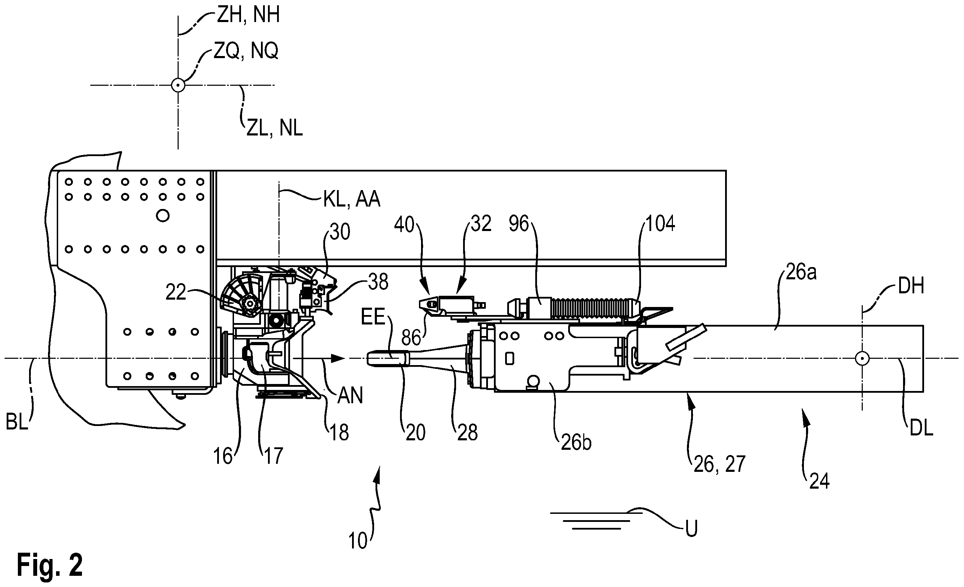

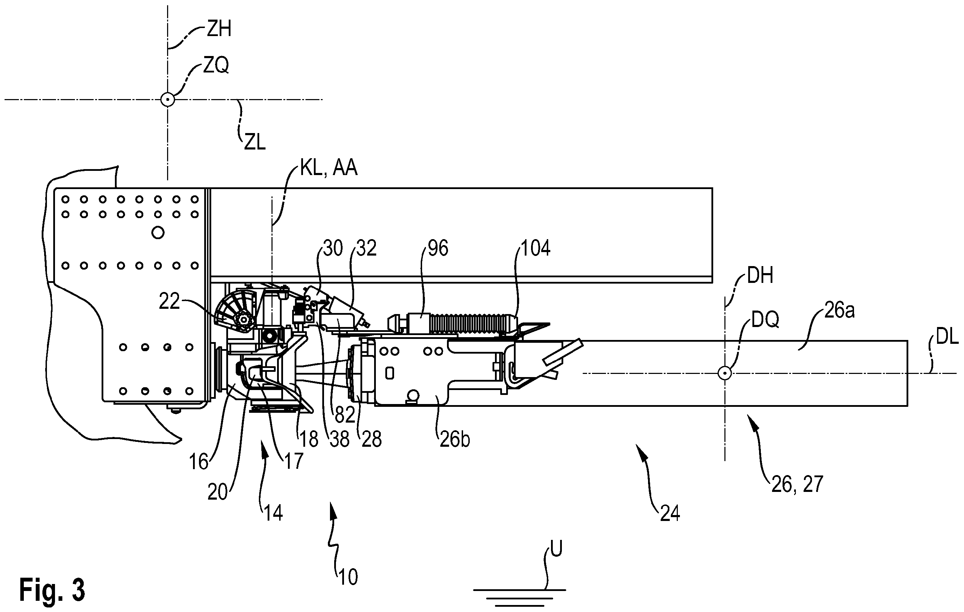

Die Zugfahrzeug-Längsachse ZL und die Zugfahrzeug-Querachse ZQ verlaufen parallel zu einem Aufstandsuntergrund des Zugfahrzeugs. Eine zu beiden genannten Achsen orthogonale Zugfahrzeug-Höhenachse ZH verläuft daher orthogonal zu dem lediglich in den Figuren 2 und 3 schematisch dargestellten Aufstandsuntergrund U. Die Zugfahrzeug-Längsachse ZL ist parallel zur Rollachse des Zugfahrzeugs, die Zugfahrzeug-Querachse ZQ ist parallel zur Nickachse des Zugfahrzeugs und die Zugfahrzeug-Höhenachse ZH ist parallel zur Gierachse des Zugfahrzeugs. In der vorliegenden Anmeldung ist dabei stets der Begriff "Gierachse" synonym gebraucht für eine Fahrzeughöhenachse, der Begriff "Nickachse" synonym für eine Fahrzeugquerachse und der Begriff "Rollachse" für eine Fahrzeuglängsachse.

Der Querträger 12b kann entweder unmittelbar am Längsträger 12a oder, wie in den Figuren dargestellt, über ein Vertikalschild 12c mit dem Längsträger 12a verbunden sein.

Am Zugfahrzeug-Querträger 12b ist in dessen Quermitte das zugfahrzeugseitige Kupplungsbauteil 14 einer in den Figuren 1 bis 4 dargestellten Bolzenkupplung angebracht.

Das zugfahrzeugseitige Kupplungsbauteil 14 umfasst ein Kupplungsgehäuse 16, an welchem ein in Figur 1 nicht dargestellter Kupplungsbolzen als Kupplungsglied längs der Gierachse ZH des Zugfahrzeugs in an sich bekannter Weise beweglich aufgenommen ist. Die gierachsenparallele Längsmittellinie KL des Kupplungsbolzens ist in den Figuren 1 bis 4 dargestellt.

Am Kupplungsgehäuse 16, dessen Zugösen-Aufnahmeraum 17 der Kupplungsbolzen je nach seiner Betriebsstellung unterschiedlich stark durchsetzt, ist ein um die Längsmittelachse KL des Kupplungsbolzens schwenkbares Fangmaul 18 angeordnet, welches in die in den Figuren 1 bis 3 dargestellte Stellung vorgespannt ist. Das Fangmaul 18 erleichtert in an sich bekannter Weise das Einfädeln einer nachlauffahrzeugseitigen Zugöse 20, welche ein nachlauffahrzeugseitiges Kupplungsglied darstellt, in den Zugösen-Aufnahmeraum 17 zur Ineingriffnahme durch den Kupplungsbolzen.

Das zugfahrzeugseitige Kupplungsbauteil 14 weist im dargestellten Beispiel ein Kinetrol 22 auf, welches u. a. als Antriebskraftquelle für eine Bewegung des Kupplungsbolzens wenigstens in die aus dem Zugösen-Aufnahmeraum 17 des Kupplungsgehäuses 16 zurückgezogene Stellung dient. In dieser Stellung ist der Zugösen-Aufnahmeraum 17 des Kupplungsgehäuses 16 für das Einführen oder/und das Herausziehen der Zugöse 20 in den bzw. aus dem Zugösen-Aufnahmeraum 17 frei.

Das Zugfahrzeug, repräsentiert durch seinen Fahrzeugrahmen 12, ist in der in den Figuren 1 und 2 gezeigten Bezugsstellung, in welcher das Zugfahrzeug und das Nachlauffahrzeug, repräsentiert durch das nachlauffahrzeugseitige Kupplungsbauteil 24, sich auf einem gemeinsamen ebenen Untergrund unmittelbar hintereinander mit komplanaren, zum gemeinsamen Untergrund U orthogonalen Fahrzeuglängsmittelebenen angeordnet sind, längs der Zugfahrzeug-Längsachse ZL in einer zum Nachlauffahrzeug hinweisenden Annäherungsrichtung AN an die Zugöse 20 des Nachlauffahrzeugs annäherbar, um die Zugöse 20 zur Herstellung eines Kupplungsverbindungseingriffs mit dem Kupplungsbolzen und damit zur Herstellung einer Kupplungsverbindung zwischen Zug- und Nachlauffahrzeug in den Zugösen-Aufnahmeraum 17 des Kupplungsgehäuses 16 einzuführen.

Das nachlauffahrzeugseitige Kupplungsbauteil 24 weist eine Deichsel 26 mit einem Deichselkörper 27 auf. Der Deichselkörper 27 weist ein einem nicht dargestellten Nachlauffahrzeugkörper näher gelegenen erstes Deichselkörper-Bauteil 26a und ein der Zugöse 20 näher gelegenes zweites Deichselkörper-Bauteil 26b auf. An dem der Zugöse 20 näher gelegenen Längsende des zweiten Deichselkörper-Bauteils 26b ist ein Zugösen-Bauteil 28 fest mit dem Deichselkörper 27 verbunden.

In den Figuren 1 bis 3 verläuft der Deichselkörper 27 und mit ihm das gesamte Nachlauffahrzeug mit einer zur Zugfahrzeug-Längsachse ZL parallelen Nachlauffahrzeug-Längsachse NL. Ebenso ist die Nachlauffahrzeug-Querachse NQ parallel zur Zugfahrzeug-Querachse ZQ. Schließlich ist auch die Nachlauffahrzeug-Höhenachse NH parallel zur Zugfahrzeug-Höhenachse ZH. Dies zeichnet weiter den oben genannten Bezugszustand aus, in dem sich Zugfahrzeug und Nachlauffahrzeug in den Figuren 1 bis 3 befinden. Eine den Deichselkörper 27 zentral durchsetzende Deichselkörper-Längsachse DL ist in dem Bezugszustand kollinear mit einer zur Zugfahrzeug-Längsachse ZL parallelen Längsachse BL durch den Zugösen-Aufnahmeraum 17 im Kupplungsgehäuse 16 des zugfahrzeugseitigen Kupplungsbauteils 14. Dann, wenn der Kupplungsbolzen bei hergestellter Kupplungsverbindung die Zugöse 20 und den Zugösen-Aufnahmeraum 17 des Kupplungsgehäuses 16 durchsetzt, durchsetzt die genannte Längsachse BL auch den Kupplungsbolzen. Ebenso durchsetzt die Deichselkörper-Längsachse DL die Zugöse 20 diametral in ihrer Äquatorebene EE, die im dargestellten Bezugszustand parallel zum Untergrund U orientiert ist. Die Äquatorebene EE der Zugöse 20 ist in Figur 2 orthogonal zur Zeichenebene der Figur 2 orientiert.

Der Vollständigkeit halber sei erwähnt, dass eine Deichselkörper-Höhenachse DH die Deichsel 26 bzw. den Deichselkörper 27 bei untergrundparalleler Ausrichtung der Deichselkörper-Längsachse DL parallel zu den Höhenachsen ZH und NH von Zugfahrzeug und Nachlauffahrzeug durchsetzt. Ebenso ist dann die Deichsel-körper-Quer¬achse DQ zur Deichselkörper-Höhenachse DH und zur Deichsellängsachse DL orthogonal.

Dann, wenn bei hergestellter Kupplungsverbindung, wie sie in Figur 3 gezeigt ist, und somit bei hergestelltem Fahrzeugzug, eine relative Nickbewegung zwischen Zug- und Nachlauffahrzeug eintritt, etwa weil ein entsprechend gekrümmter Untergrund überfahren wird, wird die Deichselkörper-Längsachse DL um den Nickwinkel relativ zur Zugfahrzeug-Längsachse ZL verdreht sein. Gleiches gilt für die zur Deichselkörper-Längsachse DL orthogonale Deichselkörperhöhenachse DH.

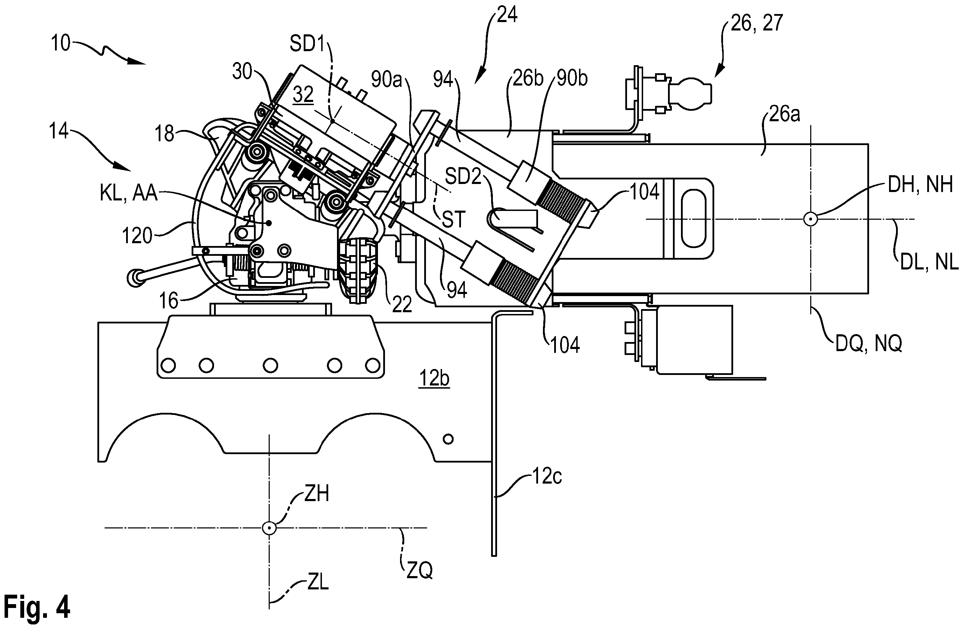

Beim Abbiegen des gebildeten Fahrzeugzuges, wie es in einem Extremfall in Figur 4 gezeigt ist, wird die Deichselkörper-Längsachse DL um eine von der Kupplungslängsachse KL gebildete Abbiegeachse AA des Fahrzeugzuges relativ zur Zugfahrzeug-Längsachse ZL abgewinkelt. Entsprechendes gilt für die zur Deichselkörper-Längsachse DL orthogonale Deichselkörper-Querachse DQ. Die zu den jeweiligen Abwinkel- bzw. Abbiegeachsen parallelen Körperachsen - das sind die Querachsen ZQ und DQ beim Nicken und das sind die Höhenachsen ZH und DH beim Abbiegen - bleiben jeweils zueinander parallel. Die Deichsel 26 sei vorliegend relativ zum übrigen Nachlauffahrzeug unbeweglich angenommen, wenngleich dies nicht so sein muss. Die Deichselkörper-Längsachse DL ist daher parallel zur Nachlauffahrzeug-Längsachse NL, die Deichsel¬körper-Quer¬achse DQ ist parallel zur Nachlauffahrzeug-Querachse NQ und die Deichselkörperhöhenachse DH ist parallel zur Nachlauffahrzeug-Höhenachse NH.

Die Kupplungsbauteile 14 und 24 sind nicht nur zur Herstellung der Kupplungsverbindung ausgebildet, die die für die Bildung eines Fahrzeugzuges notwendige Übertragbarkeit von Zugkraft vom Zugfahrzeug auf das Nachlauffahrzeug sorgt, sondern sind überdies in äußerst vorteilhafter Weise für eine automatisierte Herstellung einer Energie oder/und Information übertragenden Steckerverbindung zwischen einem zugfahrzeugseitigen Steckerbauteil 30 und einem nachlauffahrzeugseitigen Steckerbauteil 32 ausgebildet. Der Übersichtlichkeit halber sind in den Figuren entsprechende Energie- oder/und übertragende Versorgungsleitungen nicht dargestellt, für die am jeweiligen Fahrzeug aus Zugfahrzeug und Nachlauffahrzeug die Steckerbauteile 30 und 32 eine Schnittstelle bilden.

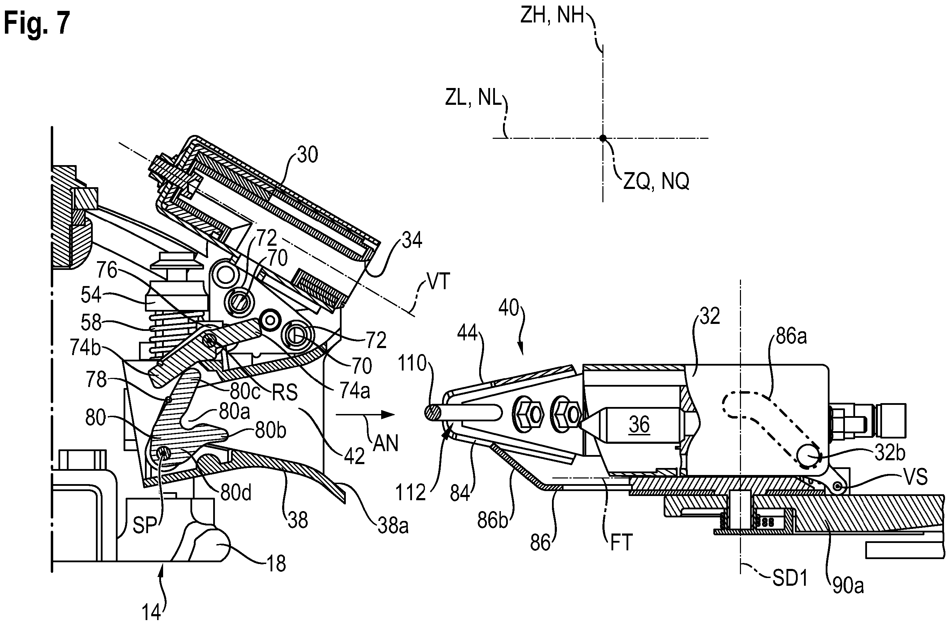

Die eigentliche Übertragung von Energie oder/und Information über die bei hergestellter Steckerverbindung verbundenen Steckerbauteile 30 und 32 erfolgt über die zugfahrzeugseitige Steckerformation 34 und die nachlauffahrzeugseitige Steckerformation 36, welche beide schematisiert in den Figuren 7 bis 9 dargestellt sind. Die Steckerformationen 34 und 36 von Zugfahrzeug und Nachlauffahrzeug kontaktieren sich bei hergestellter Steckerverbindung und bilden somit eine Möglichkeit, Energie in elektrischer oder/und pneumatischer oder/und hydraulischer Form oder/und Information zwischen Zug- und Nachlauffahrzeug zu übertragen.

Eine Steckerformation, im dargestellten Beispiel etwa die zugfahrzeugseitige Steckerformation 34, kann als Buchse ausgebildet sein. Die jeweils andere Steckerformation, hier die nachlauffahrzeugseitige Steckerformation 36, kann als männlicher Stecker ausgebildet sein.

Zur Erleichterung der Herstellung der Steckerverbindung weist das zugfahrzeugseitige Kupplungsbauteil 14 ein zugfahrzeugseitiges Ausrichtbauteil 38 auf und weist das nachlauffahrzeugseitige Kupplungsbauteil 24 ein nachlauffahrzeugseitiges Ausrichtbauteil 40 auf. Die Ausrichtbauteile 38 und 40 sind zur Herstellung eines Formschlusseingriffs miteinander ausgebildet, um die Steckerbauteile 32 und 34 in eine für die Herstellung einer Steckerverbindung vorteilhafte Ausgangssituation zu verbringen, also diese steckerverbindungsvorbereitend auszurichten.

Eines der Ausrichtbauteile, im vorliegenden Beispiel das zugfahrzeugseitige Ausrichtbauteil 38, weist vorteilhafterweise eine Ausrichtausnehmung 42 als Ausrichtformation auf. Das jeweils andere Ausrichtbauteil - hier das nachlauffahrzeugseitige Ausrichtbauteil 40 - weist einen sich zum jeweils anderen Fahrzeug des Fahrzeugzuges hin verjüngenden Vorsprung 44 als Ausrichtformation auf.

Damit die steckerverbindungsvorbereitende Ausrichtung bei kurzem Ausrichtbewegungsweg funktioniert, trägt wenigstens ein Ausrichtbauteil das Steckerbauteil desselben Fahrzeugs derart, dass das Steckerbauteil relativ zu dem es tragenden Ausrichtbauteil beweglich ist. Im vorliegenden Beispiel ist sowohl das zugfahrzeugseitige Steckerbauteil 30 relativ zum zugfahrzeugseitigen Ausrichtbauteil 38 beweglich, wie auch das nachlauffahrzeugseitige Steckerbauteil 32 zum nachlauffahrzeugseitigen Ausrichtbauteil 40 beweglich ist.

Das zugfahrzeugseitige Ausrichtbauteil 38 ist wiederum bevorzugt am Fangmaul 18 des zugfahrzeugseitigen Kupplungsbauteils 14 angeordnet, um dessen Relativbeweglichkeit relativ zum Kupplungsbolzen und zum Kupplungskörper 16 auch für das am zugfahrzeugseitigen Ausrichtbauteil 38 vorgesehene Steckerbauteil 32 nutzen zu können.

In den Figuren 2 und 3 ist zu erkennen, dass das zugfahrzeugseitige Ausrichtbauteil 38 mit seinem Steckerbauteil 30 längs der Zugfahrzeug-Längsachse ZL und zwar bevorzugt in der Annäherungsrichtung AN des Zugfahrzeugs an das Nachlauffahrzeug bei Herstellung der Kupplungsverbindung versetzt angeordnet ist. Damit kann eine längs der Zugfahrzeug-Höhenachse sehr kompakte Anordnung erhalten werden, bei der dennoch das zugfahrzeugseitige Ausrichtbauteil 38 und das zugehörige Steckerbauteil 30 oberhalb der das zugfahrzeugseitige Kupplungsbauteil 14 durchsetzenden Längsachse BL angeordnet werden kann.

Im Stand der Technik sind bei funktionell vergleichbaren Lösungen das zugfahrzeugseitige Ausrichtbauteil oder/und das zugfahrzeugseitige Steckerbauteil mit der Längsmittellinie KL des Kupplungsbolzens fluchtend angeordnet. Bei der erfindungsgemäßen vorteilhaften orthogonal zur verlängert gedachten Längsmittellinie KL des Kupplungsbolzens versetzten Anordnung von zugfahrzeugseitigem Ausrichtbauteil 38 und Steckerbauteil 30 kann eine Bolzenaufnahme 16a des Kupplungsgehäuses 16, in welchem der Kupplungsbolzen dann aufgenommen ist, wenn er aus dem Zugösen-Aufnahmeraum 17 des Kupplungsgehäuses 16 zurückgezogen ist, längs der Zugfahrzeug-Höhenachse ZL mit dem zugfahrzeugseitigen Ausrichtbauteil 38 oder/und dem zugfahrzeugseitigen Steckerbauteil 30 axial überlappend angeordnet werden.

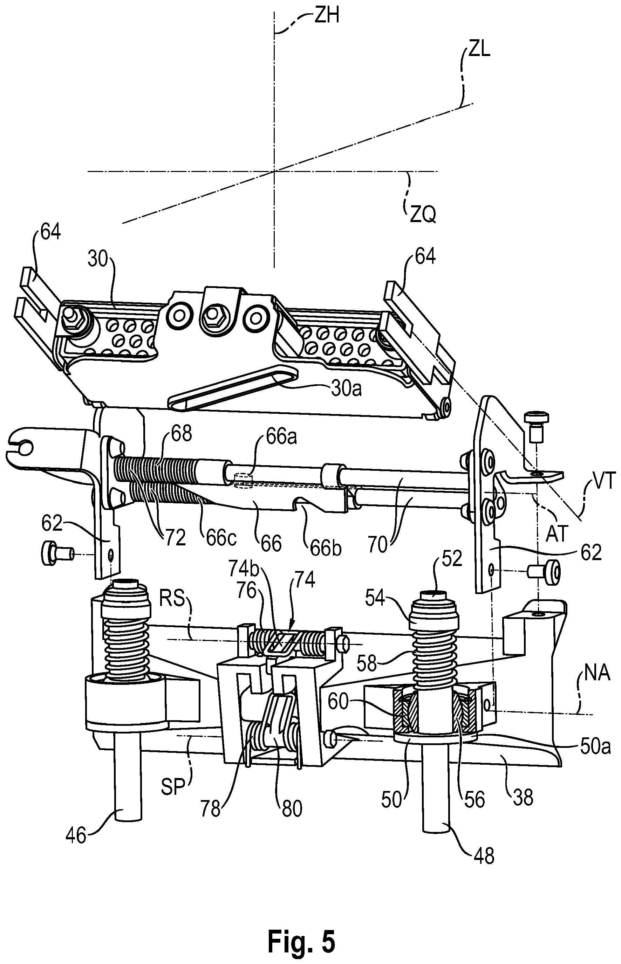

Nachfolgend wird anhand von Figur 5 das zugfahrzeugseitige Ausrichtbauteil 38 mit dem relativ zu diesem beweglich vorgesehenen zugfahrzeugseitigen Steckerbauteil 30 erläutert. Zur Erleichterung der Orientierung sind in Figur 5 die Zugfahrzeug-Höhenachse ZH und die Zugfahrzeug-Querachse ZQ angegeben. Die Zugfahrzeug-Längsachse ZL ist etwas um die Senkrechte zur Zeichenebene der Figur 5 nach links geneigt. Die zugfahrzeugseitige Ausrichtformation 42 weist in Figur 5 vom Betrachter weg.

Das Ausrichtbauteil 38 mit seiner zum Ausrichtvorsprung 44 wenigstens abschnittsweise komplementären Ausrichtausnehmung 42 ist an zwei parallelen und längs der Zugfahrzeug-Höhenachse ZH verlaufenden Führungsstangen 46 und 48 translatorisch beweglich geführt.

Die Führung des zugfahrzeugseitigen Ausrichtbauteils 38 ist an beiden Führungsstangen 46 und 48 im Wesentlichen identisch ausgeführt. Aus Gründen der Übersichtlichkeit wird daher die Führung nur anhand der in Figur 5 rechten Führungsstange 48 erläutert.

An der Führungsstange 48 ist ein Führungstopf 50 längs der Führungsstange 48 längs der Zugfahrzeug-Höhenachse ZH beweglich geführt, wobei der Führungstopf 50 von einer im Inneren des Topfes 50 vorhandenen und damit in Figur 5 nicht sichtbaren inneren Schraubendruckfeder in seine fangmaulferne Endstellung vorgespannt ist.

Fest mit der Führungsstange 48 an deren fangmaulfernem Längsende verbunden ist eine endseitige Abschlussschraube 52, an welcher ein zur gemeinsamen Bewegung mit dem Führungstopf 50 verbundener Dom 54 aufgrund der Vorspannung der radial inneren Schraubendruckfeder anliegt. Der Führungstopf 50 kann sich daher ausgehend von seiner in Figur 5 gezeigten Ruhestellung längs der Führungsstange 48 nur nach unten, also zum Fangmaul 18 hin bewegen. Am Führungstopf 50 radial außen ist eine Gelenkkugel 56 beweglich geführt, welche durch eine zweite, äußere Schraubendruckfeder 58, die koaxial und überlappend mit der inneren Schraubendruckfeder im Inneren des Führungstopfes angeordnet ist, gegen einen nach radial außen vorstehenden umlaufenden Radialvorsprung 50a des Führungstopfes 50 vorgespannt ist. Relativ zum Führungstopf 50 kann sich die Gelenkkugel 56 in der in Fig. 5 gezeigten Stellung gegen die Vorspannkraft der zwischen Gelenkkugel 56 und Dom 54 abgestützten äußeren Schraubendruckfeder 58 vom Radialvorsprung 50a weg nur nach oben zum Dom 54 hin bewegen.

Somit ist das Ausrichtbauteil 38 an den Führungsstangen 46 und 48 in eine in Figur 5 dargestellte Ruhelage vorgespannt, aus der heraus das Ausrichtbauteil 38 in beide entgegengesetzten Richtungen längs der Führungsstangen 46 und 48 (längs der Zugfahrzeug-Höhenachse ZH) auslenkbar ist. Am Ausrichtbauteil 38 ist jede Gelenckugel 56 in einer negativ-kugelkalottenförmigen Gleitschale 60 geführt, sodass das Ausrichtbauteil 38 nicht nur längs der Zugfahrzeug-Höhenachse ZH verlagerbar, sondern auch um eine zur Nickachse ZQ des Zugfahrzeugs parallele Nick-Ausrichtachse NA relativ zu den Führungsstangen 46 und 48 verschwenkbar ist.

Die Anordnung von zwei parallelen Führungsstangen 46 und 48 erfolgt aus Gründen bestmöglicher Bauraumausnutzung, sodass zwischen den Führungsstangen 46 und 48 ein nachfolgend im Zusammenhang mit den Figuren 7 bis 9 näher beschriebener Verriegelungsmechanismus zur Verriegelung der Ausrichtbauteile 38 und 40 aneinander aufgenommen sein kann.

Im vorliegenden Beispiel ist am Ausrichtbauteil 38 mit Schrauben ein Tragbauteil 62 befestigt, welches vom Ausrichtbauteil 38 im dargestellten Beispiel in Richtung der Zugfahrzeug-Gierachse ZH vom Fangmaul 18 weg absteht. Die Verbindung des Tragbauteils 62 mit dem Ausrichtbauteil 38 kann zusätzlich oder alternativ auch mit anderen Verbindungsmitteln als mit Schrauben hergestellt sein.

Am Tragbauteil 62 ist das zugfahrzeugseitige Steckerbauteil 30 längs einer Verbindungstrajektorie VT zwischen zwei unterschiedlichen Stellungen beweglich, nämlich zwischen einer näher bei den verlängert gedachten Längsmittelachsen der Führungsstangen 46 und 48 gelegenen zurückgezogenen Verbindungsbereitschaftsstellung und einer längs der Verbindungstrajektorie VT zum Nachlauffahrzeug hin versetzten Verbindungsaktivierungsstellung. Hierzu können am Steckerbauteil 30 oder/und am Tragbauteil 62 Führungsmittel 64 vorgesehen sein (in Figur 5 sind Führungsmittel 64 nur am zugfahrzeugseitigen Steckerbauteil 30 dargestellt).

Üblicherweise ist das zugfahrzeugseitige Steckerbauteil 30 derart am zugfahrzeugseitigen Kupplungsbauteil 14 angeordnet, dass die das Steckerbauteil 30 in seiner Quermitte durchsetzende Verbindungstrajektorie VT mit einer den Zugösen-Aufnahmeraum 17 bzw. den Kupplungsbolzen in seiner eine Zugöse durchsetzenden Stellung zentral durchsetzende Längsmittellinie BL in einer orthogonal zum Aufstandsuntergrund U des Zugfahrzeugs gelegenen Fahrzeuglängsmittelebene des Zugfahrzeugs gelegen sind und einen Winkel zwischen sich einschließen. Der Schnittpunkt der verlängert gedachten Verbindungstrajektorie VT mit der den Kupplungsbolzen durchsetzenden Längsmittellinie BL ist bevorzugt ausgehend vom Kupplungsbolzen zum Nachlauffahrzeug hin versetzt, was die vorteilhafte Anordnung des zugfahrzeugseitigen Steckerbauteils 30 längs der Zugfahrzeug-Höhenachse ZH über dem Fangmaul 18 ermöglicht.

Als Bewegungsantrieb zur Verlagerung des zugfahrzeugseitigen Steckerbauteils 30 zwischen den genannten Stellungen: Verbindungsbereitschaftsstellung und Verbindungsaktivierungsstellung, sind am bevorzugt mehrteilig ausgeführten Tragbauteil 62 ein Antriebsbauteil 66 und ein Kraftgerät 68 vorgesehen. Hierzu sind genauer zwei parallele Führungsschienen in Form von Führungsstangen 70 das Tragbauteil 62 längs der Zugfahrzeug-Querachse ZQ überspannend angeordnet, an welchem das Antriebsbauteil 66 längs einer zur Zugfahrzeug-Querachse ZQ parallelen Antriebstrajektorie AT beweglich geführt aufgenommen ist. Das Kraftgerät 68 umfasst bevorzugt Schraubendruckfedern 72, bevorzugt an jeder Antriebsführungsstange 70 je eine. Die Schraubendruckfedern 72, die keine äußere Energieversorgung benötigen, sind zwischen einem Querende längs der Zugfahrzeug-Querachse ZQ und dem diesem Ende näher gelegenen Ende des Antriebsbauteils 66 angeordnet.

Das Antriebsbauteil 66 kann mit dem zugfahrzeugseitigen Steckerbauteil 30 über eine mechanische Steuerung gekoppelt sein, sodass beispielsweise am Antriebsbauteil 66 ein von diesem abstehender Vorsprung 66a vorgesehen sein kann, welcher in eine Kulisse 30a am Steckerbauteil 30 eingreift. In Figur 5 ist das Antriebsbauteil 66 in seiner Anfangsstellung als eine seiner möglichen Endstellungen gezeigt, in welcher die Schraubendruckfedern 72 ihr betriebsmäßig größtes Maß an potenzieller Energie aufweisen. Dann, wenn sich das Antriebsbauteil 66 in dieser Anfangsstellung befindet, befindet sich das zugfahrzeugseitige Steckerbauteil 30 aufgrund des formschlüssigen Eingriffs von Nocken 66a und Kulisse 30a in seiner Verbindungsbereitschaftsstellung.

Ein im dargestellten Beispiel zweiarmiger Riegel 74 greift mit seinem in Figur 5 nicht erkennbaren Verriegelungsschenkel 74a (s. Fig. 7 bis 9) in eine Verriegelungsausnehmung 66b am Antriebsbauteil 66 und sichert dieses so gegen eine Verlagerung in die längs der Antriebstrajektorie in Figur 5 nach rechts versetzte Endstellung (nicht dargestellt).

Durch eine Feder 76, welche am Betätigungsschenkel 74b des Riegels 74 angreift, ist der Riegel 74 in seine Verriegelungsstellung vorgespannt, in welcher sein Verriegelungsschenkel 74a in die Verriegelungsausnehmung 66b selbsttätig einrückt, sobald diese sich über dem Verriegelungsschenkel 74a befindet.

Eine weitere Feder 78 auf der von der Ausrichtausnehmung 42 wegweisenden Seite des Ausrichtbauteils 38 spannt einen Sperrhaken 80, auf den weiter unten noch näher eingegangen wird, in seine Einführstellung vor, in der er in Figur 7 zu sehen ist. Der Riegel 74 ist ebenso um eine parallel zur Zugfahrzeug-Querachse ZQ verlaufende Riegelschwenkachse RS schwenkbar, wie der Sperrhaken 80 um eine zur Zugfahrzeug-Querrichtung ZQ parallele Sperrhakenschwenkachse SP schwenkbar ist.

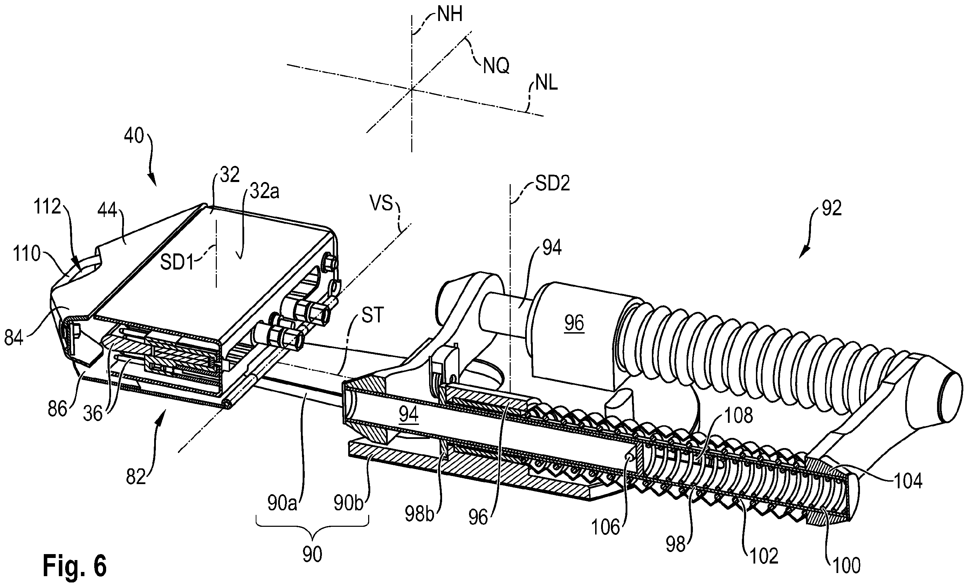

Anhand der Figur 6 unter weiterer Einbeziehung der Figuren 4 und 7 wird nachfolgend der konstruktive Aufbau des im Beispiel nachlauffahrzeugseitigen Ausrichtbauteils 40 mit dem von diesem getragenen nachlauffahrzeugseitigen Steckerbauteil 32 beschrieben werden.

Das nachlauffahrzeugseitige Steckerbauteil 32 ist an einem Aufnahmebauteil 82 um eine Verstauungsschwenkachse VS schwenkbar aufgenommen. Die Verstauungsschwenkachse VS ist in der in Figur 6 gezeigten von äußeren Kräften freien Stellung parallel zur Nachlauffahrzeug-Querachse NQ. Sie bleibt unabhängig von den möglichen Relativbewegungen des Steckerbauteils 32 und des Aufnahmebauteils 82 relativ zur Deichsel 26 parallel zum Untergrund, auf welchem das Nachlauffahrzeug aufsteht.

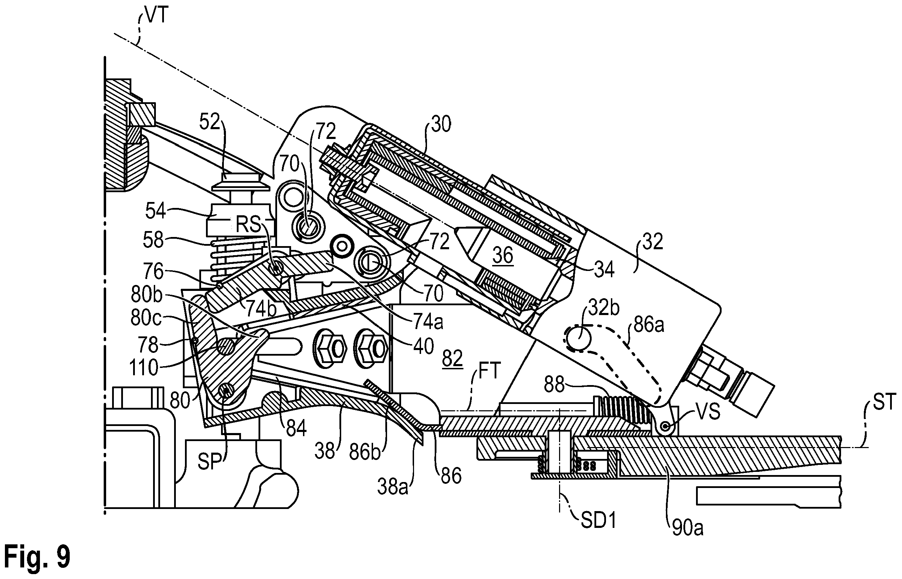

Das Steckerbauteil 32 ist um die Verstauungsschwenkachse VS schwenkbar zwischen einer in Figur 6 gezeigten Verstauungsstellung, in welcher die Steckerformation 36 des nachlauffahrzeugseitigen Steckerbauteils hinter einem die nachlauffahrzeugseitige Ausrichtformation 44 aufweisenden Verdeckungsbauteil 84 verborgen und nicht zur Herstellung einer Steckerverbindung zugänglich ist, und einer in Figur 9 gezeigten vom Untergrund weg verschwenkten Verbindungserwartungsstellung. Das Aufnahmebauteil 82 hat die Form eines Teilgehäuses, welches das Steckerbauteil 32 von wenigstens drei Seiten umgibt, nämlich von unten und zu beiden Seiten. Eine Wandung 32a des Steckerbauteils, welche in der Verstauungsstellung vom Aufstandsuntergrund des Nachlauffahrzeugs wegweist, komplettiert das Aufnahmebauteil 82 zusammen mit dem Verdeckungsbauteil 84 zu einem - abgesehen von Spaltfugen an den Bauteilgrenzen - kompakten Gehäuse.

Ein Führungsbauteil 86 ist im dargestellten Beispiel längs der Nachlauffahrzeug-Höhenachse NH zwischen dem nachlauffahrzeugseitigen Steckerbauteil 32 und dem Aufnahmebauteil 82 angeordnet und ist am Aufnahmebauteil 82 zur Bewegung ausschließlich längs einer zur Nachlauffahrzeug-Längsachse NL parallelen Führungstrajektorie FT beweglich geführt. Das Führungsbauteil 86 kann mit dem nachlauffahrzeugseitigen Steckerbauteil 32 über eine mechanische Steuerung zur Bewegungs- und Kraftübertragung gekoppelt sein, etwa indem das Führungsbauteil 86 eine Führungskulisse 86a aufweist (siehe Figuren 7 bis 9), in welche ein längs der Nachlauffahrzeug-Querachse NQ vom Steckerbauteil 32 abstehender Nocken 32b eingreift. Auf diese Weise kann durch eine Verlagerung des Führungsbauteils 86 längs der Nachlauffahrzeug-Längsachse NL das nachlauffahrzeugseitige Steckerbauteil 32 zwischen seiner Verstauungsstellung der Figuren 6 und 7 in die Verbindungserwartungsstellung von Figur 9 verstellt werden. Durch eine Schraubendruckfeder 88 kann das Führungsbauteil in seine in Figur 7 gezeigte Startstellung vorgespannt sein, wodurch aufgrund der oben geschilderten mechanischen Kopplung mittelbar das Steckerbauteil 23 in die Verstauungsstellung vorgespant ist.

In Figur 9 befindet sich das Führungsbauteil 86 dagegen in seiner Finalstellung, in welcher sich das nachlauffahrzeugseitige Steckerbauteil 32 in der Verbindungserwartungsstellung befindet.

Das Aufnahmebauteil 82 ist zusammen mit dem Verdeckungsbauteil 84, dem nachlauffahrzeugseitigen Steckerbauteil 32 und dem Führungsbauteil 36 an einem Supportbauteil 90 aufgenommen, welches im dargestellten Beispiel vorteilhaft zweiteilig ausgebildet ist und einen ersten Abschnitt 90a aufweist, welcher an einem zweiten Abschnitt 90b translatorisch relativ zu diesem beweglich geführt vorgesehen ist.

Das nachlauffahrzeugseitige Steckerbauteil 32 ist relativ zum Supportbauteil 90, insbesondere relativ zu dessen erstem Abschnitt 90a um eine erste zur Nachlauffahrzeug-Gierachse NH parallele Steckerdrehachse SD1 rotierbar. Diese Relativbeweglichkeit ist gleichzeitig eine Relativbeweglichkeit des nachlauffahrzeugseitigen Steckerbauteils 32 relativ zur Deichsel 26.

Das Supportbauteil 90, insbesondere dessen zweiter Abschnitt 90b, ist relativ zu der ihn aufnehmenden Deichsel 26 um eine ebenfalls zur Nachlauffahrzeug-Gierachse NH parallele zweite Steckerdrehachse SD2 rotierbar. Somit ist das nachlauffahrzeugseitige Steckerbauteil 32 relativ zur Deichsel 26 um zwei zueinander parallele und parallel zur Deichselkörperhöhenachse DH verlaufende Steckerdrehachsen SD1 und SD2 rotierbar.

Weiterhin ist das nachlauffahrzeugseitige Steckerbauteil 32 relativ zur Deichsel 26 um eine zu den Steckerdrehachsen SD1 und SD2 orthogonale Trajektorie ST translatorisch verlagerbar. Die Trajektorie ST der translatorischen Verlagerbarkeit des nachlauffahrzeugseitigen Steckerbauteils relativ zur Deichsel schwenkt im dargestellten Beispiel um die zweite Steckerdrehachse SD2 mit dem zweiten Abschnitt 90b des Supportbauteils 90 mit.

Die translatorische Verlagerbarkeit des ersten Abschnitts 90a des Supportbauteils 90 und damit des nachlauffahrzeugseitigen Steckerbauteils 32 relativ zum zweiten Abschnitt 90b des Supportbauteils 90 ist durch eine Führungs- und Rückstelleinrichtung 92 realisiert, welche bis auf die Verwendung eines Kugelgelenks der translatorischen Bewegungsführung des Ausrichtbauteils 38 relativ zum Fangmaul 18 entspricht, wie es in Figur 5 dargestellt und beschrieben ist.

Zwei zur gemeinsamen Bewegung mit dem ersten Abschnitt 90a des Supportbauteils 90 verbundene, parallele und in Richtung der Trajektorie ST verlaufende, im Wesentlichen identische Führungsstangen 94 sind am zweiten Abschnitt 90b des Supportbauteils 90 jeweils in einem Lagerabschnitt 96 längs der Trajektorie ST beweglich geführt. Ein topfförmiges Aufsatzbauteil 98 mit einem an dem dem Steckerbauteil 32a zugewandten Längsende vorgesehenen Radialvorsprung 98b umgibt einen Längsendabschnitt einer jeden Führungsstange 94, wobei jede Führungsstange 94 und das an ihr angeordnete Aufsatzbauteil 98 relativ zueinander längs der Trajektorie ST beweglich sind. Eine im Inneren des Aufsatzbauteils 98 zwischen dessen Längsende und dem dem Steckerbauteil 32 fernen Längsende der Führungsstange 94 aufgenommene innere Schraubendruckfeder 100 spannt die Führungsstange 94 und das Aufsatzbauteil 98 relativ zueinander im Sinne einer Ausziehbewegung der Führungsstange 94 aus dem Aufsatzbauteil 98 heraus.

Eine das Aufsatzbauteil radial außen umgebende äußere Schraubendruckfeder 102, welche einenends an einem Dom 104 welcher ortsfest am steckerbauteilfernen Längsende des Aufsatzbauteils 98 angeordnet ist, abgestützt ist und andernends am Lagerabschnitt 96 des zweiten Abschnitts 90b des Supportbauteils 90 abgestützt ist, spannt das Aufsatzbauteil 98 relativ zum zweiten Abschnitt 90b des Supportbauteils 90 im Sinne einer Bewegung des endseitigen Doms 104 vom Lagerabschnitt 96 weg. Ein zur gemeinsamen Bewegung mit der Führungsstange 94 vorgesehener Vorsprung, beispielsweise realisiert durch einen die Führungsstange 94 diametral durchsetzenden Stift 106, welcher in ein Langloch 108 am Aufsatzbauteil 98 eingreift, begrenzt die Relativbeweglichkeit von Führungsstange 94 und Aufsatzbauteil 98 relativ zueinander. Das Langloch 108 verläuft dabei in Richtung der Trajektorie ST, also in Richtung der Relativbeweglichkeit von Führungsstange 94 und Aufsatzbauteil 98.

Die innere und die äußere Schraubendruckfeder 100 bzw. 102 definieren so eine Ruhelage des ersten Abschnitts 90a relativ zum zweiten Abschnitt 90b des Supportbauteils 90, aus welcher heraus der erste Abschnitt 90a relativ zum zweiten Abschnitt 90b in beide entgegengesetzte Richtungen längs der Trajektorie ST auslenkbar ist. Einmal unter Kompression der äußeren Feder 102 ist das Steckerbauteil 32 zum Zugfahrzeug hin beweglich und ein andermal unter Kompression der inneren Feder 100 ist das Steckerbauteil 32 längs der Trajektorie ST vom Zugfahrzeug weg beweglich. Die beschriebene Vorspann- und Rückstellbaugruppe, umfassend Führungsstange 94, Aufsatzbauteil 98, Federn 100 und 102 und Dom 104 ist für beide Führungsstangen gleich aufgebaut.

Aufgrund dieser Relativbeweglichkeit des nachlauffahrzeugseitigen Steckerbauteils 32 relativ zur Deichsel rotatorisch um die beiden Steckerdrehachsen SD1 und SD2 und translatorisch längs der Trajektorie ST kann die Steckerverbindung der Steckerbauteile 30 und 32 miteinander an einem beliebigen Ort realisiert sein, unabhängig von der Lage der mit der Längsmittelachse KL des Kupplungsbolzens zusammenfallenden Abbiegeachse AA. Somit kann das zugfahrzeugseitige Steckerbauteil 30 in der zuvor beschriebenen Weise orthogonal zur Abbiegeachse AA versetzt am Fangmaul 18 angeordnet sein.

Nachfolgend wird mit Bezugnahme auf die Figuren 7 bis 9 die Herstellung eines Formschlusseingriffs zwischen den Ausrichtbauteilen 38 und 40 sowie eine Festlegung derselben aneinander nach Herstellung des Formschlusseingriffs beschrieben. In Figur 7 ist eine Situation beschrieben, wie sie während einer Annäherung des Zugfahrzeugs an das Nachlauffahrzeug in Annäherungsrichtung AN zur Herstellung einer Kupplungsverbindung mit automatisiert hergestellter Steckerverbindung besteht. Die Ausrichtbauteile 38 und 40 von Zugfahrzeug bzw. Nachlauffahrzeug sind in Längsrichtung der beiden Fahrzeuge voneinander entfernt. Aufgrund der Relativbewegung des Zugfahrzeugs relativ zum Nachlauffahrzeug nähert sich das zugfahrzeugseitige Ausrichtbauteil 38 in Richtung AN an das nachlauffahrzeugseitige Ausrichtbauteil 40 an.

Am nachlauffahrzeugseitigen Ausrichtbauteil 40 ist an dem bei Herstellung einer Kupplungsverbindung dem Zugfahrzeug zugewandten Längsende ein Sperrbügel 110 vorgesehen, welcher eine Ausnehmung 112 in der nachlauffahrzeugseitigen Ausrichtformation 44 in Nachlauffahrzeug-Querrichtung NQ überspannt.

Am Grund der zugfahrzeugseitigen Ausrichtformation 42 befindet sich der Sperrhaken 80 in der Einführstellung, in welcher der Sperrbügel 110 in ein Hakenmaul 80a des Sperrhakens 80 einführbar ist. Das Hakenmaul 80a ist zu seinen beiden Seiten beschränkt durch einen Hakenschenkel 80b und durch einen Auslöseschenkel 80c, welche über eine Hakenbasis 80d verbunden sind, die im dargestellten Beispiel durch die Schwenkachse SP des Sperrhakens 80 durchsetzt ist.

Der Hakenschenkel 80b kragt von der Hakenbasis 80d weg weniger stark aus als der Auslöseschenkel 80c, welcher an dem Betätigungsschenkel 74b des durch die Feder 76 in seine Verriegelungsstellung vorgespannten Riegels 74 anliegt.

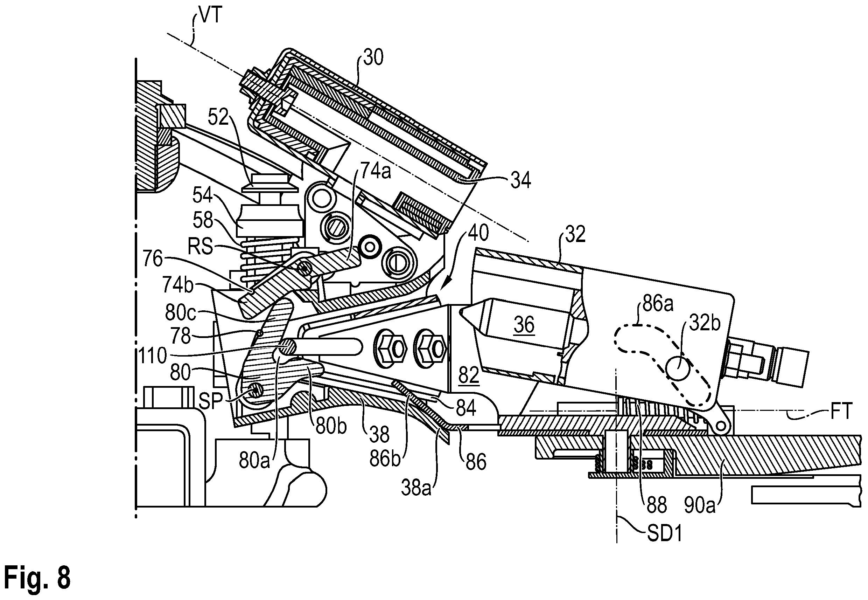

In Figur 8 ist die Annäherung des Zugfahrzeugs und damit des zugfahrzeugseitigen Kupplungsbauteils 14 an das nachlauffahrzeugseitige Kupplungsbauteil 24 soweit fortgeschritten, dass der Sperrbügel 110 am Auslöseschenkel 80c anliegt.

Ebenso liegt ein Anlageabschnitt 86b des Führungsbauteils 86 an einem Gegenanlageabschnitt 38a des zugfahrzeugseitigen Ausrichtbauteils 38 an. Der Gegenanlageabschnitt wird im dargestellten Beispiel gebildet durch eine untere Einführschräge der zugfahrzeugseitigen Ausrichtformation 42. Der Anlageeingriff des Anlageabschnitts 86b am Gegenanlageabschnitt 36a wurde bereits zu einem früheren Zeitpunkt hergestellt, als das zug- und nachlauffahrzeugseitige Kupplungsbauteil 14 bzw. 24 zwar stärker als in Figur 7, aber weniger stark als in Figur 8 gezeigt, einander angenähert waren. Durch die nach Herstellung des Anlageeingriffs des Führungsbauteils 86 mit dem zugfahrzeugseitigen Ausrichtbauteil 38 fortgesetzte Annäherungsbewegung von zug- und nachlauffahrzeugseitigen Kupplungsbauteil 14 bzw. 24 aneinander wurde das Führungsbauteil 86 relativ zum Aufnahmebauteil 82 und somit auch relativ zum nachlauffahrzeugseitigen Steckerbauteil 32 längs der Nachlauffahrzeug-Längsachse NL bewegt, sodass weiter aufgrund des Formschlusseingriffs des Nockens 32b mit der Kulisse 86a in den Seitenschenkeln des Führungsbauteils 86 eine Schwenkbewegung des Steckerbauteils 32 von der Verstauungsstellung der Figur 7 in Richtung zur Verbindungserwartungsstellung von Figur 9 begonnen hat.

Durch die in Figur 8 dargestellte Anlage des Sperrbügels 110 am Auslöseschenkel 80c des Sperrhakens 80 wird bei fortgesetzter Annäherung von zug- und nachlauffahrzeugseitigen Kupplungsbauteil 14 bzw. 24 aneinander der Sperrhaken 80 durch den Sperrbügel 10 in seine in Figur 9 gezeigte Sperrstellung verstellt. Dabei streicht die Spitze des Auslöseschenkels 80c entlang des Betätigungsschenkels 74b des Riegels 74 und verstellt den Riegel 74 in die Freigabestellung, in welcher der Verriegelungsschenkel 74a außer Eingriff mit der Verriegelungsausnehmung 66b des Antriebsbauteils 66 gelangt, sodass das Antriebsbauteil 66 getrieben von den Schraubendruckfedern 72 von seiner Startstellung in die Endstellung verlagert wird. Dadurch wird das zugfahrzeugseitige Steckerbauteil 30 längs der Verbindungstrajektorie von der in den Figuren 7 und 8 gezeigten Verbindungsbereitschaftsstellung in die in Figur 9 gezeigte Verbindungsaktivierungsstellung verstellt.

In der in Figur 9 gezeigten Sperrstellung des Sperrhakens 80 hat der Auslöseschenkel 80c den Betätigungsschenkel 74b des Riegels 74 vollständig überstrichen, sodass ein Längsende des Betätigungsschenkels 74b aufgrund der Vorspannung des Riegels 74 in dessen Verriegelungsstellung in Anlage an eine zum Nachlauffahrzeug hinweisende Flanke des Auslöseschenkels 80c gelangt und somit den Sperrhaken 80 in seiner Sperrstellung gegen eine Verlagerung aus dieser heraus in Richtung zur Einführstellung hin sperrt.

Weiterhin ist in der in Figur 9 gezeigten Stellung die Ausnehmung 112 durch den Hakenschenkel 80b durchsetzt, sodass der in der Sperrstellung des Sperrhakens 80 im Hakenmaul 80 aufgenommene Sperrbügel 110 vom Hakenschenkel 80b hintergriffen ist. Die Ausrichtbauteile 38 und 40 sind somit aneinander festgelegt und gegen ein Lösen ihres Formschlusseingriffs gesichert.

In der in Figur 9 gezeigten Stellung hat das Führungsbauteil 86 seine Finalstellung erreicht, sodass sich das nachlauffahrzeugseitige Steckerbauteil 32 in der Verbindungserwartungsstellung befindet, in welcher eine Steckerverbindung mit dem zugfahrzeugseitigen Steckerbauteil 30 durch dessen Verlagerung längs der Verbindungstrajektorie VT in die Verbindungsaktivierungsstellung einfach herstellbar ist.

Gemäß einer bevorzugten Weiterbildung der vorliegenden Erfindung werden die Steckerbauteile 30 und 32 bei hergestellter Steckerverbindung nicht gesondert aneinander positionsgesichert, insbesondere nicht aneinander verrastet und dgl. Die Steckerbauteile 30 und 32 werden schlicht einander angenähert und die jeweiligen Steckerformationen in Kontakteingrif gebracht, gegebenenfalls ineinander verschoben.

Die in Figur 9 gezeigte Relativstellung von zug- und nachlauffahrzeugseitigem Kupplungsbauteil 14 bzw. 24, in welcher der Formschlusseingriff der Ausrichtbauteile 38 und 40 gegen Trennung des Formschlusseingriffs gesichert ist, wird gemäß einer bevorzugten Weiterbildung der vorliegenden Erfindung wie folgt aufgehoben:
Wie insbesondere in Figur 4 zu erkennen ist, ist das zur Bewegung des Kupplungsbolzens aus der Zugöse 20 heraus vorgesehene Kinetrol 22 über einen Bowdenzug 120 auch mit dem Antriebsbauteil 66 verbunden. Dann, wenn das Kinetrol 22 den Kupplungsbolzen aus einer Stellung, in welcher er die Zugöse 20 des Nachlauffahrzeugbauteils durchsetzt, zur Freigabe derselben anhebt, wird auch das Antriebsbauteil 66 unter Spannung der Schraubendruckfedern 72 zurück in seine Startstellung verstellt. Eine Anlaufschräge 66c des Antriebsbauteils 66 drückt bei dieser Rückstellbewegung, bei welcher aufgrund der Zwangsführung durch den Nocken 66a und die Kulisse 30a auch das zugfahrzeugseitige Steckerbauteil 30 zurück in die Verbindungsbereitschaftsstellung verstellt wird, auf den Verriegelungsschenkel 74a des Riegels 74 und drückt diesen nach unten, sodass sich der Betätigungsschenkel 74b desselben Riegels 74 hebt. Bei dieser Hebebewegung wird der Auslöseschenkel 80c des Sperrhakens 80 freigegeben, sodass sich diese, getrieben durch die Vorspannkraft der Feder 78 zurück in Richtung Einführstellung bewegt bzw. bewegen kann. Somit kann das nachlauffahrzeugseitige Ausrichtbauteil 40 aus dem Formschlusseingriff mit dem zugfahrzeugseitigen Ausrichtbauteil 38 heraus bewegt werden und zwar in Richtung der Annäherungsbewegung AN. Bei dieser Bewegung unterstützt der dann gegen den Hakenschenkel 80b drückende Sperrbügel 110 eine Verstellung des Sperrhakens 80 zurück in die Einführstellung. Die Kupplungsbauteile 14 und 24 und können dann ohne Weiteres voneinander getrennt werden, da zwischen ihren Bauteilen keinerlei Sperr- oder Verriegelungseingriff mehr besteht.

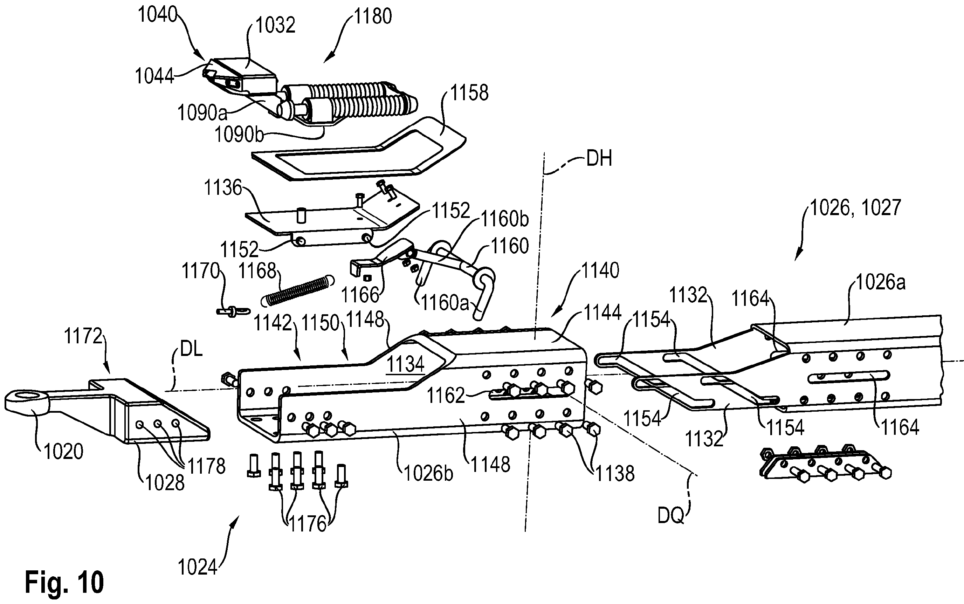

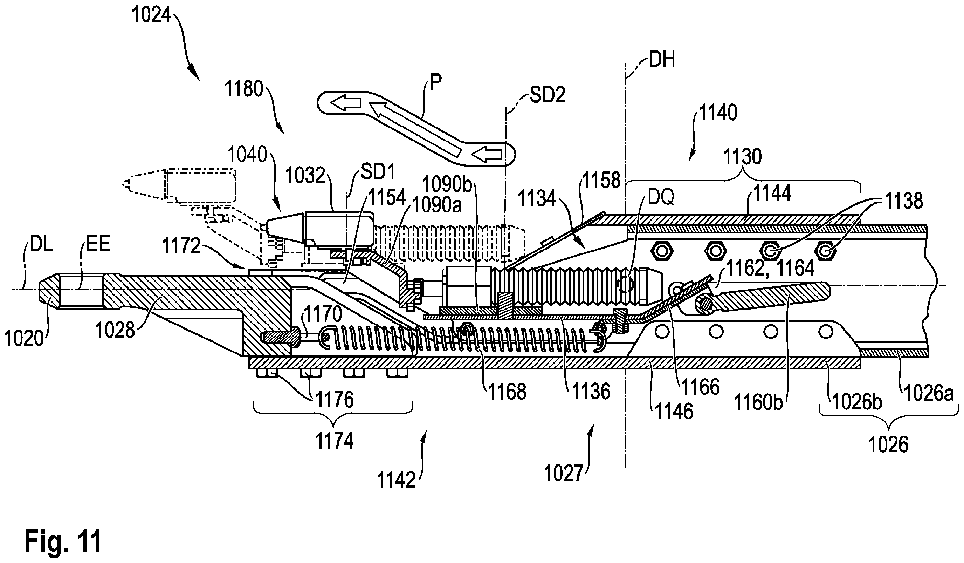

In den Figuren 10 und 11 ist eine besonders vorteilhafte Deichsel 1026 des Nachlauffahrzeugs dargestellt. Gleiche und funktionsgleiche Bauteile bzw. Bauteilabschnitte wie an der Deichsel 26 der Figuren 1 bis 9 sind in den Figuren 10 bis 11 mit gleichen Bezugszeichen versehen, jedoch erhöht um die Zahl 1000. Die Deichsel 1026 wird nachfolgend nur insofern beschrieben, als sie sich von der oben beschriebenen Deichsel 26 unterscheidet, auf deren Beschreibung ansonsten ausdrücklich verwiesen wird.

Die Deichsel 1026 weist einen Deichselkörper 1027 mit einem ersten Deichselkörper-Bauteil 1026a auf, welches sich längs der Deichselkörper-Längsachse DL von einem dem Nachlauffahrzeugkörper näher gelegenen Fahrzeug-Längsende der Deichsel 1026 weg zu einem durch die Zugöse 1020 markierten axial bezogen auf die Deichselkörper-Längsachse DL entgegengesetzten Kupplungs-Längsende der Deichsel 1026 hin. In axialer Richtung vom Fahrzeug-Längsende weg schließt sich an das erste Deichselkörper-Bauteil 1026a das zweite Deichselkörper-Bauteil 1026b des Deichselkörpers 1027 an, welches mit dem ersten Deichselkörper-Bauteil 1026a in einem Festlege-Abschnitt 1130 (siehe Figur 11) befestigt ist. In diesem Festlegeabschnitt 1130 umgibt das zweite Deichselkörper-Bauteil 1026b das erste Deichselkörper-Bauteil 1026a radial außen, bevorzugt mit sehr geringen Spaltmaßen zwischen den einander gegenüberliegenden Wandabschnitten der Deichselkörper-Bauteile 1026a und 1026b. Besonders bevorzugt liegen wenigstens Teile der einander gegenüberliegenden Wandabschnitte von erstem und zweiten Deichselkörper-Bauteil 1026a bzw. 1026b im fertig montierten Zustand aneinander an.

Das erste Deichselkörper-Bauteil 1026a weist bei Betrachtung in einer zur Deichselkörper-Längsachse DL orthogonalen Schnittebene einen rechteckigen geschlossenen Querschnitt auf. Die Ecken des rechteckigen Querschnitts sind abgerundet ausgebildet.

Längs der Deichselkörper-Längsachse DL und längs der Deichselkörper-Höhenachse DH verlaufende Seitenwände des ersten Deichselkörper-Bauteils 1026a sind als Seitenwangen 1132 axial verlängert, um diese als Führungsabschnitte zur Bewegungsführung eines in einen Innenraum 1134 der Deichsel 1026 hinein absenkbaren Deckels 1136 zu nutzen.

Im Festlegeabschnitt 1130 sind das erste und das zweite Deichselkörper-Bauteil 1026a bzw. 1026b ausschließlich durch Befestigungsmittel, hier: Schrauben-Muttern-Kombinationen 1138, mit zur Deichselkörper-Längsachse DL orthogonalem Verlauf miteinander verbunden. Die Befestigungsmittel 1138 durchsetzen sowohl das erste wie auch das zweite Deichselkörper-Bauteil 1026a bzw. 1026b in einer Richtung orthogonal zur Deichselkörper-Längsachse DL.

Das zweite Deichselkörper-Bauteil 1026b weist einen ersten Bauteilabschnitt 1140 auf, welcher bei Betrachtung in einer zur Deichselkörper-Längsachse DL orthogonalen Schnittebene ebenfalls einen geschlossenen Querschnitt aufweist, ebenso wie das erste Deichselkörper-Bauteil 1026a.

Dem Bauteilabschnitt 1140 mit geschlossenem Querschnitt axial benachbart ist ein Bauteilabschnitt 1142 des zweiten Deichselkörper-Bauteils 1026b, in welchem das zweite Deichselkörper-Bauteil 1026b einen offenen Querschnitt aufweist. Der Bauteilabschnitt 1140 mit geschlossenem Querschnitt ist dabei der näher am ersten Deichselkörper-Bauteil 1026a gelegene, der auch zum Festlegeabschnitt 1130 beiträgt, während der Bauteilabschnitt 1142 mit offenem Querschnitt dem Kupplungs-Längsende der Deichsel 1026 näher gelegen ist.

Im Bauteilabschnitt 1140 mit geschlossenem Querschnitt weist das zweite Deichselkörper-Bauteil 1140 ebenfalls einen rechteckigen geschlossenen Querschnitt auf, umfassend eine Deichselkörperdecke 1144, einen von diesem längs der Deichsel-Höhenachse DH mit Abstand angeordneten Deichselkörper-Boden 1146 und zwei längs der Deichsel-Querachse DQ mit Abstand voneinander angeordnete Deichselkörper-Seitenschenkel 1148. Die Deichselkörper-Seitenschenkel 1148 verbinden die Deichselkörper-Decke 1144 mit dem Deichselkörper-Boden 1146.

Im Deichselkörper-Abschnitt 1142 mit offenem Querschnitt weist das zweite Deichselkörper-Bauteil 1026b nur den Deichselkörper-Boden 1148 und zwei parallele davon abstehende Deichselkörper-Seitenschenkel 1148 auf. In dem Deichselkörper-Abschnitt 1142 ist demnach keine Deichselkörper-Decke 1144 vorhanden. Darüber hinaus sind die Deichselkörper-Seitenschenkel 1148 in einem von dem der Zugöse 1020 nächstgelegenen Längsende des zweiten Deichselkörper-Bauteils 1026b ausgehenden Bereich des Deichselkörper-Abschnitts 1142 mit offenem Querschnitt längs der Deichselkörper-Höhenachse DH kürzer ausgebildet als im Deichselkörper-Abschnitt 1140 mit geschlossenem Querschnitt. Somit ist in dem Deichselkörper-Abschnitt 1142 mit offenem Querschnitt eine von außen zugängliche Öffnung 1150 gebildet, durch welche hindurch der Innenbereich 1134 der Deichsel 1026 zugänglich ist.

Durch diese Öffnung 1150 können beispielsweise Gegenstände, wie etwa Bordwerkzeug und dgl., in den Innenraum 1134 der Deichsel 1026 abgelegt und in geeigneter Weise befestigt werden. Somit ist die Deichsel 1026 beispielsweise als Stauraum nutzbar.

Im vorliegenden Ausführungsbeispiel ist die Öffnung 1150 durch den zuvor bereits erwähnten Deckel 1136 verschließbar und wahlweise zum Eingriff freigebbar. Der Deckel 1136 ist in seiner Gestalt der Öffnung 1150 nachgebildet, die er verschließen soll. An seinen Seiten weist der Deckel 1136 Vorsprünge 1152 auf, welche in Kulissenführungen 1154 in den Seitenwangen 1132 ausgebildet sind, die als Axial-Verlängerungen der Deichselkörper-Seitenschenkel des ersten Deichselkörper-Bauteils 1026a gebildet sind. Der Deckel 1136 ist somit längs der Deichselkörper-Höhenachse DH sowie längs der Deichselkörper-Längsachse DL in den Innenbereich 1134 der Deichsel 1026 absenkbar und einziehbar. In Figur 11 ist der Deckel 1136 mit durchgezogenem Strich in seiner in den Deichselinnenraum 1134 eingezogenen Inaktivstellung gezeigt und ist mit strichpunktierter Linie in seiner Aktivstellung gezeigt, in welcher er die Öffnung 1150 verschließt. Der Deckel 1136 ist längs der Pfeilfolge P in Figur 11 von der Inaktivstellung in die Aktivstellung verlagerbar.

Zur Abdichtung der Öffnung 1150 in der Aktivstellung des Deckels 1136 ist an der Öffnung 1150 eine Dichtung 1158 vorgesehen, an deren zum Deichselinnenbereich 1134 hinweisender Seite der Deckel 1136 in der Aktivstellung anliegt. Die Dichtung 1158 kann beispielsweise aus einer Gummimatte oder allgemein einer Elastomermatte ausgeschnitten sein.

Zur Verstellung des Deckels 1136 zwischen der Aktivstellung und der Inaktivstellung kann dieser mit einem Handbetätigungsglied 1160 gekoppelt sein, welches im dargestellten Beispiel die Deichsel 1026 längs der Deichselkörper-Querachse DQ durchsetzt. Hierzu weisen die Deichselkörper-Seitenschenkel 1148 im Bauteilabschnitt 1140 mit geschlossenem Querschnitt in axiale Richtung bezogen auf die Deichselkörper-Längsachse DL verlaufende Langlöcher 1162 auf, welche im fertig montierten Zustand von in etwa gleichformatigen Langlöchern 1164 in den Seitenschenkeln des ersten Deichselkörper-Bauteils 1026a überlagert sind.

Das Handbetätigungsglied weist beiderseits der Deichsel 1026 je einen Handeingriffsabschnitt 1160a auf, welche von außerhalb der Deichsel 1026 durch eine Bedienperson leicht ergriffen werden können.

Das Handbetätigungsglied 1160 ist außerdem über eine Verbindungsstange 1160b gelenkig mit einem Verbindungselement 1166 verbunden, welches einerseits, wie in Figur 11 erkennbar ist, mit dem Deckel 1136 verbunden ist, und welches andererseits als Federwiderlager für eine Vorspann-Schraubendruckfeder 1168 dient, die den Deckel 1136 in die Aktivstellung vorspannt. In den Figuren 10 und 11 nicht dargestellte Festlegemittel können vorgesehen sein, um den Deckel 1136 gegen die Vorspannkraft der Feder 1168 in der Inaktivstellung vorübergehend festzulegen.

Wie weiter in Figur 11 zu erkennen ist, ist das entgegengesetzte Federwiderlager der Schraubendruckfeder 1168 am Zugösen-Bauteil 1028 festgelegt, beispielsweise durch eine in dieses eingedrehte Ringschraube 1170.

Das Zugösen-Bauteil 1028 ist in seiner Gestalt und in seiner Befestigung am Deichselkörper 1027, genauer am zweiten Deichselkörper-Bauteil 1026b, ebenfalls bemerkenswert:
Das Zuösen-Bauteil 1028 weist einerseits an einem Längsende die Zugöse 1020 auf und weist an seinem anderen Längsende eine Befestigungsformation 1172 auf.

Das Zugösen-Bauteil 1028, insbesondere seine Befestigungsformation 1172, ist im fertig montierten Zustand von nur drei Seiten von der Deichsel 1026, genauer vom zweiten Deichselkörper-Bauteil 1026b, noch genauer von dem Deichselkörper-Abschnitt 1142 mit offenem Querschnitt, bezogen auf die Deichselkörper-Längsachse DL radial außen umgeben. Dies bedeutet, die Befestigungsformation 1172 des Zugösen-Bauteils 1028 liegt auf dem Deichselkörper-Boden 1148 der Deichsel 1026, genauer des zweiten Deichselkörper-Bauteils 1026b, auf und ist längs der Deichselkörper-Querachse DQ zu beiden Seiten von den Deichselkörper-Seitenschenkeln 1148 eingefasst, die in dem betreffenden Überlappungsabschnitt mit der Befestigungsformation 1172 des Zugösen-Bauteils 1028 in Deichselkörper-Höhenrichtung verglichen mit dem Abschnitt 1140 mit geschlossenem Querschnitt verkürzt ausgebildet sind.

Insbesondere ist das Zugösen-Bauteil 1028 axial in einer Auszugsrichtung aus dem Deichselkörper 1027, also zu einem vor der Deichsel 1026 befindlichen Zugfahrzeug hin, nicht formschlüssig durch einen Deichselkörper-Abschnitt umgriffen oder sonst wie hintergriffen.

Wie bereits die beiden Deichselkörper-Bauteile 1026b und 1026a ist auch das Zugösen-Bauteil 1028 in dem mit ihm überlappenden Deichselkörper-Befestigungsabschnitt 1174 des zweiten Deichselkörper-Bauteils 1026b ausschließlich mit Befestigungsmitteln am zweiten Deichselkörper-Bauteil 1026b befestigt, welche das zweite Deichselkörper-Bauteil 1026b in einer Richtung orthogonal zur Deichselkörper-Längsachse DL durchsetzen und die Befestigungsformation 1172 des Zugösen-Bauteils 1028 entweder ebenfalls orthogonal zur Deichselkörper-Längsachse DL durchsetzen oder in dieser Richtung in die Befestigungsformation einragen. Im dargestellten Beispiel sind die Befestigungsmittel 1176 in Form von Schrauben in Sacklöcher 1178 in der Befestigungsformation 1172 des Zugösen-Bauteils 1028 eingedreht. Die Sacklöcher 1178 sind hierzu mit einem Innengewinde versehen. Die Befestigungsformation 1172 ist im dargestellten Beispiel U-förmig ausgebildet, wobei die beiden Seitenschenkel der Befestigungsformation 1172 längs der Deichselkörper-Längsachse DL von der die Seitenschenkel verbindenden Basis der Befestigungsformation 1172 abstehen. mit der Basis ist die Zugöse 1020 vorzugsweise einstückig materialschlüssig verbunden.

Die Durchgangslöcher für Schrauben sowie die Durchgangslanglöcher 1162 und 1164 in den jeweiligen Deichselkörper-Bauteilen 1026a und 1026b sind geringfügige Durchsetzungen dieser Bauteile und sollen nichts an der Beurteilung des sie tragenden Abschnitts als einem Abschnitt mit geschlossenem Querschnitt ändern.

Der Deckel 1136 kann nicht nur die Öffnung 1150 verschließen, sondern kann außerdem eine Funktionsbaugruppe tragen, wie etwa die oben ausführlich beschriebene Baugruppe 1180 zur automatisierten Herstellung einer Energie oder/und Information übertragenden Verbindung mit einem an die Deichsel 1026 angekuppelten Zugfahrzeug.

In Figur 11 ist die Funktionsbaugruppe 1180 mit durchgezogener Linie in ihrer Nicht-Gebrauchsstellung, also mit dem Deckel 1136 in der Inaktivstellung, dargestellt. In vorteilhafter Weise ist die Funktionsbaugruppe 1180, die in der Aktivstellung des Deckels 1136 nahe an das zugfahrzeugseitige Kupplungsbauteil herangeführt ist, mit dem die Zugöse 1020 kuppelbar ist, in der Inaktivstellung des Deckels 1136 innerhalb der Einhüllenden des zweiten Deichselkörper-Bauteils 1026b aufgenommen, welche man erhält, wenn man dessen Abschnitt 1140 mit geschlossenem Querschnitt über die ganze axiale Länge des zweiten Deichselkörper-Bauteils 1026b fortgesetzt denkt. Durch die so erhaltene geringe Auskragabmessung der Funktionsbaugruppe 1180 in ihrer Nicht-Gebrauchsstellung ist deren Beschädigungsrisiko bei Nichtgebrauch erheblich reduziert. Teile der Funktionsbaugruppe 1180 sind in deren Nicht-Gebrauchsstellung sogar im Inneren 1134 der Deichsel 1026 aufgenommen und ist allseits von einer Deichselwandung des Abschnitts 1140 mit geschlossenem Querschnitt umgeben.

## Patentansprüche

1. Kupplungsvorrichtung (10) zur vorübergehenden Verbindung eines Zugfahrzeugs (12) mit einem Nachlauffahrzeug zur Bildung eines Fahrzeugzuges, wobei die Kupplungsvorrichtung (10) aufweist:
- ein zugfahrzeugseitiges Kupplungsbauteil (14) mit einem Kupplungsbolzen als einem zugfahrzeugseitigen Kupplungsglied,
- ein nachlauffahrzeugseitiges Kupplungsbauteil (24) mit einer vom Kupplungsbolzen durchsetzbaren Zugöse (20) als einem nachlauffahrzeugseitigen Kupplungsglied, wobei das zug- und das nachlauffahrzeugseitige Kupplungsbauteil (14, 24) zur Bildung einer vorübergehenden Kupplungsverbindung miteinander lösbar kuppelbar sind, wobei die Kupplungsverbindung zur Übertragung einer ein Nachlaufen des Nachlauffahrzeugs im Fahrzeugzug begründenden Zugkraft ausgebildet ist,
- ein zugfahrzeugseitiges Steckerbauteil (30) mit wenigstens einer Steckerformation (34) als Schnittstelle einer zugfahrzeugseitigen Versorgungsleitung zur Übertragung von Energie oder/und Information,
- ein nachlauffahrzeugseitiges Steckerbauteil (32) mit wenigstens einer Steckerformation (36) als Schnittstelle einer nachlauffahrzeugseitigen Versorgungsleitung zur Übertragung von Energie oder/und Information, wobei das zug- und das nachlauffahrzeugseitige Steckerbauteil (30, 32) zur Bildung einer vorübergehenden Energie oder/und Information übertragenden Steckerverbindung miteinander lösbar verbindbar sind,
- ein gesondert vom zugfahrzeugseitigen Kupplungsbauteil (14) ausgebildetes und an diesem angeordnetes zugfahrzeugseitiges Ausrichtbauteil (38), welches das zugfahrzeugseitige Steckerbauteil (30) trägt,
- ein gesondert vom nachlauffahrzeugseitigen Kupplungsbauteil (24) ausgebildetes und an diesem angeordnetes nachlauffahrzeugseitiges Ausrichtbauteil (40), welches das nachlauffahrzeugseitige Steckerbauteil (32) trägt,
wobei wenigstens ein Ausrichtbauteil aus zug- und nachlauffahrzeugseitigem Ausrichtbauteil (38, 40) eine Ausrichtformation (42, 44) aufweist und relativ zu dem es tragenden Kupplungsbauteil (14 oder 24) beweglich ist, so dass die Ausrichtformation (42 oder 44) des einen Ausrichtbauteils (38 oder 40) zur steckerverbindungsvorbereitenden Ausrichtung der Steckerbauteile (30, 32) zueinander in Formschlusseingriff mit einer Ausrichtformation (44 oder 42) des jeweils anderen Ausrichtbauteils (40 oder 38) bringbar ist,
wobei wenigstens ein Steckerbauteil (30, 32) aus zug- und nachlauffahrzeugseitigem Steckerbauteil (30, 32) relativ zu dem es tragenden Ausrichtbauteil (38, 40) verlagerbar ist, und
wobei ein Steckerbauteil (30, 32) aus zug- und nachlauffahrzeugseitigem Steckerbauteil (30, 32) relativ zu dem es tragenden Ausrichtbauteil (38, 40) zwischen einer zurückgezogenen Verbindungsbereitschaftsstellung und einer vorgeschobenen Verbindungsaktivierungsstellung verlagerbar ist, **dadurch gekennzeichnet, dass** das Steckerbauteil (30, 32) längs einer Verbindungstrajektorie (VT) zwischen der Verbindungsbereitschaftsstellung und der Verbindungsaktivierungsstellung verlagerbar ist, welche - bei Betrachtung eines Bezugszustands mit auf einem gemeinsamen ebenen horizontalen Untergrund (U) stehenden Fahrzeugen: Zugfahrzeug (12) und Nachlauffahrzeug, welche mit komplanaren zum Untergrund (U) orthogonalen Fahrzeuglängsmittelebenen in Fahrzeuglängsrichtung (ZL, NL) aufeinander folgen, - von einer Kupplungstrajektorie (BL) verschieden ist, längs welcher das zug- und das nachlauffahrzeugseitige Kupplungsbauteil (14, 24) zur Herstellung der Kupplungsverbindung aneinander annäherbar oder zur Trennung derselben voneinander entfernbar sind.

2. Kupplungsvorrichtung (10) nach Anspruch 1,
**dadurch gekennzeichnet, dass** jedes der beiden Ausrichtbauteile (38, 40) relativ zu dem es tragenden Kupplungsbauteil (14, 24) beweglich an diesem angeordnet ist.

3. Kupplungsvorrichtung (10) nach Anspruch 1 oder 2,
**dadurch gekennzeichnet, dass** jedes der beiden Steckerbauteile (30, 32) relativ zu dem es tragenden Ausrichtbauteil (38, 40) verlagerbar an diesem vorgesehen ist.

4. Kupplungsvorrichtung (10) nach einem der vorhergehenden Ansprüche,
**dadurch gekennzeichnet, dass** die Verbindungstrajektorie (VT) und die Kupplungstrajektorie (BL) einen Winkel miteinander einschließen.

5. Kupplungsvorrichtung (10) nach Anspruch 4,
**dadurch gekennzeichnet, dass** die Verbindungstrajektorie (VT) und die Kupplungstrajektorie (BL) in einer gemeinsamen Ebene liegen.

6. Kupplungsvorrichtung (10) nach Anspruch 5,
**dadurch gekennzeichnet, dass** die Verbindungstrajektorie (VT) und die Kupplungstrajektorie (BL) in einer mit der Längsmittelebene des das Steckerbauteil (30, 32) tragenden Fahrzeugs komplanaren Ebene liegen.

7. Kupplungsvorrichtung (10) nach einem der vorhergehenden Ansprüche,
**dadurch gekennzeichnet, dass** das Steckerbauteil (30, 32) das zugfahrzeugseitige Steckerbauteil (30) ist und über dem zugfahrzeugseitigen Kupplungsbauteil (14) angeordnet ist.

8. Kupplungsvorrichtung (10) nach einem der vorhergehenden Ansprüche,
**dadurch gekennzeichnet, dass** das Steckerbauteil (30) an einem Tragbauteil (62) beweglich geführt ist, wobei an einem Bauteil aus Steckerbauteil (30) und Tragbauteil (62) ein Kraftgerät (68) angeordnet ist, welches dazu ausgebildet und vorgesehen ist, das Steckerbauteil (30) in wenigstens eine Richtung zur Bewegung zwischen der Verbindungsbereitschaftsstellung und der Verbindungsaktivierungsstellung anzutreiben.

9. Kupplungsvorrichtung (10) nach Anspruch 8,
**dadurch gekennzeichnet, dass** das Kraftgerät (68) ein bewegbar am Tragbauteil (62) geführtes Antriebsbauteil (66) umfasst, welches zur Bewegungsübertragung mit dem Steckerbauteil (30) gekoppelt ist, wobei das Antriebsbauteil (66) längs einer von der Verbindungstrajektorie (VT) des Steckerbauteils (30) verschiedenen Antriebstrajektorie (AT) zwischen einer Anfangsstellung und einer Endstellung bewegbar ist.

10. Kupplungsvorrichtung (10) nach Anspruch 9,
**dadurch gekennzeichnet, dass** das Antriebsbauteil (66) wenigstens in der Anfangsstellung gegen eine Bewegung zur Endstellung hin verriegelbar ist.

11. Kupplungsvorrichtung (10) nach Anspruch 10,
**dadurch gekennzeichnet, dass** ein Riegel (74) vorgesehen ist, welcher verstellbar ist zwischen einer Verriegelungsstellung, in der er das Antriebsbauteil (66) in der Anfangsstellung gegen eine Bewegung zur Endstellung hin verriegelt, und einer Freigabestellung, in der er das Antriebsbauteil (66) zur Bewegung zur Endstellung hin freigibt.

12. Kupplungsvorrichtung (10) nach einem der Ansprüche 8 bis 11,
**dadurch gekennzeichnet, dass** das Kraftgerät (68) eine Feder (72), insbesondere Druckfeder (72), umfasst.

13. Kupplungsvorrichtung (10) nach Anspruch 12, unter Einbeziehung des Anspruchs 9,
**dadurch gekennzeichnet, dass** die Feder (72) mit dem Antriebsbauteil (66) zusammenwirkt.

14. Kupplungsvorrichtung (10) nach einem der Ansprüche 8 bis 13,
**dadurch gekennzeichnet, dass** das Antriebsbauteil (66) mittelbar oder unmittelbar derart mit dem es tragenden Kupplungsbauteil (14) gekoppelt ist, dass eine Lösebewegung des Kupplungsbolzens des Kupplungsbauteils (14) zur Aufhebung der Kupplungsverbindung mit der Zugöse (20) des jeweils anderen Kupplungsbauteils (24) eine Bewegung des Antriebsbauteils (66) in die Anfangsstellung bewirkt.

## Claims

1. A hitching apparatus (10) for temporary connection of a towing vehicle (12) to a towed vehicle (12) in order to constitute a vehicle combination, the hitching apparatus (10) comprising:
- a towing vehicle-side hitch component (14) with a hitch bolt as a towing vehicle-side hitch member;
- a towed vehicle-side hitch component (24) with a towing eye, through which the hitch bolt can pass, as a towed vehicle-side hitch member, the towing vehicle-side and towed vehicle-side components (14, 24) being releasably hitchable to one another in order to constitute a temporary hitched connection, the hitched connection being embodied to transfer a towing force on which towing of the towed vehicle in the vehicle combination is based;
- a towing vehicle-side insertion connector component (30) having at least one insertion connector configuration (34) as an interface of a towing vehicle-side supply lead for transferring energy and/or information;
- a towed vehicle-side insertion connector component (32) having at least one insertion connector configuration (36) as an interface of a towed vehicle-side supply lead for transferring energy and/or information, the towing vehicle-side and towed vehicle-side insertion connector components (30, 32) being releasably connectable to one another in order to constitute a temporary energy- and/or information-transferring insertion connection;
- a towing vehicle-side alignment component (38), embodied separately from the towing vehicle-side hitch component (14) and arranged thereon, which carries the towing vehicle-side insertion connector component (30);
- a towed vehicle-side alignment component (40), embodied separately from the towed vehicle-side hitch component (24) and arranged thereon, which carries the towed vehicle-side insertion connector component (32),
at least one alignment component from among the towing vehicle-side and towed vehicle-side alignment components (38, 40) comprising an alignment configuration (42, 44) and being movable relative to the hitch component (14 or 24) carrying it, so that the alignment configuration (42 or 44) of the one alignment component (38 or 40) is conveyable, for mutual insertion connection-preparing alignment of the insertion connector components (30, 32), into positive engagement with an alignment configuration (44 or 42) of the respective other alignment component (40 or 38),
wherein at least one insertion connector component (30, 32) from among the towing vehicle-side and towed vehicle-side insertion connector components (30, 32) is displaceable relative to the alignment component (38, 40) carrying it, and
wherein one insertion connector component (30, 32) from among the towing vehicle-side and towed vehicle-side insertion connector components (30, 32) is displaceable, relative to the alignment component (38, 40) carrying it, between a retracted connection readiness position and an advanced connection activation position,
**characterized in that** the insertion connector component (30, 32) is displaceable between the connection readiness position and the connection activation position along a connecting trajectory (VT) that - in consideration of a reference state with vehicles (towing vehicle (12) and towed vehicle) that are standing on a common flat horizontal substrate (U) and follow one another in a longitudinal vehicle direction (ZL, NL) with coplanar longitudinal vehicle center planes orthogonal to the substrate (U) - is different from a hitching trajectory (BL) along which the towing vehicle-side and towed vehicle-side hitch components (14, 24) can be caused to approach one another in order to establish the hitched connection or to move away from one another to undo it.

2. The hitching apparatus (10) according to Claim 1,
**characterized in that** each of the two alignment components (38, 40) is arranged, relative to the hitch component (14, 24) carrying it, movably thereon.

3. The hitching apparatus (10) according to Claim 1 or 2,
**characterized in that** each of the two insertion connector components (30, 32) is provided, relative to the alignment component (38, 40) carrying it, displaceably thereon.

4. The hitching apparatus (10) according to one of the preceding claims,
**characterized in that** the connecting trajectory (VT) and the hitching trajectory (BL) enclose an angle with one another.

5. The hitching apparatus (10) according to Claim 4,
**characterized in that** the connecting trajectory (VT) and the hitching trajectory (BL) lie in one common plane.

6. The hitching apparatus (10) according to Claim 5,
**characterized in that** the connecting trajectory (VT) and the hitching trajectory (BL) lie in a plane coplanar with the longitudinal center plane of the vehicle carrying the insertion connector component (30, 32).

7. The hitching apparatus (10) according to one of the preceding claims,
**characterized in that** the insertion connector component (30, 32) is the towing vehicle-side insertion connector component (30) and is arranged above the towing vehicle-side hitch component (14).

8. The hitching apparatus (10) according to one of the preceding claims,
**characterized in that** the insertion connector component (30) is guided movably on a carrying component (62), a force device (68) being arranged on one component from among the insertion connector component (30) and carrying component (62) and being embodied and provided to drive the insertion connector component (30) in at least one direction so as to move between the connection readiness position and the connection activation position.

9. The hitching apparatus (10) according to Claim 8,
**characterized in that** the force device (68) encompasses a drive component (66), guided movably on the carrying component (62), which is coupled for motion transfer to the insertion connector component (30), the drive component (66) being movable between an initial position and an end position along a drive trajectory (AT) that is different from the connecting trajectory (VT) of the insertion connector component (30).

10. The hitching apparatus (10) according to Claim 9,
**characterized in that** the drive component (66) is latchable at least in the initial position against motion toward the end position.

11. The hitching apparatus (10) according to Claim 10,
**characterized in that** a latching bar (74), which is shiftable between a latched position in which it latches the drive component (66) in the initial position against motion toward the end position and a release position in which it releases the drive component (66) to move toward the end position, is provided.

12. The hitching apparatus (10) according to one of Claims 8 to 11,
**characterized in that** the force device (68) encompasses a spring (72), in particular a compression spring (72).

13. The hitching apparatus (10) according to Claim 12, incorporating Claim 9,
**characterized in that** the spring (72) interacts with the drive component (66).

14. The hitching apparatus (10) according to one of Claims 8 to 13,
**characterized in that** the drive component (66) is indirectly or directly coupled to the hitch component (14) carrying it, in such a way that a releasing motion of the hitch bolt of the hitch component (14) to undo the hitched connection to the towing eye (20) of the respective other hitch component (24) brings about a motion of the drive component (66) into the initial position.

## Revendications

1. Dispositif d'accouplement (10) pour relier temporairement un véhicule tracteur (12) à un véhicule tracté afin de former un train de véhicules, le dispositif d'accouplement (10) comprenant :
- un composant d'accouplement côté véhicule tracteur (14) avec un boulon d'accouplement comme membre d'accouplement côté véhicule tracteur,
- un composant d'accouplement côté véhicule tracté (24) avec un œillet d'accouplement (20) pouvant être traversé par le boulon d'accouplement comme membre d'accouplement côté véhicule tracté, dans lequel le composant d'accouplement côté véhicule tracteur et le composant d'accouplement côté véhicule tracté (14, 24) peuvent être accouplés de manière amovible l'un à l'autre pour former une connexion d'accouplement temporaire, dans lequel la connexion d'accouplement est adaptée pour transmettre une force de traction qui fait que le véhicule tracté suit le train de véhicules,
- un composant de connecteur côté véhicule tracteur (30) avec au moins une formation de connecteur (34) comme interface d'une ligne d'alimentation côté véhicule tracteur pour la transmission d'énergie et/ou d'informations,
- un composant de connecteur (32) côté véhicule tracté avec au moins une formation de connecteur (36) comme interface d'une ligne d'alimentation côté véhicule tracté pour la transmission d'énergie et/ou d'informations, dans lequel les composants de connecteur côté véhicule tracteur et côté véhicule tracté (30, 32) peuvent être reliés entre eux de manière amovible pour former une connexion de connecteur temporaire côté véhicule tracté, transmettant de l'énergie ou/et des informations,
- un composant d'alignement côté véhicule tracteur (38) qui est formé séparément du composant d'accouplement côté véhicule tracteur (14) et est disposé sur celle-ci et qui porte le composant de connecteur côté véhicule tracteur (30),
- un composant d'alignement côté véhicule tracté (40), qui est formé séparément du composant d'accouplement côté véhicule tracté (24) et est disposé sur celle-ci et qui porte le composant de connecteur côté véhicule tracté (32),
dans lequel au moins un composant d'alignement parmi les composants d'alignement côté véhicule tracteur et côté véhicule tracté (38, 40) comprend une formation d'alignement (42, 44) et est mobile par rapport au composant d'accouplement (14 ou 24) qui le porte, de sorte que la formation d'alignement (42 ou 44) de l'un des composants d'alignement (38 ou 40) peut être mise en prise avec une formation d'alignement (44 ou 42) de l'autre composant d'alignement respectif (40 ou 38) pour l'alignement des composants de connecteur (30, 32) l'un par rapport à l'autre en vue d'une connexion par enfichage,
dans lequel au moins un composant de connecteur (30, 32) parmi les composants de connecteur côté véhicule tracteur et côté véhicule tracté (30, 32) peut être déplacé par rapport au composant d'alignement (38, 40) qui le porte, et
dans lequel au moins un composant de connecteur (30, 32) parmi les composants de connecteur côté véhicule tracteur et côté véhicule tracté (30, 32) peut être déplacé par rapport au composant d'alignement (38, 40) qui le porte entre une position de préparation de connexion rétractée et une position d'activation de connexion avancée,
**caractérisé en ce que** le composant de connecteur (30, 32) est déplaçable le long d'une trajectoire de connexion (VT) entre la position de préparation de connexion et la position d'activation de connexion, qui - lorsqu'on considère un état de référence avec des véhicules se trouvant sur une base horizontale plate commune (U): véhicule tracteur (12) et véhicule tracté, qui se suivent dans la direction longitudinale du véhicule (ZL, NL) avec des plans médians longitudinaux coplanaires du véhicule orthogonaux au sol (U), - est différente d'une trajectoire d'accouplement (BL) le long de laquelle les composants d'accouplement côté véhicule tracteur et côté véhicule tracté (14, 24) peuvent être rapprochés l'un de l'autre pour établir la connexion d'accouplement ou peuvent être éloignés pour la séparer.

2. Dispositif d'accouplement (10) selon la revendication 1,
**caractérisé en ce que** chacun des deux composants d'alignement (38, 40) est disposé sur le composant d'accouplement (14, 24) qui le porte de manière à être mobile par rapport à ce dernier.

3. Dispositif d'accouplement (10) selon la revendication 1 ou 2,
**caractérisé en ce que** chacun des deux composants de connecteur (30, 32) est prévu sur le composant d'alignement (38, 40) qui le porte de manière à pouvoir être déplacé par rapport à ce dernier.

4. Dispositif d'accouplement (10) selon l'une des revendications précédentes,
**caractérisé en ce que** la trajectoire de connexion (VT) et la trajectoire d'accouplement (BL) forment un angle entre elles.

5. Dispositif d'accouplement (10) selon la revendication 4,
**caractérisé en ce que** la trajectoire de connexion (VT) et la trajectoire d'accouplement (BL) se trouvent dans un plan commun.

6. Dispositif d'accouplement (10) selon la revendication 5,
**caractérisé en ce que** la trajectoire de connexion (VT) et la trajectoire d'accouplement (BL) se trouvent dans un plan qui est coplanaire avec le plan central longitudinal du véhicule portant le composant de connecteur (30, 32).

7. Dispositif d'accouplement (10) selon l'une des revendications précédentes,
**caractérisé en ce que** le composant de connecteur (30, 32) est le composant de connecteur côté véhicule tracteur (30) et est disposée au-dessus du composant d'accouplement côté véhicule tracteur (14).

8. Dispositif d'accouplement (10) selon l'une des revendications précédentes,
**caractérisé en ce que** le composant de connecteur (30) est guidée de manière mobile sur un composant de support (62), dans lequel un dispositif de force (68) est disposé sur un composant parmi le composant de connecteur (30) et le composant de support (62), lequel dispositif de force (68) est adapté et prévu pour entraîner le composant de connecteur (30) dans au moins une direction pour un mouvement entre la position de préparation de connexion et la position d'activation de connexion.

9. Dispositif d'accouplement (10) selon la revendication 8,
**caractérisé en ce que** le dispositif de force (68) comprend un composant d'entraînement (66) qui est guidé de manière mobile sur le composant de support (62) et qui est accouplé au composant de connecteur (30) pour la transmission du mouvement, dans lequel le composant d'entraînement (66) est mobile entre une position initiale et une position finale le long d'une trajectoire d'entraînement (AT) différente de la trajectoire de connexion (VT) du composant de connecteur (30).

10. Dispositif d'accouplement (10) selon la revendication 9,
**caractérisé en ce que** le composant d'entraînement (66) peut être bloqué au moins dans la position initiale contre tout mouvement vers la position finale.

11. Dispositif d'accouplement (10) selon la revendication 10,
**caractérisé en ce qu'**il est prévu un verrou (74) qui est réglable entre une position de verrouillage, dans laquelle il bloque le composant d'entraînement (66) dans la position initiale contre un mouvement vers la position finale, et une position de libération, dans laquelle il libère le composant d'entraînement (66) pour un mouvement vers la position finale.

12. Dispositif d'accouplement (10) selon l'une des revendications 8 à 11,
**caractérisé en ce que** le dispositif de force (68) comprend un ressort (72), en particulier un ressort de compression (72).

13. Dispositif d'accouplement (10) selon la revendication 12, y compris la revendication 9, **caractérisé en ce que** le ressort (72) coopère avec le composant d'entraînement (66).

14. Dispositif d'accouplement (10) selon l'une des revendications 8 à 13,
**caractérisé en ce que** le composant d'entraînement (66) est accouplée directement ou indirectement au composant d'accouplement (14) qui la porte de telle sorte qu'un mouvement de libération du boulon d'accouplement du composant d'accouplement (14) pour libérer la connexion d'accouplement avec l'anneau de timon (20) de l'autre composant d'accouplement (24) respectif provoque un déplacement du composant d'entraînement (66) vers la position initiale.
